# EUROPEAN PATENT APPLICATION

(11) **EP 4 564 999 A1**
(43) Date of publication of application: **04.06.2025**
(21) Application number: 23856446.2
(22) Date of filing: 07.08.2023
(51) Int. Cl.: H04W 76/28

(54) **COMMUNICATION METHOD AND APPARATUS**

(30) Priority: 24.08.2022 CN 202211020641; 30.09.2022 CN 202211216354
(71) Applicant: Huawei Technologies Co., Ltd., Shenzhen, Guangdong 518129 (CN)
(72) Inventor: ZHANG, Yanqing, Shenzhen, Guangdong 518129 (CN); XUE, Yifan, Shenzhen, Guangdong 518129 (CN); LI, Xueru, Shenzhen, Guangdong 518129 (CN); CHEN, Erkai, 80992 Munich (DE); MI, Xiang, Shenzhen, Guangdong 518129 (CN)
(74) Representative: Thun, Clemens
(86) International application number: PCT/CN2023/111400
(87) International publication number: WO 2024/041356

(57) **Abstract**

This application provides an uplink transmission method, applied to a terminal device for which C-DRX is configured. The method includes: obtaining a grant from a network device, where the grant indicates the terminal device to respectively transmit n PUSCHs in n uplink time units. After transmitting a first PUSCH in any one or more of a 1^{st} uplink time unit to an (n-m-1)^{th} uplink time unit, the terminal device does not start a first drx-HARQ-RTT-TimerUL corresponding to the first PUSCH. The n uplink time units include the 1^{st} uplink time unit and the (n-m-1)^{th} uplink time unit, and m is a non-negative integer less than n-1. The n PUSCHs include the first PUSCH. An uplink time unit with a higher serial number in the n uplink time units is later. In this application, power consumption of the terminal device can be further reduced.

## Description

This application claims priority to Chinese Patent Application No. 202211020641.4, filed with the China National Intellectual Property Administration on August 24, 2022 and entitled "UPLINK TRANSMISSION METHOD, TERMINAL DEVICE, AND NETWORK DEVICE".

This application claims priority to Chinese Patent Application No. 202211216354.0, filed with the China National Intellectual Property Administration on September 30, 2022 and entitled "UPLINK TRANSMISSION METHOD, TERMINAL DEVICE, AND NETWORK DEVICE". Both of the two claimed Chinese patent applications are incorporated herein by reference in their entireties.

### TECHNICAL FIELD

This application relates to the communication field, and in particular, to an uplink transmission method, a terminal device, and a network device.

### BACKGROUND

During transmission of a periodic signal through mobile communication such as 5th generation (5th generation, 5G) mobile communication, a terminal device usually uses a connected mode discontinuous reception (Connected mode Discontinuous Reception, C-DRX) technology to reduce power consumption of the terminal device. Although this reduces the power consumption of the terminal device to some extent, when the terminal device runs an extended reality (Extended Reality, XR) service, a cloud game service, and the like, the power consumption is still high. Therefore, the power consumption needs to be further reduced. XR services mainly include services such as virtual reality (Virtual Reality, VR), augmented reality (Augmented reality, AR), and mixed reality (Mixed Reality, MR). In addition, when the power consumption of the terminal device is further reduced for the XR service, the cloud game service, and the like, for another service, the terminal device further needs to be compatible with an existing control mechanism.

### SUMMARY

Therefore, how to further reduce power consumption of a terminal device and how the terminal device to be compatible with an existing control mechanism when the power consumption of the terminal device is further reduced become technical problems to be resolved in this application. To resolve the foregoing technical problems, this application provides an uplink transmission method, a terminal device, and a network device. In technical solutions provided in this application, for some services, power consumption can be further reduced, a service life can be increased, and user experience can be improved. In addition, for another service, the terminal device is further compatible with the existing control mechanism.

According to a first aspect, an uplink transmission method is provided. The method is applied to a terminal device, and connected mode discontinuous reception C-DRX is configured for the terminal device. The method includes: obtaining a grant from a network device, where the grant indicates the terminal device to respectively transmit n physical uplink shared channels PUSCHs in n uplink time units. After transmitting a first PUSCH in any one or more of a 1^{st} uplink time unit to an (n-m-1)^{th} uplink time unit, the terminal device does not start a first hybrid automatic repeat request round trip time uplink timer drx-HARQ-RTT-TimerUL. The n uplink time units include the 1^{st} uplink time unit and the (n-m-1)^{th} uplink time unit, and m is a non-negative integer less than n-1. The first drx-HARQ-RTT-TimerUL corresponds to the first PUSCH. An uplink time unit with a higher serial number in the n uplink time units is later. The n PUSCHs include the first PUSCH.

Because the terminal device does not start the first drx-HARQ-RTT-TimerUL after transmitting the first PUSCH in any one or more of the 1^{st} uplink time unit to the (n-m-1)^{th} uplink time unit, power consumption of the terminal device can be further reduced.

In the first aspect, the method includes: The first drx-HARQ-RTT-TimerUL is a drx-HARQ-RTT-TimerUL of a hybrid automatic repeat request HARQ process corresponding to the first PUSCH.

In the first aspect and any implementation of the first aspect, the method includes: The terminal device transmits a second PUSCH in an i^{th} uplink time unit in an (n-m)^{th} uplink time unit to an n^{th} uplink time unit, and starts a second drx-HARQ-RTT-TimerUL in a next adjacent symbol of the second PUSCH. The n uplink time units include the (n-m)^{th} uplink time unit and the n^{th} uplink time unit, the second PUSCH corresponds to the second drx-HARQ-RTT-TimerUL, i is any positive integer greater than or equal to n-m and less than or equal to n, and the n PUSCHs include the second PUSCH.

Optionally, the first drx-HARQ-RTT-TimerUL and the second drx-HARQ-RTT-TimerUL may be a same timer, or may be different timers. When the first drx-HARQ-RTT-TimerUL and the second drx-HARQ-RTT-TimerUL are a same timer, the first drx-HARQ-RTT-TimerUL and the second drx-HARQ-RTT-TimerUL are configured based on third configuration information (for example, the third configuration information is DRX-Config, and specifically, configuration is performed based on drx-HARQ-RTT-TimerUL signaling in DRX-Config). Further, a subsequent third drx-HARQ-RTT-TimerUL, the first drx-HARQ-RTT-TimerUL, and the second drx-HARQ-RTT-TimerUL may alternatively be a same timer. Further, all timers drx-HARQ-RTT-TimerUL in this application may be a same timer.

In the first aspect and any implementation of the first aspect, the method includes: The terminal device transmits a third PUSCH in a j^{th} uplink time unit in the (n-m)^{th} uplink time unit to the n^{th} uplink time unit, and starts the third drx-HARQ-RTT-TimerUL in a next adjacent symbol of the third PUSCH. The third PUSCH corresponds to the third drx-HARQ-RTT-TimerUL, j is any positive integer greater than or equal to n-m, less than or equal to n, and not equal to i, and the n PUSCHs include the third PUSCH.

In the first aspect and any implementation of the first aspect, the n uplink time units are n continuous uplink time units in a same configured uplink grant CG periodicity, and the uplink time unit includes an uplink slot or an uplink symbol. The obtaining a grant from a network device includes: receiving first configuration information from the network device, where the first configuration information is used to configure a configured grant, the configured grant indicates a CG periodicity, the CG periodicity is a time interval between 1^{st} PUSCHs in two adjacent groups of PUSCHs granted by the network device to the terminal device, and the configured grant further indicates a number n of continuous uplink time units included in the CG periodicity, and n is a number of uplink time units in each group; and obtaining the grant from the network device based on the first configuration information.

In the first aspect and any implementation of the first aspect, the method includes: The first configuration information further includes a first field. When the first field is of a first value, after transmitting the first PUSCH in any one or more of the 1^{st} uplink time unit to the (n-m-1)^{th} uplink time unit, the terminal device does not start the first drx-HARQ-RTT-TimerUL. Alternatively, when the first field is of a second value, after transmitting the first PUSCH in any one or more of the 1^{st} uplink time unit to the n^{th} uplink time unit, the terminal device starts the first drx-HARQ-RTT-TimerUL in the next adjacent symbol of the first PUSCH.

In this way, when the first field is of the first value, the terminal device can further reduce power consumption. When the first field is of the second value, the terminal device is compatible with an existing control mechanism. Therefore, the terminal device may further reduce power consumption, and be compatible with the existing control mechanism based on specific setting. For example, in a service like an XR service or a cloud game service, the first field is set to the first value, to further reduce power consumption. In another service, the first field is set to the second value, so that the terminal device is compatible with the existing control mechanism. Therefore, a plurality of setting or selection manners are provided, to flexibly adjust setting, so as to meet different service requirements.

In the first aspect and any implementation of the first aspect, the method includes: When the first field is of the first value, the terminal device transmits the second PUSCH in the i^{th} uplink time unit in the (n-m)^{th} uplink time unit to the n^{th} uplink time unit, and starts the second drx-HARQ-RTT-TimerUL in the next adjacent symbol of the second PUSCH.

In the first aspect and any implementation of the first aspect, the first configuration information further indicates first duration and the first start moment, the first duration is duration of a silence timer drx-silenceTimerUL, the first start moment indicates a start moment of the drx-silenceTimerUL, the first start moment is a start moment at which a PUSCH is transmitted in the 1^{st} uplink time unit in the n uplink time units in each CG periodicity, and an end moment of the drx-silenceTimerUL is earlier than a start moment at which a PUSCH is transmitted in the (n-m-1)^{th} uplink time unit.

In the first aspect and any implementation of the first aspect, the obtaining a grant from a network device includes: obtaining the n uplink time units from the first configuration information; sending third control information to the network device in any one of first k uplink time units in the n uplink time units, where the third control information indicates to update a value of n to k, and k is a positive integer less than n; obtaining k uplink time units; and obtaining the grant from the network device based on the first configuration information.

In the first aspect and any implementation of the first aspect, the first configuration information is received via radio resource control RRC signaling, the first configuration information further includes first indication information, and the first indication information indicates duration of n timers drx-HARQ-RTT-TimerUL respectively corresponding to the n PUSCHs.

In the first aspect and any implementation of the first aspect, the duration of the n timers drx-HARQ-RTT-TimerUL is different or the same.

In the first aspect and any implementation of the first aspect, the obtaining a grant from a network device includes: receiving second control information from the network device, where the second control information indicates that the n PUSCHs are respectively transmitted in the n uplink time units; and obtaining the grant from the network device based on the second control information. The method includes: Before receiving the second control information from the network device, the terminal device receives fourth configuration information from the network device. The fourth configuration information includes an uplink time domain resource allocation table, the uplink time domain resource allocation table includes at least one row index, and each of the at least one row index corresponds to at least one uplink time unit. The second control information includes a first row index, the first row index corresponds to a second row index, the second row index is at least one row index in the uplink time domain resource allocation table, n is a number of uplink time units corresponding to the second row index, and a value of the second row index is a value of the first row index plus 1.

In the first aspect and any implementation of the first aspect, the second control information includes a tenth field. When the tenth field is of a first value, after transmitting the first PUSCH in any one or more of the 1^{st} uplink time unit to the (n-m-1)^{th} uplink time unit, the terminal device does not start the first drx-HARQ-RTT-TimerUL. Alternatively, when the tenth field is of a second value, after transmitting the first PUSCH in any one or more of the 1^{st} uplink time unit to the n^{th} uplink time unit, the terminal device starts the first drx-HARQ-RTT-TimerUL in the next adjacent symbol of the first PUSCH.

In the first aspect and any implementation of the first aspect, the fourth configuration information includes an eleventh field. When the eleventh field is of a first value, after transmitting the first PUSCH in any one or more of the 1^{st} uplink time unit to the (n-m-1)^{th} uplink time unit, the terminal device does not start the first drx-HARQ-RTT-TimerUL. Alternatively, when the eleventh field is of a second value, after transmitting the first PUSCH in any one or more of the 1^{st} uplink time unit to the n^{th} uplink time unit, the terminal device starts the first drx-HARQ-RTT-TimerUL in the next adjacent symbol of the first PUSCH.

In the first aspect and any implementation of the first aspect, m=0.

In the first aspect and any implementation of the first aspect, the n uplink time units are respectively configured based on p pieces of first configuration information, p is a positive integer less than or equal to n, and the uplink time unit includes an uplink slot or an uplink symbol. The obtaining a grant from a network device includes: receiving the p pieces of first configuration information from the network device. The p pieces of first configuration information are respectively used to configure p configured grants, each of the p configured grants includes a configured uplink grant CG periodicity, and each of the p configured grants includes q continuous uplink time units in each CG periodicity. A sum of continuous uplink time units in each CG periodicity of each of the p configured grants is n, and q is a positive integer less than n.

In the first aspect and any implementation of the first aspect, the method includes: An i^{th} piece of first configuration information in the p pieces of first configuration information includes a first field. When the first field is of a first value, the terminal device transmits the first PUSCH in any one of the q continuous uplink time units, and does not start the first drx-HARQ-RTT-TimerUL, where the q continuous uplink time units are q continuous uplink time units in each CG periodicity included in the i^{th} piece of first configuration information. Alternatively, when the first field is of a second value, the terminal device transmits the first PUSCH in any one of the q continuous uplink time units, and starts the first drx-HARQ-RTT-TimerUL in the next adjacent symbol of the first PUSCH, where i is a positive integer less than or equal to p.

In the first aspect and any implementation of the first aspect, the method includes: When the first field of the i^{th} piece of first configuration information is a first value, a 1^{st} time unit in the q continuous uplink time units in each CG periodicity included in the i^{th} piece of first configuration information is earlier than the (n-m)^{th} time unit in the n time units. Alternatively, when the first field of the i^{th} piece of first configuration information is a first value, a q^{th} time unit in the q continuous uplink time units in each CG periodicity included in the i^{th} piece of first configuration information is earlier than the n^{th} time unit in the n time units.

In the first aspect and any implementation of the first aspect, the method includes: When the first field of the i^{th} piece of first configuration information is a second value, a 1^{st} time unit in the q continuous uplink time units in each CG periodicity included in the i^{th} piece of first configuration information is earlier than the (n-m)^{th} time unit in the n time units. Alternatively, when the first field of the i^{th} piece of first configuration information is a second value, a q^{th} time unit in the q continuous uplink time units in each CG periodicity included in the i^{th} piece of first configuration information is earlier than or equal to the n^{th} time unit in the n time units.

In the first aspect and any implementation of the first aspect, the i^{th} piece of first configuration information in the p pieces of first configuration information further includes a ninth field, and the ninth field indicates a fourth drx-HARQ-RTT-TimerUL. After transmitting a fourth PUSCH in any one of the q continuous uplink time units in each CG periodicity included in the i^{th} piece of first configuration information, the terminal device starts the fourth drx-HARQ-RTT-TimerUL in a next adjacent symbol of the fourth PUSCH.

In the first aspect and any implementation of the first aspect, when duration of the fourth drx-HARQ-RTT-TimerUL is 0, the 1^{st} time unit in the q continuous uplink time units in each CG periodicity included in the i^{th} piece of first configuration information is earlier than the (n-m)^{th} time unit in the n time units. Alternatively, when duration of the fourth drx-HARQ-RTT-TimerUL is 0, the q^{th} time unit in the q continuous uplink time units in each CG periodicity included in the i^{th} piece of first configuration information is earlier than the (n-m)^{th} time unit in the n time units.

In the first aspect and any implementation of the first aspect, the method includes: When the duration of the fourth drx-HARQ-RTT-TimerUL is not 0, the 1^{st} time unit in the q continuous uplink time units in each CG periodicity included in the i^{th} piece of first configuration information is earlier than the (n-m)^{th} time unit in the n time units. Alternatively, when duration of the fourth drx-HARQ-RTT-TimerUL is not 0, the q^{th} time unit in the q continuous uplink time units in each CG periodicity included in the i^{th} piece of first configuration information is earlier than or equal to the n^{th} time unit in the n time units.

According to a second aspect, an uplink transmission method is provided, and is applied to a terminal device. Connected mode discontinuous reception C-DRX is configured for the terminal device. The method includes: obtaining a grant from a network device, where the grant indicates the terminal device to respectively transmit n physical uplink shared channels PUSCHs in n uplink time units. After transmitting a first PUSCH in any one or more of a 1^{st} uplink time unit to an (n-m-1)^{th} uplink time unit and after a first hybrid automatic repeat request round trip time uplink timer drx-HARQ-RTT-TimerUL corresponding to the first PUSCH expires, the terminal device does not start a first uplink retransmission timer drx-RetransmissionTimerUL corresponding to the first PUSCH. The n uplink time units include the 1^{st} uplink time unit and the (n-m-1)^{th} uplink time unit, m is a non-negative integer less than n-1, an uplink time unit with a higher serial number in the n uplink time units is later, and the n PUSCHs include the first PUSCH.

In the second aspect, the first drx-HARQ-RTT-TimerUL is a drx-HARQ-RTT-TimerUL of a hybrid automatic repeat request HARQ process corresponding to the first PUSCH. The first drx-RetransmissionTimerUL is a drx-RetransmissionTimerUL of the HARQ process corresponding to the first PUSCH.

In the second aspect and any implementation of the second aspect, after transmitting a second PUSCH in an i^{th} uplink time unit in an (n-m)^{th} uplink time unit to an n^{th} uplink time unit and after a second drx-HARQ-RTT-TimerUL corresponding to the second PUSCH expires, the terminal device starts a second drx-RetransmissionTimerUL corresponding to the second PUSCH in a next adjacent symbol. The n uplink time units include the (n-m)^{th} uplink time unit and the n^{th} uplink time unit, i is any positive integer greater than or equal to n-m and less than or equal to n, and the n PUSCHs include the second PUSCH.

Optionally, the first drx-RetransmissionTimerUL and the second drx-RetransmissionTimerUL may be a same timer, or may be different timers. When the first drx-RetransmissionTimerUL and the second drx-RetransmissionTimerUL are a same timer, the first drx-RetransmissionTimerUL and the second drx-RetransmissionTimerUL are configured based on third configuration information (for example, the third configuration information is DRX-Config, and specifically, configuration is performed based on drx-RetransmissionTimerUL in DRX-Config). Further, a subsequent third drx-RetransmissionTimerUL, the first drx-RetransmissionTimerUL, and the second drx-RetransmissionTimerUL may alternatively be a same timer. Further, all timers drx-RetransmissionTimerUL in this application may be a same timer.

In the second aspect and any implementation of the second aspect, after transmitting a third PUSCH in a j^{th} uplink time unit in an (n-m)^{th} uplink time unit to an n^{th} uplink time unit and after a third drx-HARQ-RTT-TimerUL corresponding to the third PUSCH expires, the terminal device starts a third drx-RetransmissionTimerUL corresponding to the third PUSCH in a next adjacent symbol, where j is any positive integer greater than or equal to n-m, less than or equal to n, and not equal to i. The n PUSCHs include the third PUSCH.

In the second aspect and any implementation of the second aspect, the n uplink time units are n continuous uplink time units, and the uplink time unit includes an uplink slot or an uplink symbol. The obtaining a grant from a network device includes: receiving first configuration information from the network device, where the first configuration information is used to configure a configured grant, the configured grant indicates a CG periodicity, the CG periodicity is a time interval between 1^{st} PUSCHs in two adjacent groups of PUSCHs granted by the network device to the terminal device, and the configured grant further indicates a number n of continuous uplink time units included in the CG periodicity, and n is a number of uplink time units in each group; and obtaining the grant from the network device based on the first configuration information.

In the second aspect and any implementation of the second aspect, the method includes: The first configuration information further includes a first field. When the first field is of a first value, after transmitting the first PUSCH in any one or more of the 1^{st} uplink time unit to the (n-m-1)^{th} uplink time unit and after the first drx-HARQ-RTT-TimerUL corresponding to the first PUSCH expires, the terminal device does not start the first uplink retransmission timer drx-RetransmissionTimerUL corresponding to the first PUSCH. Alternatively, when the first field is of a second value, after transmitting the first PUSCH in any one or more of the 1^{st} uplink time unit to the n^{th} uplink time unit and after the first drx-HARQ-RTT-TimerUL corresponding to the first PUSCH expires, the terminal device starts the first uplink retransmission timer drx-RetransmissionTimerUL corresponding to the first PUSCH in the next adjacent symbol.

In the second aspect and any implementation of the second aspect, the first configuration information further indicates first duration and the first start moment, the first duration is duration of a silence timer drx-silenceTimerUL, the first start moment indicates a start moment of the drx-silenceTimerUL, the first start moment is a start moment at which a PUSCH is transmitted in the 1^{st} uplink time unit in the n uplink time units in each CG periodicity, and an end moment of the drx-silenceTimerUL is earlier than a start moment at which a PUSCH is transmitted in the (n-m-1)^{th} uplink time unit.

In the second aspect and any implementation of the second aspect, the obtaining a grant from a network device includes: obtaining the n uplink time units from the first configuration information; sending third control information to the network device in any one of first k uplink time units in the n uplink time units, where the third control information indicates to update a value of n to k, and k is a positive integer less than n; obtaining k uplink time units; and obtaining the grant from the network device based on the first configuration information.

In the second aspect and any implementation of the second aspect, the first configuration information is received via radio resource control RRC signaling, the first configuration information further includes first indication information, and the first indication information indicates duration of n timers drx-RetransmissionTimerUL respectively corresponding to the n PUSCHs.

In the second aspect and any implementation of the second aspect, the obtaining a grant from a network device includes: receiving second control information from the network device, where the second control information indicates that the n PUSCHs are respectively transmitted in the n uplink time units; and obtaining the grant from the network device based on the second control information. The method includes: Before receiving the second control information from the network device, the terminal device receives fourth configuration information from the network device. The fourth configuration information includes an uplink time domain resource allocation table, the uplink time domain resource allocation table includes at least one row index, and each of the at least one row index corresponds to at least one uplink time unit. The second control information includes a first row index, the first row index corresponds to a second row index, the second row index is at least one row index in the uplink time domain resource allocation table, n is a number of uplink time units corresponding to the second row index, and a value of the second row index is a value of the first row index plus 1.

In the second aspect and any implementation of the second aspect, the method includes: The second control information further includes a tenth field. When the tenth field is of a first value, after transmitting the first PUSCH in any one or more of the 1^{st} uplink time unit to the (n-m-1)^{th} uplink time unit and after the first drx-HARQ-RTT-TimerUL corresponding to the first PUSCH expires, the terminal device does not start the first uplink retransmission timer drx-RetransmissionTimerUL corresponding to the first PUSCH. Alternatively, when the tenth field is of a second value, after transmitting the first PUSCH in any one or more of the 1^{st} uplink time unit to the n^{th} uplink time unit and after the first drx-HARQ-RTT-TimerUL corresponding to the first PUSCH expires, the terminal device starts the first uplink retransmission timer drx-RetransmissionTimerUL corresponding to the first PUSCH in the next adjacent symbol.

In the second aspect and any implementation of the second aspect, the method includes: The fourth configuration information includes an eleventh field. When the eleventh field is of a first value, after transmitting the first PUSCH in any one or more of the 1^{st} uplink time unit to the (n-m-1)^{th} uplink time unit and after the first drx-HARQ-RTT-TimerUL corresponding to the first PUSCH expires, the terminal device does not start the first uplink retransmission timer drx-RetransmissionTimerUL corresponding to the first PUSCH. Alternatively, when the eleventh field is of a second value, after transmitting the first PUSCH in any one or more of the 1^{st} uplink time unit to the n^{th} uplink time unit and after the first drx-HARQ-RTT-TimerUL corresponding to the first PUSCH expires, the terminal device starts the first uplink retransmission timer drx-RetransmissionTimerUL corresponding to the first PUSCH in the next adjacent symbol.

In the second aspect and any implementation of the second aspect, m=0.

In the second aspect and any implementation of the second aspect, the n uplink time units are respectively configured based on p pieces of first configuration information, p is a positive integer less than or equal to n, and the uplink time unit includes an uplink slot or an uplink symbol. The obtaining a grant from a network device includes: receiving the p pieces of first configuration information from the network device. The p pieces of first configuration information are respectively used to configure p configured grants, each of the p configured grants includes a configured uplink grant CG periodicity, and each of the p configured grants includes q continuous uplink time units in each CG periodicity. A sum of continuous uplink time units in each CG periodicity of each of the p configured grants is n, and q is a positive integer less than n.

In the second aspect and any implementation of the second aspect, the method includes: An i^{th} piece of first configuration information in the p pieces of first configuration information includes a first field. When the first field is of a first value, after transmitting the first PUSCH in any one of the q continuous uplink time units and after the first drx-HARQ-RTT-TimerUL corresponding to the first PUSCH expires, the terminal device does not start the first drx-RetransmissionTimerUL corresponding to the first PUSCH, where the q continuous uplink time units are q continuous uplink time units in each CG periodicity included in the i^{th} piece of first configuration information. Alternatively, when the first field is of a second value, after transmitting the first PUSCH in any one of the q continuous uplink time units and after the first drx-HARQ-RTT-TimerUL corresponding to the first PUSCH expires, the terminal device starts the first drx-RetransmissionTimerUL corresponding to the first PUSCH in the next adjacent symbol, where i is a positive integer less than or equal to p.

In the second aspect and any implementation of the second aspect, the method includes: When the first field of the i^{th} piece of first configuration information is a first value, a 1^{st} time unit in the q continuous uplink time units in each CG periodicity included in the i^{th} piece of first configuration information is earlier than the (n-m)^{th} time unit in the n time units. Alternatively, when the first field of the i^{th} piece of first configuration information is a first value, a q^{th} time unit in the q continuous uplink time units in each CG periodicity included in the i^{th} piece of first configuration information is earlier than the (n-m)^{th} time unit in the n time units.

In the second aspect and any implementation of the second aspect, the method includes: When the first field of the i^{th} piece of first configuration information is a second value, a 1^{st} time unit in the q continuous uplink time units in each CG periodicity included in the i^{th} piece of first configuration information is earlier than the (n-m)^{th} time unit in the n time units. Alternatively, when the first field of the i^{th} piece of first configuration information is a second value, a q^{th} time unit in the q continuous uplink time units in each CG periodicity included in the i^{th} piece of first configuration information is earlier than or equal to the n^{th} time unit in the n time units.

In the second aspect and any implementation of the second aspect, the i^{th} piece of first configuration information in the p pieces of first configuration information further includes a ninth field, and the ninth field indicates a fourth drx-HARQ-RTT-TimerUL. After transmitting a fourth PUSCH in any one of the q continuous uplink time units in each CG periodicity included in the i^{th} piece of first configuration information and after the fourth drx-HARQ-RTT-TimerUL corresponding to the fourth PUSCH expires, the terminal device starts the fourth drx-RetransmissionTimerUL corresponding to the fourth PUSCH in a next adjacent symbol.

In the second aspect and any implementation of the second aspect, when duration of the fourth drx-HARQ-RTT-TimerUL is 0, the 1^{st} time unit in the q continuous uplink time units in each CG periodicity included in the i^{th} piece of first configuration information is earlier than the (n-m)^{th} time unit in the n time units. Alternatively, when duration of the fourth drx-HARQ-RTT-TimerUL is 0, the q^{th} time unit in the q continuous uplink time units in each CG periodicity included in the i^{th} piece of first configuration information is earlier than the (n-m)^{th} time unit in the n time units.

In the second aspect and any implementation of the second aspect, the method includes: When the duration of the fourth drx-HARQ-RTT-TimerUL is not 0, the 1^{st} time unit in the q continuous uplink time units in each CG periodicity included in the i^{th} piece of first configuration information is earlier than the (n-m)^{th} time unit in the n time units. Alternatively, when duration of the fourth drx-HARQ-RTT-TimerUL is not 0, the q^{th} time unit in the q continuous uplink time units in each CG periodicity included in the i^{th} piece of first configuration information is earlier than or equal to the n^{th} time unit in the n time units.

According to a third aspect, an uplink transmission method is provided, and is applied to a network device. Connected mode discontinuous reception C-DRX is configured for the network device. The method includes: granting a terminal device to respectively transmit n physical uplink shared channels PUSCHs in n uplink time units. After receiving a first PUSCH in any one or more of a 1^{st} uplink time unit to an (n-m-1)^{th} uplink time unit, the network device does not start a first hybrid automatic repeat request round trip time uplink timer drx-HARQ-RTT-TimerUL. The n uplink time units include the 1^{st} uplink time unit and the (n-m-1)^{th} uplink time unit, and m is a non-negative integer less than n-1. The first drx-HARQ-RTT-TimerUL corresponds to the first PUSCH, and an uplink time unit with a higher serial number in the n uplink time units is later. The n PUSCHs include the first PUSCH.

In the third aspect, the method includes: receiving a second PUSCH in an i^{th} uplink time unit in an (n-m)^{th} uplink time unit to an n^{th} uplink time unit, and starting a second drx-HARQ-RTT-TimerUL in a next adjacent symbol of the second PUSCH. The n uplink time units include the (n-m)^{th} uplink time unit and the n^{th} uplink time unit. The second PUSCH corresponds to the second drx-HARQ-RTT-TimerUL, and i is any positive integer greater than or equal to n-m and less than or equal to n. The n PUSCHs include the second PUSCH.

In the third aspect and any implementation of the third aspect, the method includes: receiving a third PUSCH in a j^{th} uplink time unit in the (n-m)^{th} uplink time unit to the n^{th} uplink time unit, and starting a third drx-HARQ-RTT-TimerUL in a next adjacent symbol of the third PUSCH. The third PUSCH corresponds to the third drx-HARQ-RTT-TimerUL, and j is any positive integer greater than or equal to n-m, less than or equal to n, and not equal to i. The n PUSCHs include the third PUSCH.

In the third aspect and any implementation of the third aspect, the n uplink time units are n continuous uplink time units, and the uplink time unit includes an uplink slot or an uplink symbol. The granting a terminal device to respectively transmit n PUSCHs in n uplink time units includes: sending first configuration information to the terminal device. The first configuration information is used to configure a configured grant, the configured grant indicates a CG periodicity, the CG periodicity is a time interval between 1^{st} PUSCHs in two adjacent groups of PUSCHs granted by the network device to the terminal device, and the configured grant further indicates a number n of continuous uplink time units included in the CG periodicity, and n is a number of uplink time units in each group. The first configuration information is further used to grant the terminal device to respectively transmit the n PUSCHs in the n uplink time units.

In the third aspect and any implementation of the third aspect, the method includes: The first configuration information further includes a first field. When the first field is of a first value, after receiving the first PUSCH in any one or more of the 1^{st} uplink time unit to the (n-m-1)^{th} uplink time unit, the network device does not start the first drx-HARQ-RTT-TimerUL. Alternatively, when the first field is of a second value, after receiving the first PUSCH in any one or more of the 1^{st} uplink time unit to the n^{th} uplink time unit, the network device starts the first drx-HARQ-RTT-TimerUL in the next adjacent symbol of the first PUSCH.

In the third aspect and any implementation of the third aspect, the method includes: When the first field is of the first value, the network device receives the second PUSCH in the i^{th} uplink time unit in the (n-m)^{th} uplink time unit to the n^{th} uplink time unit, and starts the second drx-HARQ-RTT-TimerUL in the next adjacent symbol of the second PUSCH.

In the third aspect and any implementation of the third aspect, the first configuration information further indicates first duration and the first start moment, the first duration is duration of a silence timer drx-silenceTimerUL, the first start moment indicates a start moment of the drx-silenceTimerUL, the first start moment is a start moment at which a PUSCH is transmitted in the 1^{st} uplink time unit in the n uplink time units in each CG periodicity, and an end moment of the drx-silenceTimerUL is earlier than a start moment at which a PUSCH is transmitted in the (n-m-1)^{th} uplink time unit.

In the third aspect and any implementation of the third aspect, the granting a terminal device to respectively transmit n PUSCHs in n uplink time units includes: sending second control information to the terminal device. The second control information indicates the terminal device to respectively transmit the n PUSCHs in the n uplink time units, and the second control information is further used to grant the terminal device to respectively transmit the n PUSCHs in the n uplink time units. The method includes: Before sending the second control information to the terminal device, the network device sends fourth configuration information to the terminal device. The fourth configuration information includes an uplink time domain resource allocation table, the uplink time domain resource allocation table includes at least one row index, and each of the at least one row index corresponds to at least one uplink time unit. The second control information includes a first row index, the first row index corresponds to a second row index, the second row index is at least one row index in the uplink time domain resource allocation table, n is a number of uplink time units corresponding to the second row index, and a value of the second row index is a value of the first row index plus 1.

In the third aspect and any implementation of the third aspect, the method includes: The second control information includes a tenth field. When the tenth field is of a first value, after receiving the first PUSCH in any one or more of the 1^{st} uplink time unit to the (n-m-1)^{th} uplink time unit, the network device does not start the first drx-HARQ-RTT-TimerUL. Alternatively, when the tenth field is of a second value, after receiving the first PUSCH in any one or more of the 1^{st} uplink time unit to the n^{th} uplink time unit, the network device starts the first drx-HARQ-RTT-TimerUL in the next adjacent symbol of the first PUSCH.

In the third aspect and any implementation of the third aspect, the method includes: The fourth configuration information includes an eleventh field. When the eleventh field is of a first value, after receiving the first PUSCH in any one or more of the 1^{st} uplink time unit to the (n-m-1)^{th} uplink time unit, the network device does not start the first drx-HARQ-RTT-TimerUL. Alternatively, when the eleventh field is of a second value, after receiving the first PUSCH in any one or more of the 1^{st} uplink time unit to the n^{th} uplink time unit, the network device starts the first drx-HARQ-RTT-TimerUL in the next adjacent symbol of the first PUSCH.

Correspondingly, in the third aspect and any implementation of the third aspect, the method may further include features corresponding to the first aspect and any implementation of the first aspect. Details are not described herein.

According to a fourth aspect, an uplink transmission method is provided, and is applied to a network device. Connected mode discontinuous reception C-DRX is configured for the network device. The method includes: granting a terminal device to respectively transmit n physical uplink shared channels PUSCHs in n uplink time units. After receiving a first PUSCH in any one or more of a 1^{st} uplink time unit to an (n-m-1)^{th} uplink time unit and after a first hybrid automatic repeat request round trip time uplink timer drx-HARQ-RTT-TimerUL corresponding to the first PUSCH expires, the network device does not start a first uplink retransmission timer drx-RetransmissionTimerUL corresponding to the first PUSCH. The n uplink time units include the 1^{st} uplink time unit and the (n-m-1)^{th} uplink time unit, m is a non-negative integer less than n-1, an uplink time unit with a higher serial number in the n uplink time units is later, and the n PUSCHs include the first PUSCH.

In the fourth aspect, the method includes: The first drx-HARQ-RTT-TimerUL is a drx-HARQ-RTT-TimerUL of a hybrid automatic repeat request HARQ process corresponding to the first PUSCH. The first drx-RetransmissionTimerUL is a drx-RetransmissionTimerUL of the HARQ process corresponding to the first PUSCH.

In the fourth aspect and any implementation of the fourth aspect, the method includes: After receiving a second PUSCH in an i^{th} uplink time unit in an (n-m)^{th} uplink time unit to an n^{th} uplink time unit and after a second drx-HARQ-RTT-TimerUL corresponding to the second PUSCH expires, the network device starts a second drx-RetransmissionTimerUL corresponding to the second PUSCH in a next adjacent symbol. The n uplink time units include the (n-m)^{th} uplink time unit and the n^{th} uplink time unit, and i is any positive integer greater than or equal to n-m and less than or equal to n. The n PUSCHs include the second PUSCH.

In the fourth aspect and any implementation of the fourth aspect, the method includes: After receiving a third PUSCH in a j^{th} uplink time unit in the (n-m)^{th} uplink time unit to the n^{th} uplink time unit and after a third drx-HARQ-RTT-TimerUL corresponding to the third PUSCH expires, the network device starts a third drx-RetransmissionTimerUL corresponding to the third PUSCH in a next adjacent symbol, where j is any positive integer greater than or equal to n-m, less than or equal to n, and not equal to i. The n PUSCHs include the third PUSCH.

In the fourth aspect and any implementation of the fourth aspect, the n uplink time units are n continuous uplink time units, and the uplink time unit includes an uplink slot or an uplink symbol. The granting a terminal device to respectively transmit n PUSCHs in n uplink time units includes: sending first configuration information to the terminal device. The first configuration information is used to configure a configured grant, the configured grant indicates a CG periodicity, the CG periodicity is a time interval between 1^{st} PUSCHs in two adjacent groups of PUSCHs granted by the network device to the terminal device, and the configured grant further indicates a number n of continuous uplink time units included in the CG periodicity, and n is a number of uplink time units in each group. The first configuration information is further used to grant the terminal device to respectively transmit the n PUSCHs in the n uplink time units.

In the fourth aspect and any implementation of the fourth aspect, the method includes: The first configuration information further includes a first field. When the first field is of a first value, after receiving the first PUSCH in any one or more of the 1^{st} uplink time unit to the (n-m-1)^{th} uplink time unit and after the first drx-HARQ-RTT-TimerUL corresponding to the first PUSCH expires, the network device does not start the first uplink retransmission timer drx-RetransmissionTimerUL corresponding to the first PUSCH. Alternatively, when the first field is of a second value, after receiving the first PUSCH in any one or more of the 1^{st} uplink time unit to the n^{th} uplink time unit and after the first drx-HARQ-RTT-TimerUL corresponding to the first PUSCH expires, the network device starts the first uplink retransmission timer drx-RetransmissionTimerUL corresponding to the first PUSCH in the next adjacent symbol.

In the fourth aspect and any implementation of the fourth aspect, the first configuration information further indicates first duration and the first start moment, the first duration is duration of a silence timer drx-silenceTimerUL, the first start moment indicates a start moment of the drx-silenceTimerUL, the first start moment is a start moment at which a PUSCH is transmitted in the 1^{st} uplink time unit in the n uplink time units in each CG periodicity, and an end moment of the drx-silenceTimerUL is earlier than a start moment at which a PUSCH is transmitted in the (n-m-1)^{th} uplink time unit.

In the fourth aspect and any implementation of the fourth aspect, the granting a terminal device to respectively transmit n PUSCHs in n uplink time units includes: sending second control information to the terminal device. The second control information indicates the terminal device to respectively transmit the n PUSCHs in the n uplink time units, and the second control information is further used to grant the terminal device to respectively transmit the n PUSCHs in the n uplink time units. The method includes: Before sending the second control information to the terminal device, the network device sends fourth configuration information to the terminal device. The fourth configuration information includes an uplink time domain resource allocation table, the uplink time domain resource allocation table includes at least one row index, and each of the at least one row index corresponds to at least one uplink slot. The second control information includes a first row index, the first row index corresponds to a second row index, the second row index is at least one row index in the uplink time domain resource allocation table, n is a number of uplink slots corresponding to the second row index, and a value of the second row index is a value of the first row index plus 1.

In the fourth aspect and any implementation of the fourth aspect, the method includes: The second control information includes a tenth field. When the tenth field is of a first value, after receiving the first PUSCH in any one or more of the 1^{st} uplink time unit to the (n-m-1)^{th} uplink time unit and after the first drx-HARQ-RTT-TimerUL corresponding to the first PUSCH expires, the network device does not start the first uplink retransmission timer drx-RetransmissionTimerUL corresponding to the first PUSCH. Alternatively, when the tenth field is of a second value, after receiving the first PUSCH in any one or more of the 1^{st} uplink time unit to the n^{th} uplink time unit and after the first drx-HARQ-RTT-TimerUL corresponding to the first PUSCH expires, the network device starts the first uplink retransmission timer drx-RetransmissionTimerUL corresponding to the first PUSCH in the next adjacent symbol.

In the fourth aspect and any implementation of the fourth aspect, the method includes: The fourth configuration information includes an eleventh field. When the eleventh field is of a first value, after receiving the first PUSCH in any one or more of the 1^{st} uplink time unit to the (n-m-1)^{th} uplink time unit and after the first drx-HARQ-RTT-TimerUL corresponding to the first PUSCH expires, the network device does not start the first uplink retransmission timer drx-RetransmissionTimerUL corresponding to the first PUSCH. Alternatively, when the eleventh field is of a second value, after receiving the first PUSCH in any one or more of the 1^{st} uplink time unit to the n^{th} uplink time unit and after the first drx-HARQ-RTT-TimerUL corresponding to the first PUSCH expires, the network device starts the first uplink retransmission timer drx-RetransmissionTimerUL corresponding to the first PUSCH in the next adjacent symbol.

Correspondingly, in the fourth aspect and any implementation of the fourth aspect, the method may further include features corresponding to the second aspect and any implementation of the second aspect. Details are not described herein.

According to a fifth aspect, a terminal device is provided. The terminal device includes a processor and a memory, the memory stores a computer program, and when the computer program is run by the processor, the terminal device is enabled to perform the method in the first aspect and any implementation of the first aspect and the method in the second aspect and any implementation of the second aspect.

For technical effect corresponding to the fifth aspect and any implementation of the fifth aspect, refer to technical effect corresponding to the first aspect and any implementation of the first aspect and the second aspect and any implementation of the second aspect. Details are not described herein again.

According to a sixth aspect, a network device is provided. The network device includes a processor and a memory, the memory stores a computer program, and when the computer program is run by the processor, the network device is enabled to perform the method in the third aspect and any implementation of the third aspect and the method in the fourth aspect and any implementation of the fourth aspect.

For technical effect corresponding to the sixth aspect and any implementation of the sixth aspect, refer to technical effect corresponding to the third aspect and any implementation of the third aspect and the fourth aspect and any implementation of the fourth aspect. Details are not described herein again.

According to a seventh aspect, a computer-readable storage medium is provided. The computer-readable storage medium stores a computer program, and when the computer program runs on a terminal device, the terminal device is enabled to perform the method in the first aspect and any implementation of the first aspect and the method in the second aspect and any implementation of the second aspect.

For technical effect corresponding to the seventh aspect and any implementation of the seventh aspect, refer to technical effect corresponding to the first aspect and any implementation of the first aspect and the second aspect and any implementation of the second aspect. Details are not described herein again.

According to an eighth aspect, a computer-readable storage medium is provided. The computer-readable storage medium stores a computer program, and when the computer program runs on a network device, the network device is enabled to perform the method in the third aspect and any implementation of the third aspect and the method in the fourth aspect and any implementation of the fourth aspect.

For technical effect corresponding to the eighth aspect and any implementation of the eighth aspect, refer to technical effect corresponding to the third aspect and any implementation of the third aspect and the fourth aspect and any implementation of the fourth aspect. Details are not described herein again.

According to a ninth aspect, a computer program product is provided. The computer program product is stored in a computer-readable storage medium, and when the computer program product runs on a terminal device, the terminal device is enabled to perform the method in the first aspect and any implementation of the first aspect and the method in the second aspect and any implementation of the second aspect.

For technical effect corresponding to the ninth aspect and any implementation of the ninth aspect, refer to technical effect corresponding to the first aspect and any implementation of the first aspect and the second aspect and any implementation of the second aspect. Details are not described herein again.

According to a tenth aspect, a computer program product is provided. The computer program product is stored in a computer-readable storage medium, and when the computer program product runs on a network device, the network device is enabled to perform the method in the third aspect and any implementation of the third aspect and the method in the fourth aspect and any implementation of the fourth aspect.

For technical effect corresponding to the tenth aspect and any implementation of the tenth aspect, refer to technical effect corresponding to the third aspect and any implementation of the third aspect and the fourth aspect and any implementation of the fourth aspect. Details are not described herein again.

According to an eleventh aspect, a chip is provided. The chip includes a processor and a memory coupled to the processor, the memory stores a computer program, and the chip is located in a terminal device. When the processor runs the computer program, the terminal device is enabled to perform the method in the first aspect and any implementation of the first aspect and the method in the second aspect and any implementation of the second aspect.

For technical effect corresponding to the eleventh aspect and any implementation of the eleventh aspect, refer to technical effect corresponding to the first aspect and any implementation of the first aspect and the second aspect and any implementation of the second aspect. Details are not described herein again.

According to a twelfth aspect, a chip is provided. The chip includes a processor and a memory coupled to the processor, the memory stores a computer program, and the chip is located in a network device. When the processor runs the computer program, the network device is enabled to perform the method in the third aspect and any implementation of the third aspect and the method in the fourth aspect and any implementation of the fourth aspect.

For technical effect corresponding to the twelfth aspect and any implementation of the twelfth aspect, refer to technical effect corresponding to the third aspect and any implementation of the third aspect and the fourth aspect and any implementation of the fourth aspect. Details are not described herein again.

According to a thirteenth aspect, a communication system is provided. The communication system includes a terminal device and a network device. The terminal device is configured to perform the method in the first aspect and any implementation of the first aspect and the method in the second aspect and any implementation of the second aspect, and the network device is configured to perform the method in the third aspect and any implementation of the third aspect and the method in the fourth aspect and any implementation of the fourth aspect.

For technical effect corresponding to the thirteenth aspect and any implementation of the thirteenth aspect, refer to technical effect corresponding to the first aspect and any implementation of the first aspect, the second aspect and any implementation of the second aspect, the third aspect and any implementation of the third aspect, and the fourth aspect and any implementation of the fourth aspect. Details are not described herein again.

### BRIEF DESCRIPTION OF DRAWINGS

The foregoing and other features, advantages, and aspects in embodiments of this application become clearer with reference to accompanying drawings and the following detailed descriptions. In the accompanying drawings, same or similar reference numerals indicate same or similar elements.
FIG. 1A is a diagram of a semi-persistent uplink transmission method between a terminal device and a network device;
FIG. 1B is a diagram of a dynamic uplink transmission method between a terminal device and a network device;
FIG. 2A is a diagram of a first uplink transmission mode between a terminal device and a network device;
FIG. 2B is a working diagram of a terminal device when retransmission occurs in a first uplink transmission mode;
FIG. 2C is a working diagram of a terminal device when retransmission does not occur in a first uplink transmission mode;
FIG. 3A is a diagram of a second uplink transmission mode between a terminal device and a network device;
FIG. 3B is a working diagram of a terminal device when retransmission occurs in a second uplink transmission mode;
FIG. 3C is a working diagram of a terminal device when retransmission does not occur in a second uplink transmission mode;
FIG. 4A is a diagram of Embodiment 1 of an uplink transmission method according to an embodiment of this application;
FIG. 4B is a diagram of Embodiment 2 of an uplink transmission method according to an embodiment of this application;
FIG. 5A is a diagram of Embodiment 3 of an uplink transmission method according to an embodiment of this application;
FIG. 5B is a diagram of Embodiment 4 of an uplink transmission method according to an embodiment of this application;
FIG. 6A is a diagram of Embodiment 5 of an uplink transmission method according to an embodiment of this application;
FIG. 6B is a diagram of Embodiment 6 of an uplink transmission method according to an embodiment of this application;
FIG. 7A is a diagram of Embodiment 7 of an uplink transmission method according to an embodiment of this application;
FIG. 7B is a diagram of Embodiment 8 of an uplink transmission method according to an embodiment of this application; and
FIG. 8 is a composition diagram of a structure of a terminal device according to an embodiment of this application.

### DESCRIPTION OF EMBODIMENTS

The following describes embodiments of this application in more detail with reference to accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that the accompanying drawings and embodiments of this application are only used as examples, but are not intended to limit the protection scope of this application.

In the descriptions of embodiments of this application, the term "include" and similar terms thereof should be understood as open inclusion, that is, "include but not limited to". The term "based on" should be understood as "at least partially based on". The terms "one embodiment" or "this embodiment" should be understood as "at least one embodiment". The terms "first", "second", and the like may indicate different objects or a same object. Other explicit and implicit definitions may also be included below.

Embodiments of this application may be implemented according to any appropriate communication protocol, including but not limited to cellular communication protocols such as the 3rd generation (3rd Generation, 3G), the 4th generation (4G), the 5th generation (5G), and the 6th generation (6G), wireless local area network communication protocols such as the Institute of Electrical and Electronics Engineers (Institute of Electrical and Electronics Engineers, IEEE) 802.11, and/or any other protocols currently known or developed in the future.

The technical solutions in embodiments of this application are applied to a communication system that complies with any appropriate communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a 5th generation system or a new radio (New Radio, NR) system, or a future evolved 6th generation communication system.

Before embodiments of this application are specifically described, some terms in this application are first explained.

A terminal device is any terminal device that can perform wired or wireless communication with a network device or another terminal device. The terminal device may sometimes be referred to as user equipment (User Equipment, UE). The terminal device may be any type of mobile terminal, fixed terminal, or portable terminal. For example, the terminal device may include a mobile phone, a station, a unit, a device, a mobile terminal (Mobile Terminal, MT), customer premises equipment (Customer Premises Equipment, CPE), a subscription station, a portable subscription station, an Internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an Internet of things (Internet of Things, IoT) device, a vehicle-mounted device, a flight device, a virtual reality (Virtual Reality, VR) device, an augmented reality (Augmented Reality, AR) device, a wearable device, a terminal device in a 5G network or any terminal device in an evolved public land mobile network (Public Land Mobile Network, PLMN), another device that can be used for communication, or any combination thereof. This is not limited in embodiments of this application.

A network device is an entity or a node that may be configured to communicate with a terminal device, for example, may be an access network device. The access network device may be an apparatus, for example, a radio access network (Radio Access Network, RAN) device, deployed in a radio access network to provide a wireless communication function for the mobile terminal. The access network device may include various types of base stations. For example, the access network device may include various forms of macro base stations, micro base stations, pico base stations, femto base stations, relay stations, access points, remote radio units (Remote Radio Unit, RRU), radio heads (Radio Head, RH), and remote radio heads (Remote Radio Head, RRH). In systems using different radio access technologies, the access network device may have different names. For example, the access network device is referred to as an evolved NodeB (evolved NodeB, eNB or eNodeB) in a long term evolution (Long Term Evolution, LTE) network, is referred to as a NodeB (NodeB, NB) in a 3G network, and may be referred to as a gNodeB (gNB) or an NR NodeB (NR NB) in a 5G network. In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack. For ease of description, in subsequent embodiments of this application, the foregoing apparatuses that provide a wireless communication function for a terminal device are collectively referred to as a network device. This is not specifically limited in embodiments of this application.

A configured uplink grant (Configured Grant, CG; or Configured uplink Grant, CG) is an uplink semi-persistent transmission method. A different between the configured uplink grant and a dynamic grant lies in that in the configured uplink grant, control information needs to indicate a corresponding transmission resource for each transmission. The uplink semi-persistent transmission is characterized by one-time configuration used for a plurality of times. In other words, the network device does not need to send control information for each transmission, but pre-configures a transmission periodicity via semi-persistent signaling, and then performs periodic transmission based on the configured periodicity.

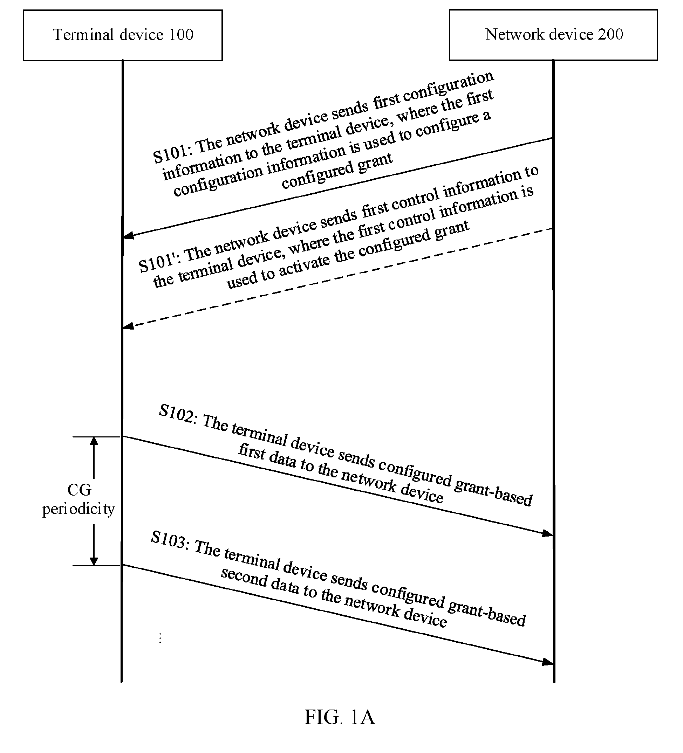

For example, FIG. 1A is a diagram of a principle of a semi-persistent uplink transmission method between a terminal device and a network device. As shown in FIG. 1A, a terminal device 100 communicates with a network device 200 in a wireless manner. For example, the terminal device 100 includes an XR terminal device. The network device 200 includes a base station.

As shown in FIG. 1A, the wireless communication method includes the following steps.

S101: The network device sends first configuration information to the terminal device, where the first configuration information is used to configure a configured grant (ConfiguredGrantConfig).

For example, the first configuration information is sent via radio resource control (Radio Resource Control, RRC) signaling.

The first configuration information includes first-type information, and the first-type information includes information (which may also be referred to as parameters) such as an allocated slot (Slot Allocated) and a CG periodicity (periodicity). The allocated slot is a number of slots allocated in one CG periodicity. The CG periodicity is a time interval between a 1^{st} slot in an x^{th} group of slots and a 1^{st} slot in an (x+1)^{th} group of slots in one CG configuration, where x is a positive integer. A number of slots in each group in one CG configuration may be determined based on the first-type information. For example, the number of slots in each group is determined based on a parameter cg-nrofSlots in ConfiguredGrantConfig in the first configuration information. Alternatively, when cg-nrofSlots is not configured, the number of slots in each group is 1 by default. In some cases, the first configuration information may be ConfiguredGrantConfig.

Optionally, the first configuration information further includes second-type information. The second-type information includes a modulation and coding scheme (Modulation and Coding Scheme, MCS), time domain resource allocation (Time Domain Resource Allocation, TDRA), frequency domain resource allocation (Frequency Domain Resource Allocation, FDRA), and the like. In this case, the wireless communication method does not include S101' mentioned below. Further, the first configuration information further includes an offset, for example, the offset is i slots. In this way, the terminal device may use a slot (j+i) as a slot for uplink transmission based on a moment, for example, a slot j, at which the first configuration information is received. Therefore, the terminal device performs uplink transmission in the slot (j+i) when uplink data transmission needs to be performed, and skips the slot (j+i) or sends padding data when uplink data transmission does not need to be performed. The terminal device performs periodic transmission based on the first configuration information.

Optionally, more steps may be further included between S101 and S102, and are used by the network device 200 to send more configuration information to the terminal device 100, to perform configuration for a plurality of times.

Optionally, the first configuration information does not include the foregoing second-type information. In this case, the wireless communication method includes S101'. The second-type information is included in first control information in S101'. In this case, the first control information in S101' does not include the foregoing offset.

S101': The network device sends the first control information to the terminal device, where the first control information is used to activate the configured grant.

For example, the first control information includes downlink control information (Downlink Control Information, DCI). Optionally, the DCI includes the second-type information. The terminal device performs periodic transmission based on the first configuration information and the first control information.

Optionally, more steps may be further included between S101' and S102, and are used by the network device 200 to send more configuration information or control information to the terminal device 100.

Optionally, before S101, the network device 200 may further send more configuration information to the terminal device 100.

S102: The terminal device sends configured grant-based first data to the network device.

Optionally, when the terminal device has to-be-transmitted uplink data, the terminal device performs S102, that is, directly transmits the uplink data on a configured resource. In this case, it is a start moment of one CG periodicity.

S103: The terminal device sends configured grant-based second data to the network device.

A time interval between S103 and S102 is one CG periodicity. In S103 and S102, the terminal device does not send other configured grant-based data to the network device.

Optionally, when the terminal device has other to-be-transmitted uplink data, the terminal device performs S103. In this case, it is an end moment of one CG periodicity and a start moment of another adjacent CG periodicity.

It should be noted that S102 and S103 are merely examples. In subsequent CG periodicities, the terminal device cyclically performs S102 and S103 until the terminal device receives a stop command (for example, receives deactivation signaling from the network device).

In addition to the foregoing semi-persistent uplink transmission method between the terminal device and the network device, the terminal device may further perform dynamic uplink transmission with the network device.

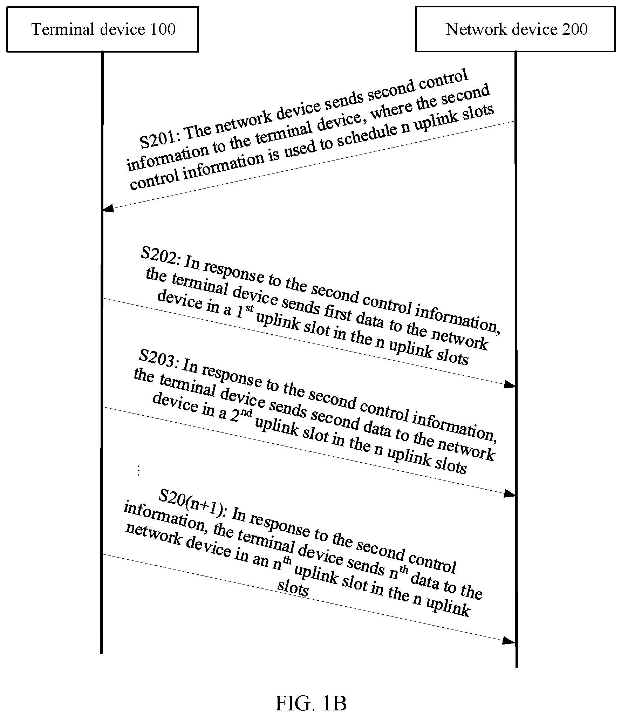

For example, FIG. 1B is a diagram of a principle of a dynamic uplink transmission method between a terminal device and a network device. As shown in FIG. 1B, the terminal device 100 communicates with the network device 200 in a wireless manner. For example, the terminal device 100 includes an XR terminal device. The network device 200 includes a base station.

As shown in FIG. 1B, the wireless communication method includes the following steps.

S201: The network device sends second control information to the terminal device, where the second control information is used to schedule n uplink slots, and
n is a positive integer greater than 1. In step S201, the n uplink slots do not need to be n continuous uplink slots.

For example, the second control information may be downlink control information DCI.
S202: In response to receiving of the second control information, the terminal device sends first data to the network device in a 1^{st} uplink slot in the n uplink slots;
S203: In response to receiving of the second control information, the terminal device sends second data to the network device in a 2^{nd} uplink slot in the n uplink slots;
   ...; and
S20(n+1): In response to receiving of the second control information, the terminal device sends n^{th} data to the network device in an n^{th} uplink slot in the n uplink slots.

When n=2, S202 and S20(n+1) are a same step.

Regardless of the semi-static uplink transmission method or the dynamic uplink transmission method, in services such as an XR service and a cloud game service, a data frame (for example, an XR data frame, where in uplink transmission, the data frame may be referred to as a physical uplink shared channel (Physical Uplink Shared CHannel, PUSCH) frame) has a large data amount, and usually needs to be transmitted in a plurality of slots. In uplink transmission, a plurality of uplink slots need to be used for transmission. Usually, the network device and the terminal device are implemented in the following two manners.

### Manner 1

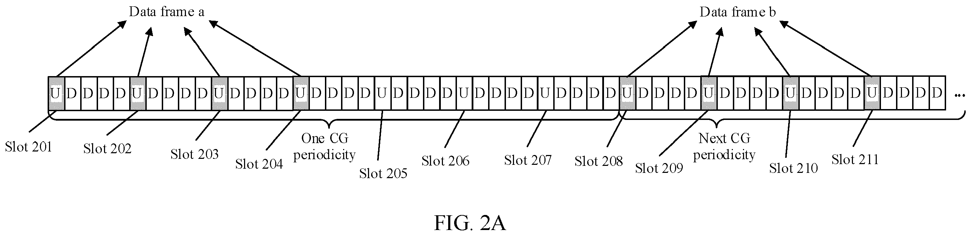

The network device configures the n continuous uplink slots in each CG periodicity for the terminal device, where n is a positive integer greater than 1. For example, the network device may configure the n continuous uplink slots in each CG periodicity for the terminal device based on cg-nrofSlots in ConfiguredGrantConfig in first configuration information. The first configuration information may be sent via RRC signaling sent by the network device to the terminal device. For ease of description, the following uses n=4 as an example for description with reference to FIG. 2A. Alternatively, n may be any other positive integer greater than 1, for example, n=2. In some cases, the first configuration information may be ConfiguredGrantConfig.

Specifically, as shown in FIG. 2A, the network device configures four continuous uplink slots (for example, first four continuous uplink slots in each CG periodicity) in each CG periodicity for the terminal device, so that the terminal device performs periodic transmission based on the configured CG periodicity. In other words, a PUSCH frame a is transmitted in a slot 201, a slot 202, a slot 203, and a slot 204 in one CG periodicity in an uplink manner. A PUSCH frame b is transmitted in a slot 208, a slot 209, a slot 210, and a slot 211 in a next CG periodicity in the uplink manner. A subsequent PUSCH frame is also periodically transmitted according to such a rule. Details are not described herein again.

It should be noted that, unless otherwise specified, content related to Manner 1 in subsequent embodiments or implementations is described by using n=4 as an example. However, this does not preclude n from taking another positive integer value. Although an example in which n is another positive integer value is not described in detail in this application, the example also falls within the scope of this application.

### Manner 2

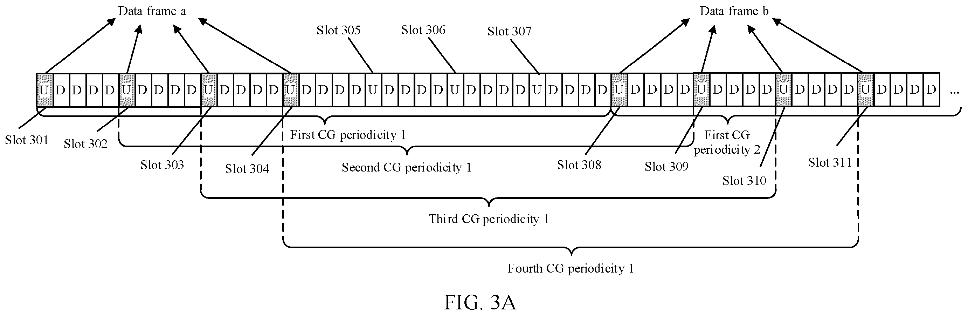

The terminal device may support simultaneous running of d CG configurations (for example, 12 CG configurations), where d is a positive integer. The network device separately configures p CG configurations for the terminal device p times in total, and configures one CG configuration each time, where p is a positive integer less than or equal to d. For example, a first CG configuration is configured for the first time, ..., and a p^{th} CG configuration is configured for the p^{th} time. The p CG configurations are separately configured based on p pieces of first configuration information. In some cases, the first configuration information may be ConfiguredGrantConfig. Each CG configuration includes at least one CG periodicity. Any number of uplink slots may be used for uplink transmission in each CG periodicity. For ease of description, an example in which only one uplink slot is used for transmission in each CG periodicity is used for description below. For example, the first CG configuration includes a first CG periodicity 1, a first CG periodicity 2, ..., and the like. A second CG configuration includes a second CG periodicity 1, ..., and the like. A first CG periodicity is configured with 35 slots. In other words, first 35 slots are one first CG periodicity, namely, the first CG periodicity 1, adjacent 35 slots are a next first CG periodicity, namely, the first CG periodicity 2, and a subsequent CG periodicity also conforms to such a rule. This is similar to another CG configuration. Details are not described again. For ease of description, the following uses p=4 as an example for description with reference to FIG. 3A.

Specifically, as shown in FIG. 3A, the network device configures four CG configurations: a first CG configuration, a second CG configuration, a third CG configuration, and a fourth CG configuration for the terminal device through four times of configuration. The four CG configurations respectively include at least one first CG periodicity, at least one second CG periodicity, at least one third CG periodicity, and at least one fourth CG periodicity. When transmitting the PUSCH frame a in the uplink manner, the terminal device performs uplink transmission in a slot 301 in the first CG periodicity 1, a slot 302 in the second CG periodicity 1, a slot 303 in a third CG periodicity 1, and a slot 304 in a fourth CG periodicity 1. When transmitting the PUSCH frame b in the uplink manner, the terminal device performs uplink transmission in a slot 308 in the first CG periodicity 2, a slot 309 in a second CG periodicity 2 (not shown in the figure), a slot 310 in a third CG periodicity 2 (not shown in the figure), and a slot 311 in a fourth CG periodicity 2 (not shown in the figure). A start moment of the second CG periodicity 2 is a next slot (namely, the slot 309) adjacent to an end slot of the second CG periodicity 1, and a period of the second CG periodicity 2 is the same as a period of the second CG periodicity 1. This is similar to the third CG periodicity 2 and the fourth CG periodicity 2. A subsequent PUSCH frame (or data frame) is also periodically transmitted according to such a rule. Details are not described herein again.

It should be noted that, unless otherwise specified, content related to Manner 2 in subsequent embodiments or implementations is described by using p=4 as an example. However, this does not preclude p from taking another positive integer value. Although an example in which p is another positive integer value is not described in detail in this application, the example also falls within the scope of this application.

As described above, the terminal device usually uses a C-DRX technology, to reduce power consumption of the terminal device. Although the power consumption of the terminal device is lower than before by using the C-DRX technology, when the terminal device runs services such as an XR service and a cloud game service, power consumption is still high. Therefore, the power consumption needs to be further reduced. In addition, for another service, the terminal device further needs to be compatible with a previous control mechanism. Therefore, how the terminal device to be compatible with the previous control mechanism when the power consumption of the terminal device is further reduced becomes technical problems to be resolved in this application.

After long-term and in-depth research, the applicants find that services such as the XR service and the cloud game service focus more on transmission reliability of an entire data frame. For example, the XR service focuses more on whether overall transmission of the data frame is completed within specified duration. The specified duration is determined by an application layer. In an encoding/decoding mechanism at the application layer of services such as the XR service and the cloud game service, encoding/decoding is performed in a unit of a data frame. Therefore, this encoding/decoding mechanism determines the specified duration. If a data frame is not completely transmitted within the specified duration, there is a high probability that the entire data frame cannot be decoded.

In addition, the applicants find that, after the terminal device uses the C-DRX technology, regardless of whether Manner 1 or Manner 2 is used, after transmitting a PUSCH in one uplink slot in the uplink manner, the terminal device starts a drx-HARQ-RTT-TimerUL for a hybrid automatic repeat request (Hybrid Automatic Repeat reQuest, HARQ) process corresponding to the PUSCH. The drx-HARQ-RTT-TimerUL indicates processing time from a moment at which the network device receives the PUSCH that is transmitted in the uplink manner to a moment at which the network device schedules retransmission of the PUSCH. When no other timer is started, the terminal device may enter a sleep state at running time of the timer. After the drx-HARQ-RTT-TimerUL expires, the terminal device starts a drx-RetransmissionTimerUL for the HARQ process. In running time of the drx-RetransmissionTimerUL, the terminal device is in a wake-up state, and continuously monitors a control channel. It should be understood that, when the drx-RetransmissionTimerUL and the drx-HARQ-RTT-TimerUL overlap or intersect in terms of time, the terminal device is in the wake-up state, and continuously monitors the control channel.

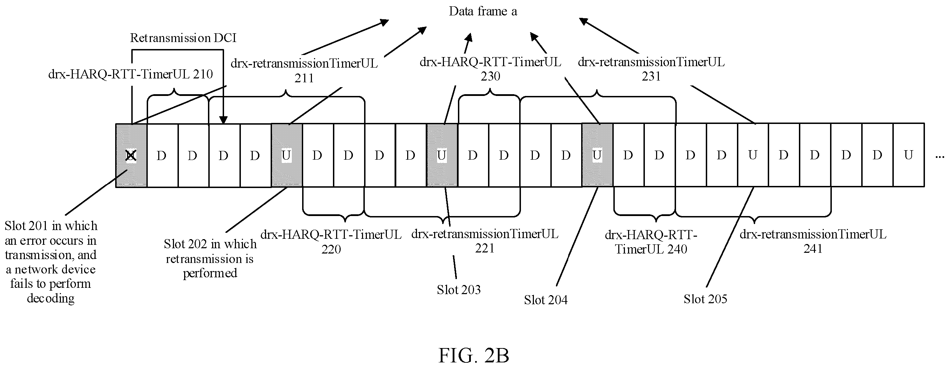

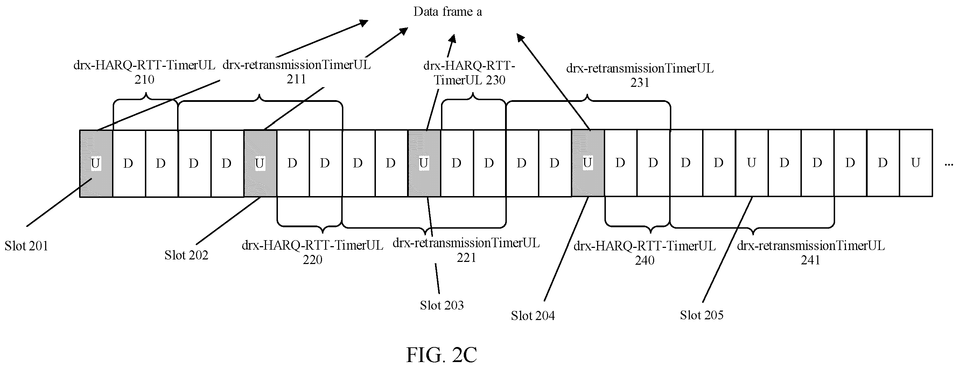

The following uses Manner 1 as an example to describe, with reference to FIG. 2B and FIG. 2C, a case in which retransmission occurs in uplink transmission and a case in which retransmission does not occur in uplink transmission.

As shown in FIG. 2B, in the case in which retransmission occurs, when transmitting the PUSCH frame a to the network device in the uplink manner, the terminal device respectively transmits a PUSCH 1, a PUSCH 2, a PUSCH 3, and a PUSCH 4 in the uplink manner in the slot 201, the slot 202, the slot 203, and the slot 204 in a same CG periodicity. The PUSCH frame a includes the PUSCH 1, the PUSCH 2, the PUSCH 3, and the PUSCH 4. If the network device fails to perform decoding after receiving the PUSCH 1, it indicates that an error occurs in uplink transmission of the PUSCH 1 transmitted in the slot 201. In this case, the terminal device may receive a retransmission PDCCH (for example, retransmission DCI) from the network device after the slot 201. The retransmission PDCCH indicates the terminal device to retransmit the PUSCH 1 in a subsequent slot of the slot 201, for example, the slot 202 (or another slot, for example, the slot 203, the slot 204, or a slot 205, where the slot 202 is used as an example for description herein). For example, a specific indication manner may be performing retransmission in an uplink slot following the 3^{rd} slot after the slot in which the retransmission PDCCH is received. Correspondingly, the terminal device may respectively transmit the PUSCH 1, the PUSCH 2, the PUSCH 3, and the PUSCH 4 in the uplink manner in the slot 202, the slot 203, the slot 204, and the slot 205; after sending the corresponding PUSCHs, respectively start a drx-HARQ-RTT-TimerUL 210, a drx-HARQ-RTT-TimerUL 220, a drx-HARQ-RTT-TimerUL 230, and a drx-HARQ-RTT-TimerUL 240 of corresponding HARQ processes; and after the drx-HARQ-RTT-TimerUL 210, the drx-HARQ-RTT-TimerUL 220, the drx-HARQ-RTT-TimerUL 230, and the drx-HARQ-RTT-TimerUL 240 expire, respectively start a corresponding drx-RetransmissionTimerUL 211, drx-RetransmissionTimerUL 221, drx-RetransmissionTimerUL 231, and drx-RetransmissionTimerUL 241. For example, after transmitting the PUSCH 1 in the slot 202 in the uplink manner, the terminal device starts the drx-HARQ-RTT-TimerUL 210 of the corresponding HARQ process, and starts the corresponding drx-RetransmissionTimerUL 211 after the drx-HARQ-RTT-TimerUL 210 expires.

In the foregoing process, running time of the drx-RetransmissionTimerUL 211 overlaps running time of the drx-HARQ-RTT-TimerUL 220, running time of the drx-RetransmissionTimerUL 221 overlaps running time of the drx-HARQ-RTT-TimerUL 230, and running time of the drx-RetransmissionTimerUL 231 overlaps running time of the drx-HARQ-RTT-TimerUL 240. Consequently, the terminal device is always in a wake-up state or a working state from a 1^{st} slot after the slot 201 to the end of running of the drx-RetransmissionTimerUL 241, and power consumption is high.

As shown in FIG. 2C, in the case in which retransmission does not occur, when transmitting the PUSCH frame a to the network device in the uplink manner, the terminal device respectively transmits the PUSCH 1, the PUSCH 2, the PUSCH 3, and the PUSCH 4 in the uplink manner in the slot 201, the slot 202, the slot 203, and the slot 204 in the same CG periodicity. The PUSCH frame a includes the PUSCH 1, the PUSCH 2, the PUSCH 3, and the PUSCH 4. Similarly, in this process, running time of the drx-RetransmissionTimerUL 211 overlaps running time of the drx-HARQ-RTT-TimerUL 220, running time of the drx-RetransmissionTimerUL 221 overlaps running time of the drx-HARQ-RTT-TimerUL 230, and running time of the drx-RetransmissionTimerUL 231 overlaps running time of the drx-HARQ-RTT-TimerUL 240. Consequently, the terminal device is always in a wake-up state or a working state from a 1^{st} slot after the slot 201 to the end of running of the drx-RetransmissionTimerUL 241, and power consumption is high.

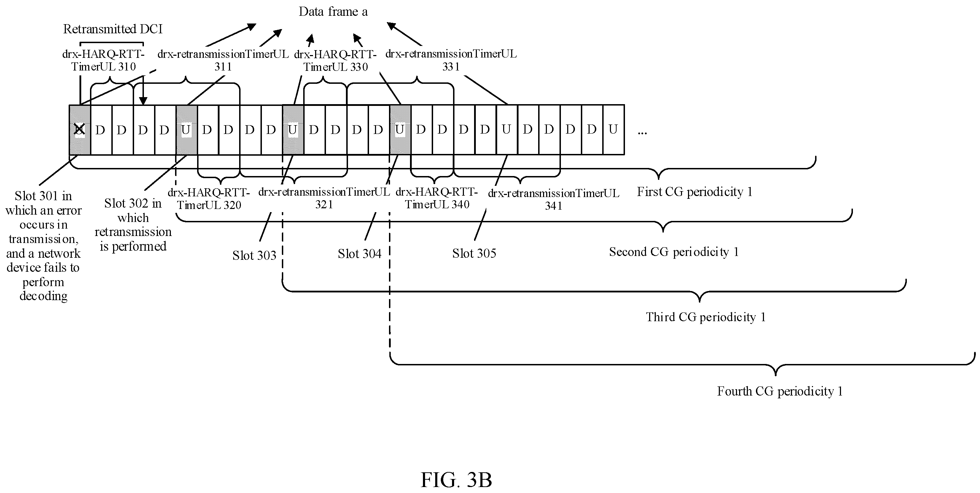

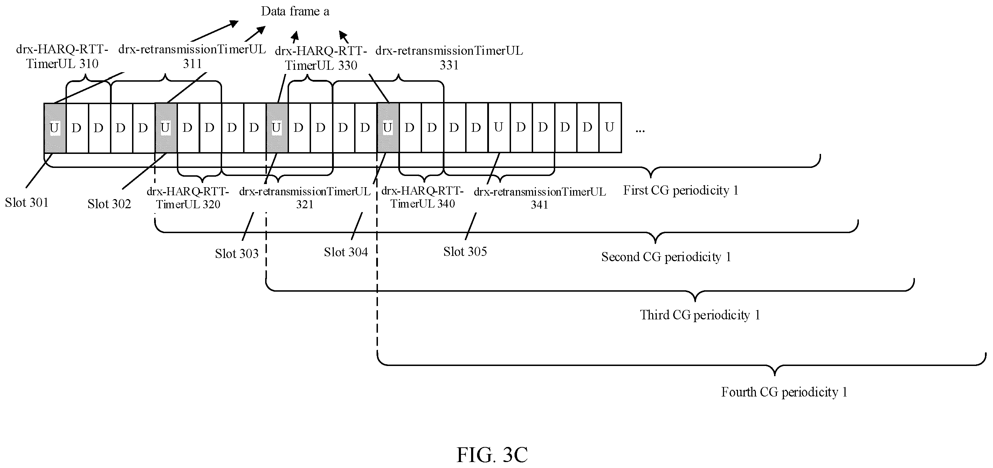

The following uses Manner 2 as an example to describe, with reference to FIG. 3B and FIG. 3C, a case in which retransmission occurs in uplink transmission and a case in which retransmission does not occur in uplink transmission.

As shown in FIG. 3B, in the case in which retransmission occurs, when transmitting the PUSCH frame a to the network device in the uplink manner, the terminal device respectively transmits the PUSCH 1, the PUSCH 2, the PUSCH 3, and the PUSCH 4 in the uplink manner in the slot 301 in the first CG periodicity 1, the slot 302 in the second CG periodicity 1, the slot 303 in the third CG periodicity 1, and the slot 304 in the fourth CG periodicity 1. The PUSCH frame a includes the PUSCH 1, the PUSCH 2, the PUSCH 3, and the PUSCH 4. If the network device fails to perform decoding after receiving the PUSCH 1, it indicates that an error occurs in uplink transmission of the PUSCH 1 transmitted in the slot 301. In this case, the terminal device may receive a retransmission PDCCH (for example, retransmission DCI) from the network device in the slot 301. The retransmission PDCCH indicates the terminal device to retransmit the PUSCH 1 in a subsequent slot of the slot 301, for example, the slot 302 (or another slot, for example, the slot 303, the slot 304, or the slot 305, where the slot 302 is used as an example for description herein) in the second CG periodicity 1. For example, a specific indication manner may be performing retransmission in an uplink slot following the 3^{rd} slot after the slot in which the retransmission PDCCH is received.

For example, the terminal device respectively transmits the PUSCH 1, the PUSCH 2, the PUSCH 3, and the PUSCH 4 in the slot 302, the slot 303, the slot 304, and the slot 305 in the uplink manner. In the foregoing process, running time of a drx-RetransmissionTimerUL 311 overlaps running time of a drx-HARQ-RTT-TimerUL 320, running time of a drx-RetransmissionTimerUL 321 overlaps running time of a drx-HARQ-RTT-TimerUL 330, and running time of a drx-RetransmissionTimerUL 331 overlaps running time of a drx-HARQ-RTT-TimerUL 340. Consequently, the terminal device is always in a wake-up state or a working state from a 1^{st} slot after the slot 301 to the end of running of the drx-RetransmissionTimerUL 341, and power consumption is high.

As shown in FIG. 3C, in the case in which retransmission does not occur, when transmitting the PUSCH frame a to the network device in the uplink manner, the terminal device respectively transmits the PUSCH 1, the PUSCH 2, the PUSCH 3, and the PUSCH 4 in the uplink manner in the slot 301 in the first CG periodicity 1, the slot 302 in the second CG periodicity 1, the slot 303 in the third CG periodicity 1, and the slot 304 in the fourth CG periodicity 1. The PUSCH frame a includes the PUSCH 1, the PUSCH 2, the PUSCH 3, and the PUSCH 4. Similarly, in this process, running time of the drx-RetransmissionTimerUL 311 overlaps running time of the drx-HARQ-RTT-TimerUL 320, running time of the drx-RetransmissionTimerUL 321 overlaps running time of the drx-HARQ-RTT-TimerUL 330, and running time of the drx-RetransmissionTimerUL 331 overlaps running time of the drx-HARQ-RTT-TimerUL 340. Consequently, the terminal device is always in a wake-up state or a working state from a 1^{st} slot after the slot 301 to the end of running of the drx-RetransmissionTimerUL 341, and power consumption is high.

In conclusion, after long-term and in-depth research, the applicants draw the following conclusions: When the terminal device runs services such as the XR service or the cloud game service to perform uplink transmission, regardless of whether Manner 1 or Manner 2 is used, or regardless of whether retransmission occurs or not, the terminal device is always in a wake-up state or a working state from the start of uplink transmission of a PUSCH frame (or a data frame) to the end of the transmission, and the power consumption of the terminal device is high.

It should be understood that, although this application is mainly described by using a slot (for example, the slot 201 or the slot 301) as an example, the slot is merely an example for description, and constitutes no limitation. Each slot in this application may be replaced with a time unit. The time unit includes a slot or a symbol. For example, in 5G NR, one slot includes 14 symbols. A technical solution obtained through replacement also falls within the scope of this application.

Based on the foregoing discovery and conclusions, the applicants provide an uplink transmission method, a terminal device, and a network device, to resolve the foregoing technical problems. The following describes the technical solutions of this application in detail with reference to the accompanying drawings.

First, it should be noted that a drx-HARQ-RTT-TimerUL corresponding to a time unit (for example, a slot or a symbol) in this application may be understood as a drx-HARQ-RTT-TimerUL of a HARQ process corresponding to a physical uplink shared channel PUSCH transmitted in the time unit, that is, a drx-HARQ-RTT-TimerUL that is started in a next adjacent symbol after transmission of the PUSCH is completed. For example, in a CG periodicity, a drx-HARQ-RTT-TimerUL corresponding to an i^{th} uplink slot may be understood as a drx-HARQ-RTT-TimerUL that is started in a next adjacent symbol after transmission of a PUSCH in the i^{th} uplink slot is completed, where the drx-HARQ-RTT-TimerUL is a drx-HARQ-RTT-TimerUL of a HARQ process corresponding to the PUSCH.

Similarly, in this application, a drx-RetransmissionTimerUL corresponding to a time unit (for example, a slot or a symbol) may be understood as a drx-RetransmissionTimerUL of a HARQ process corresponding to a PUSCH transmitted in the time unit, that is, a drx-RetransmissionTimerUL that is started in a next adjacent symbol after a drx-HARQ-RTT-TimerUL of the HARQ process corresponding to the PUSCH expires, where the drx-RetransmissionTimerUL is a drx-RetransmissionTimerUL of the HARQ process corresponding to the drx-HARQ-RTT-TimerUL. For example, in a CG periodicity, a drx-RetransmissionTimerUL corresponding to the i^{th} uplink slot may be understood as a drx-RetransmissionTimerUL that is started in a next adjacent slot after the drx-HARQ-RTT-TimerUL of the HARQ process corresponding to the PUSCH transmitted in the i^{th} uplink slot expires, where the drx-RetransmissionTimerUL is the drx-RetransmissionTimerUL of the HARQ process corresponding to the PUSCH.

In addition, a drx-HARQ-RTT-TimerUL corresponding to a PUSCH in this application may be understood as a drx-HARQ-RTT-TimerUL of a HARQ process corresponding to the PUSCH, that is, a drx-HARQ-RTT-TimerUL that is started in a next adjacent time unit (for example, a slot or a symbol) after transmission of the PUSCH is completed.

Similarly, in this application, a drx-RetransmissionTimerUL corresponding to a PUSCH may be understood as a drx-RetransmissionTimerUL of a HARQ process corresponding to the PUSCH, that is, a drx-RetransmissionTimerUL that is started in a next adjacent symbol after a drx-HARQ-RTT-TimerUL of the HARQ process corresponding to the PUSCH expires, where the drx-RetransmissionTimerUL is a drx-RetransmissionTimerUL of the HARQ process corresponding to the drx-HARQ-RTT-TimerUL.

In other words, in this application, meanings of a drx-HARQ-RTT-TimerUL and a drx-RetransmissionTimerUL corresponding to an uplink slot are respectively the same as meanings of a drx-HARQ-RTT-TimerUL and a drx-RetransmissionTimerUL corresponding to a PUSCH.

### Embodiment 1

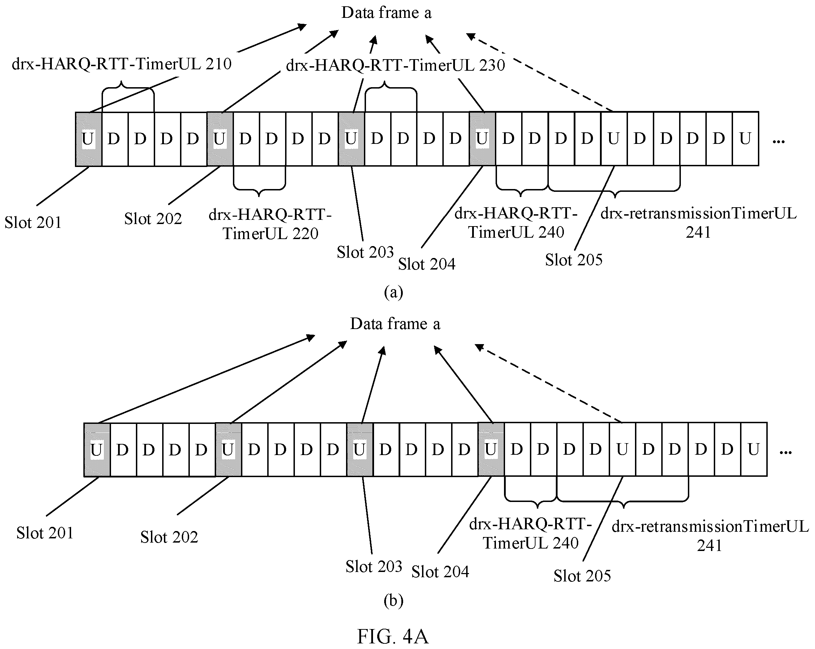

Embodiment 1 relates to FIG. 4A. FIG. 4A is a diagram of Embodiment 1 of an uplink transmission method according to an embodiment of this application. Embodiment 1 includes Implementation 1, Implementation 2, and Implementation 3. Implementation 1 relates to (a) in FIG. 4A, and Implementation 2 relates to (b) in FIG. 4A. Implementation 3 is a further improvement based on Implementation 1 or Implementation 2, and a corresponding accompanying drawing is not shown.

### Implementation 1

In Implementation 1, a network device configures n continuous uplink slots in each CG periodicity for a terminal device, where n is a positive integer greater than 1. For example, n may be obtained based on cg-nrofSlots in ConfiguredGrantConfig in first configuration information. The first configuration information may be sent via RRC signaling sent by the network device to the terminal device. In some cases, the first configuration information may be ConfiguredGrantConfig.

In a same CG periodicity, after a drx-HARQ-RTT-TimerUL corresponding to an i^{th} uplink slot in an (n-m)^{th} uplink slot to a last uplink slot (namely, an n^{th} uplink slot) expires, a drx-RetransmissionTimerUL corresponding to the i^{th} uplink slot is started, where i is any positive integer greater than or equal to n-m and less than or equal to n. In the CG periodicity, after timers drx-HARQ-RTT-TimerUL respectively corresponding to any one or more of a 1^{st} uplink slot to an (n-m-1)^{th} uplink slot expire, timers drx-RetransmissionTimerUL respectively corresponding to the any one or more uplink slots are not started, where m is a non-negative integer less than n-1.

Further, in the CG periodicity, after a drx-HARQ-RTT-TimerUL corresponding to a j^{th} uplink slot in the (n-m)^{th} uplink slot to the last uplink slot (namely, the n^{th} uplink slot) expires, a drx-RetransmissionTimerUL corresponding to the j^{th} uplink slot is started, where j is any positive integer greater than or equal to n-m, less than or equal to n, and not equal to i.

Further, in the CG periodicity, after a drx-HARQ-RTT-TimerUL corresponding to a k^{th} uplink slot in the (n-m)^{th} uplink slot to the last uplink slot (namely, the n^{th} uplink slot) expires, a drx-RetransmissionTimerUL corresponding to the k^{th} uplink slot is started, where k is any positive integer greater than or equal to n-m, less than or equal to n, and not equal to i and j.

Optionally, one or more PUSCHs may be transmitted in one uplink slot, and one or more PUSCHs may also be transmitted in a plurality of uplink slots.

It should be noted that the 1^{st} uplink slot to the last uplink slot are in the same CG periodicity. Sequential numbers of the 1^{st} uplink slot to the last uplink slot in the n continuous uplink slots may be 0, ..., and n-1, or may be 1, ..., and n.

Preferably, m=0. When m=0, after a drx-HARQ-RTT-TimerUL corresponding to an n^{th} uplink slot (namely, a last uplink slot) in a same CG periodicity expires, a drx-RetransmissionTimerUL corresponding to the n^{th} uplink slot is started. In the CG periodicity, after timers drx-HARQ-RTT-TimerUL respectively corresponding to any one or more of a 1^{st} uplink slot to an (n-1)^{th} uplink slot (namely, not the last uplink slot) expire, timers drx-RetransmissionTimerUL respectively corresponding to the any one or more uplink slots are not started.

Preferably, when m=0, after the drx-HARQ-RTT-TimerUL corresponding to the n^{th} uplink slot (namely, the last uplink slot) in the n continuous uplink slots expires, the drx-RetransmissionTimerUL corresponding to the n^{th} uplink slot is started. After a drx-HARQ-RTT-TimerUL corresponding to a non-n^{th} uplink slot (namely, not the last uplink slot) in the n continuous uplink slots expires, a drx-RetransmissionTimerUL corresponding to the non-n^{th} uplink slot is not started.

For example, as shown in (a) in FIG. 4A, the network device configures four continuous uplink slots in each CG periodicity for the terminal device. After a drx-HARQ-RTT-TimerUL 240 corresponding to a last uplink slot (namely, a slot 204) in the four continuous uplink slots expires, a drx-RetransmissionTimerUL 241 corresponding to the slot 204 is started. After a drx-HARQ-RTT-TimerUL 210, a drx-HARQ-RTT-TimerUL 220, and a drx-HARQ-RTT-TimerUL 230 respectively corresponding to non-last uplink slots (namely, a slot 201, a slot 202, and a slot 203) in the four continuous uplink slots expire, timers drx-RetransmissionTimerUL respectively corresponding to the slot 201, the slot 202, and the slot 203 is not started.

It should be noted that the foregoing "drx-HARQ-RTT-TimerUL corresponding to the uplink slot" is actually a drx-HARQ-RTT-TimerUL corresponding to a PUSCH transmitted in the uplink slot, and the foregoing "drx-RetransmissionTimerUL corresponding to the uplink slot" is actually a drx-RetransmissionTimerUL corresponding to a drx-HARQ-RTT-TimerUL after a PUSCH is transmitted in the uplink slot and after the drx-HARQ-RTT-TimerUL corresponding to the PUSCH expires.

It should be noted that, even in (a) in FIG. 4A, if retransmission occurs, for example, data transmitted by the terminal device in an uplink manner in the slot 201 fails to be decoded by the network device, and the data is subsequently retransmitted in the slot 202, a PUSCH frame a is actually transmitted in the slot 201, the slot 202, the slot 203, the slot 204, and a slot 205 (shown by a dashed arrow), and the last uplink slot in the four continuous uplink slots is still the slot 204 instead of the slot 205. In (a) in FIG. 4A, if retransmission does not occur, the last uplink slot in the four continuous uplink slots is the slot 204.

Optionally, a first field (which may also be referred to as a first switch) may be added to the first configuration information sent by the network device to the terminal device. For example, the first configuration information includes ConfiguredGrantConfig, and the first field drx-retransmissionULenabler may be added to ConfiguredGrantConfig. Further, the first configuration information may be ConfiguredGrantConfig.

Optionally, the first configuration information may be sent via RRC signaling.

For example, m=0. When drx-retransmissionULenabler is a first value (for example, 1 or true), after the drx-HARQ-RTT-TimerUL corresponding to the last uplink slot in the n continuous uplink slots expires, the drx-RetransmissionTimerUL corresponding to the last uplink slot is started. After a drx-HARQ-RTT-TimerUL corresponding to a non-last uplink slot in the n continuous uplink slots expires, a drx-RetransmissionTimerUL corresponding to the non-last uplink slot is not started. When drx-retransmissionULenabler is a second value (for example, 0 or false), after a drx-HARQ-RTT-TimerUL corresponding to any one of the n continuous uplink slots expires, a drx-RetransmissionTimerUL corresponding to the any uplink slot is started.

For example, m=0. A specific procedure may be as follows:
(1) If a MAC PDU is sent via a configured uplink grant,
   (2) start a drx-HARQ-RTT-TimerUL of a corresponding HARQ process in a next adjacent symbol after transmission of a corresponding physical uplink shared channel PUSCH ends;
      (3) if the drx-HARQ-RTT-TimerUL expires,
         (4) if drx-retransmissionULenabler is configured for the configured uplink grant, and drx-retransmissionULenabler indicates to start a drx-RetransmissionTimerUL only in a last available transmission opportunity configured for the configured uplink grant,
            (5) if the MAC PDU is transmitted in the last available transmission opportunity within a configured uplink grant periodicity,
               (6) start the drx-RetransmissionTimerUL of the corresponding HARQ process in a next adjacent symbol after the drx-HARQ-RTT-TimerUL expires;
         (4) otherwise,
            (5) start the drx-RetransmissionTimerUL of the corresponding HARQ process in a next adjacent symbol after the drx-HARQ-RTT-TimerUL expires.

The MAC PDU in step 1 is carried in the PUSCH in step 2. The configured uplink grant is a noun. It should be understood that a value of the first field may alternatively be determined based on whether the first field is configured. For example, when the first field (for example, drx-retransmissionULenabler) is not configured in ConfiguredGrantConfig in the first configuration information, that is, the first configuration information received by the terminal device does not include the first field, it may be considered that the first field is of the second value. When the first configuration information received by the terminal device includes the first field, it may be considered that the first field indicates the first value, that is, drx-retransmissionULenabler indicates to start the drx-RetransmissionTimerUL only in the last available transmission opportunity configured for the configured uplink grant. In this case, the descriptions in step 4 of "if drx-retransmissionULenabler is configured for the configured uplink grant, and drx-retransmissionULenabler indicates to start a drx-RetransmissionTimerUL only in a last available transmission opportunity configured for the configured uplink grant" may be replaced with "if drx-retransmissionULenabler is configured for the configured uplink grant".

Alternatively, in another possible manner, in a same CG periodicity, after timers drx-HARQ-RTT-TimerUL respectively corresponding to one or more of the (n-m)^{th} uplink slot to the last uplink slot (namely, the n^{th} uplink slot) expire, timers drx-RetransmissionTimerUL respectively corresponding to the one or more uplink slots are simultaneously started. In the CG periodicity, after timers drx-HARQ-RTT-TimerUL respectively corresponding to any one or more of the 1^{st} uplink slot to the (n-m)^{th} uplink slot expire, timers drx-RetransmissionTimerUL respectively corresponding to the any one or more of the 1^{st} uplink slot to the (n-m-1)^{th} uplink slot are not started, where m is a non-negative integer less than n-1.

For example, m=0. In a same CG periodicity, after the drx-HARQ-RTT-TimerUL corresponding to the n^{th} uplink slot expires, timers drx-RetransmissionTimerUL corresponding to PUSCHs transmitted in the 1^{st} uplink slot to the n^{th} uplink slot are simultaneously started in a next adjacent symbol. Specifically, when m=0, after the PUSCH is transmitted in any one of the 1^{st} uplink slot to the (n-1)^{th} uplink slot in the n uplink slots, the drx-HARQ-RTT-TimerUL of the HARQ process corresponding to the PUSCH is started in the next adjacent symbol of the PUSCH; and after the drx-HARQ-RTT-TimerUL expires, the terminal device does not start the drx-RetransmissionTimerUL corresponding to the HARQ process. After the PUSCH is transmitted in the n^{th} uplink slot in the n uplink slots, the drx-HARQ-RTT-TimerUL of the HARQ process corresponding to the PUSCH is started in the next adjacent symbol of the PUSCH; and after the drx-HARQ-RTT-TimerUL expires, timers drx-RetransmissionTimerUL of HARQ processes corresponding to PUSCHs transmitted in the 1^{st} uplink slot to the n^{th} uplink slot in the n uplink slots are started.

### Implementation 2

In Implementation 2, a network device configures n continuous uplink slots in each CG periodicity for a terminal device, where n is a positive integer greater than 1. For example, n may be obtained based on cg-nrofSlots in ConfiguredGrantConfig in first configuration information. The first configuration information may be sent via RRC signaling sent by the network device to the terminal device.

In a same CG periodicity, after a PUSCH is transmitted in an i^{th} uplink slot in an (n-m)^{th} uplink slot to an n^{th} uplink slot (namely, a last uplink slot) in the n continuous uplink slots, a drx-HARQ-RTT-TimerUL corresponding to the i^{th} uplink slot is started, where i is any positive integer greater than or equal to n-m and less than or equal to n. In the CG periodicity, after PUSCHs are transmitted in any one or more of a 1^{st} uplink slot to an (n-m-1)^{th} uplink slot, timers drx-HARQ-RTT-TimerUL respectively corresponding to the any one or more uplink slots are not started, where m is a non-negative integer less than n-1.

Further, in the CG periodicity, after the PUSCH is transmitted in a j^{th} uplink slot in the (n-m)^{th} uplink slot to the n^{th} uplink slot (namely, the last uplink slot), a drx-HARQ-RTT-TimerUL corresponding to the j^{th} uplink slot is started, where j is any positive integer greater than or equal to n-m, less than or equal to n, and not equal to i.

Further, in the CG periodicity, after the PUSCH is transmitted in a k^{th} uplink slot in the (n-m)^{th} uplink slot to the n^{th} uplink slot (namely, the last uplink slot), a drx-HARQ-RTT-TimerUL corresponding to the k^{th} uplink slot is started, where k is any positive integer greater than or equal to n-m, less than or equal to n, and not equal to i and j.

Further, timers drx-RetransmissionTimerUL respectively corresponding to the PUSCHs transmitted in any one or more of the 1^{st} uplink slot to the (n-m-1)^{th} uplink slot are not started.

Preferably, m=0. When m=0, in a same CG periodicity, after a PUSCH is transmitted in an n^{th} uplink slot (namely, the last uplink slot) in the n continuous uplink slots, a drx-HARQ-RTT-TimerUL corresponding to the n^{th} uplink slot is started. In the CG periodicity, after PUSCHs are transmitted in any one or more of a 1^{st} uplink slot to an (n-1)^{th} uplink slot, timers drx-HARQ-RTT-TimerUL respectively corresponding to the any one or more uplink slots are not started. Further, after the drx-HARQ-RTT-TimerUL corresponding to the n^{th} uplink slot expires, a drx-RetransmissionTimerUL corresponding to the n^{th} uplink slot is started.

Further, after the timers drx-HARQ-RTT-TimerUL respectively corresponding to the any one or more uplink slots are not started, timers drx-RetransmissionTimerUL respectively corresponding to the any one or more uplink slots are not started.

When m=0, in a same CG periodicity, after a PUSCH is transmitted in an uplink manner in a last uplink slot in the n continuous uplink slots, a drx-HARQ-RTT-TimerUL corresponding to the last uplink slot is started. In the CG periodicity, after a PUSCH is transmitted in the uplink manner in a non-last uplink slot in the n continuous uplink slots, a drx-HARQ-RTT-TimerUL respectively corresponding to the non-last uplink slot is not started.

Correspondingly, after the drx-HARQ-RTT-TimerUL corresponding to the last uplink slot expires, the drx-RetransmissionTimerUL corresponding to the last uplink slot is started. After the drx-HARQ-RTT-TimerUL corresponding to the non-last uplink slot expires, the drx-RetransmissionTimerUL corresponding to the non-last uplink slot is not started.

For example, as shown in (b) in FIG. 4A, the network device configures four continuous uplink slots in each CG periodicity for the terminal device. After the PUSCH is transmitted in the uplink manner in the last uplink slot, namely, a slot 204, in the four continuous uplink slots, a drx-HARQ-RTT-TimerUL 240 corresponding to the slot 204 is started. Correspondingly, after the drx-HARQ-RTT-TimerUL 240 expires, a drx-RetransmissionTimerUL 241 corresponding to the slot 204 is started. After PUSCHs are transmitted in the uplink manner in non-last uplink slots, namely, a slot 201, a slot 202, and a slot 203, in the four continuous uplink slots, timers drx-HARQ-RTT-TimerUL respectively corresponding to the slot 201, the slot 202, and the slot 203 are not started.

It should be noted that, even in (b) in FIG. 4A, if retransmission occurs, for example, data transmitted by the terminal device in the slot 201 fails to be decoded by the network device, and the data is subsequently retransmitted in the slot 202, a PUSCH frame a is actually transmitted in the slot 201, the slot 202, the slot 203, the slot 204, and a slot 205 (shown by a dashed arrow in the figure), and the last uplink slot in the four continuous uplink slots is still the slot 204 instead of the slot 205. In (b) in FIG. 4A, if retransmission does not occur, the last uplink slot in the four continuous uplink slots is the slot 204.

Optionally, a first field (which may also be referred to as a first switch) may be added to the first configuration information sent by the network device to the terminal device. For example, the first configuration information includes ConfiguredGrantConfig, and the first field drx-retransmissionULenabler may be added to ConfiguredGrantConfig. Further, the first configuration information may be ConfiguredGrantConfig.

Optionally, the first configuration information may be sent via RRC signaling.

For example, m=0. When drx-retransmissionULenabler is a first value (for example, 1 or true), after the PUSCH is transmitted in the last uplink slot in the n continuous uplink slots, a drx-HARQ-RTT-TimerUL corresponding to the last uplink slot is started. After the PUSCH is transmitted in the non-last uplink slot in the n continuous uplink slots, the drx-HARQ-RTT-TimerUL respectively corresponding to the non-last uplink slot is not started.

For example, m=0. When drx-retransmissionULenabler is a second value (for example, 0 or false), after the PUSCH is transmitted in the uplink manner in any one of the n continuous uplink slots, a drx-HARQ-RTT-TimerUL corresponding to the any uplink slot is started. Correspondingly, after the drx-HARQ-RTT-TimerUL corresponding to the any uplink slot expires, a drx-RetransmissionTimerUL corresponding to the any uplink slot is started.

For example, m=0. A specific procedure may be as follows:
(1) If a MAC PDU is sent via a configured uplink grant,
   (2) if drx-retransmissionULenabler is configured for the configured uplink grant, and drx-retransmissionULenabler indicates to start a drx-HARQ-RTT-TimerUL only in a last available transmission opportunity configured for the configured uplink grant,
      (3) if the MAC PDU is transmitted in the last available transmission opportunity within a configured uplink grant periodicity,
         (4) start a drx-HARQ-RTT-TimerUL of a corresponding HARQ process in a next adjacent symbol after a corresponding physical uplink shared channel PUSCH ends;
   (2) otherwise,
      (3) start a drx-HARQ-RTT-TimerUL of a corresponding HARQ process in a next adjacent symbol after a corresponding physical uplink shared channel PUSCH ends.

The MAC PDU in step 1 is carried in the PUSCH in the foregoing procedure. It should be understood that a value of the first field may alternatively be determined based on whether the first field is configured. For example, when the first field (for example, drx-retransmissionULenabler) is not configured in ConfiguredGrantConfig in the first configuration information, that is, the first configuration information received by the terminal device does not include the first field, it may be considered that the first field is of the second value. When the first configuration information received by the terminal device includes the first field, it may be considered that the first field indicates the first value, that is, drx-retransmissionULenabler indicates to start the drx-HARQ-RTT-TimerUL only in the last available transmission opportunity configured for the configured uplink grant. In this case, the descriptions in step 2 of "if drx-retransmissionULenabler is configured for the configured uplink grant, and drx-retransmissionULenabler indicates to start a drx-HARQ-RTT-TimerUL only in a last available transmission opportunity configured for the configured uplink grant" may be replaced with "if drx-retransmissionULenabler is configured for the configured uplink grant".

Alternatively, in another possible manner, in a same CG periodicity, after the PUSCHs are respectively transmitted in any one or more of the (n-m)^{th} uplink slot to the n^{th} uplink slot (namely, the last uplink slot) in the n continuous uplink slots, timers drx-HARQ-RTT-TimerUL respectively corresponding to the 1^{st} uplink slot to the (n-m)^{th} uplink slot are simultaneously started. In the CG periodicity, after the PUSCHs are transmitted in any one or more of the 1^{st} uplink slot to the (n-m-1)^{th} uplink slot, timers drx-HARQ-RTT-TimerUL respectively corresponding to the any one or more uplink slots are not started. Further, timers drx-RetransmissionTimerUL respectively corresponding to the any one or more uplink slots are not started, where m is a non-negative integer less than n-1.

For example, m=0. In a same CG periodicity, after the PUSCH is transmitted in the n^{th} uplink slot, timers drx-HARQ-RTT-TimerUL corresponding to the 1^{st} uplink slot to the n^{th} uplink slot are started in a next adjacent symbol of the PUSCH. Specifically, when m=0, after the PUSCH is transmitted in any one or more of the 1^{st} uplink slot to the (n-1)^{th} uplink slot in the n uplink slots, the drx-HARQ-RTT-TimerUL of the HARQ process corresponding to the PUSCH is not started in a next symbol adjacent to the any one or more uplink slots, and therefore, a drx-RetransmissionTimerUL of the HARQ process is not started. After the PUSCH is transmitted in the n^{th} uplink slot, timers drx-HARQ-RTT-TimerUL of HARQ processes corresponding to the PUSCHs transmitted in the 1^{st} uplink slot to the n^{th} uplink slot are started in a next adjacent symbol of the PUSCH; and after the drx-HARQ-RTT-TimerUL of each HARQ process expires, a drx-RetransmissionTimerUL of each HARQ process is started in a next symbol.

For example, the drx-retransmissionULenabler signaling shown in Implementation 1 and Implementation 2 may be shown in the bold font as follows:

### ConfiguredGrantConfig information element

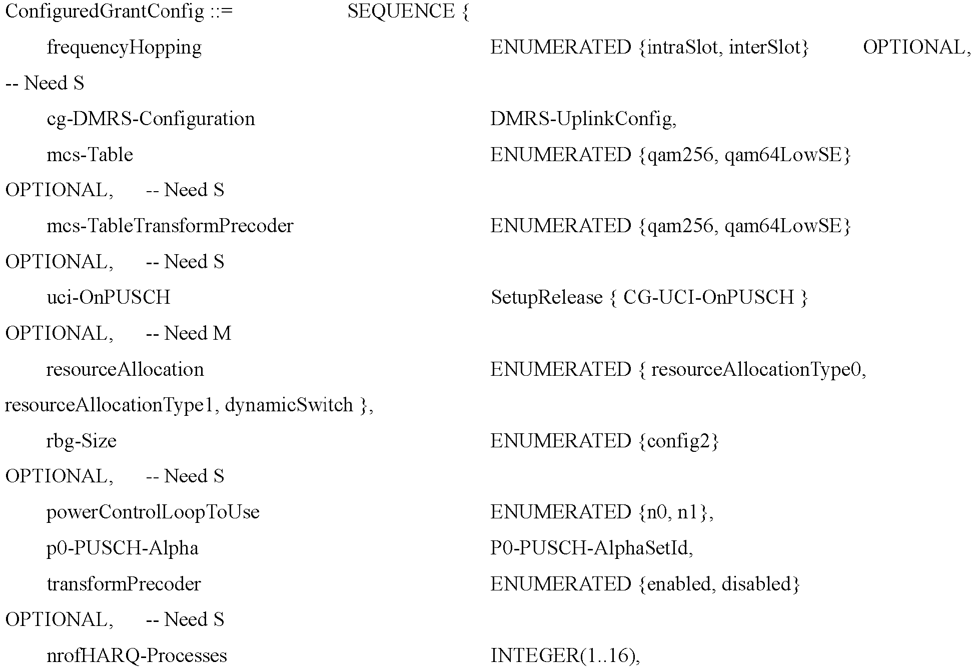

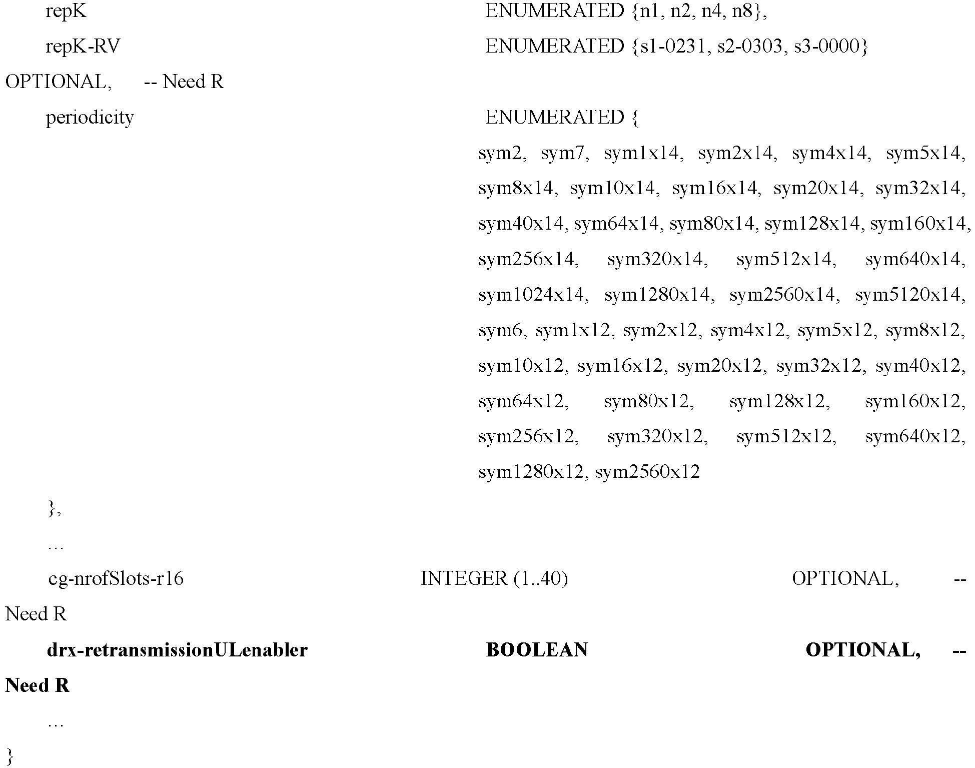

### Implementation 3

Implementation 3 is obtained by further optimizing Implementation 1 or Implementation 2. In Implementation 3, a network device may predetermine a number n of uplink slots that a terminal device needs to transmit a PUSCH, where n is a positive integer. A number of uplink slots that the terminal device actually needs to transmit the PUSCH is k, where k is a positive integer less than or equal to n. The terminal device may notify, by sending third control information (for example, uplink control information (Uplink Control Information, UCI) or a media access control (Media Access Control, MAC) control element (Control Element, CE)) in any one of first k uplink slots (for example, a 1^{st} uplink slot) in the n uplink slots, the network device of the number k of uplink slots that the terminal device actually needs. Then, the network device adjusts n to k. Subsequently, subsequent steps are performed based on the procedure in Implementation 1 or Implementation 2. For example, the network device configures a CG based on first configuration information (for example, ConfiguredGrantConfig), configures a periodicity for the CG based on a periodicity parameter in the first configuration information, and configures, based on cg-nrofSlots signaling in the first configuration information, n=4 continuous uplink slots included in one periodicity for the CG. When transmission of to-be-transmitted data sent by the terminal device in any periodicity of the CG configuration can be completed in only k=3 uplink slots in the four uplink slots, the terminal device may send one piece of third control information (for example, UCI or MAC CE) in a 1^{st} uplink slot in the four uplink slots in the periodicity, to indicate that a number of uplink slots that are actually needed and used is 3. After receiving the third control information, the network device may consider that the number of uplink slots is actually n=k=3, and start to execute the procedure in Implementation 1 or Implementation 2 based on a new value of n.

### Embodiment 2

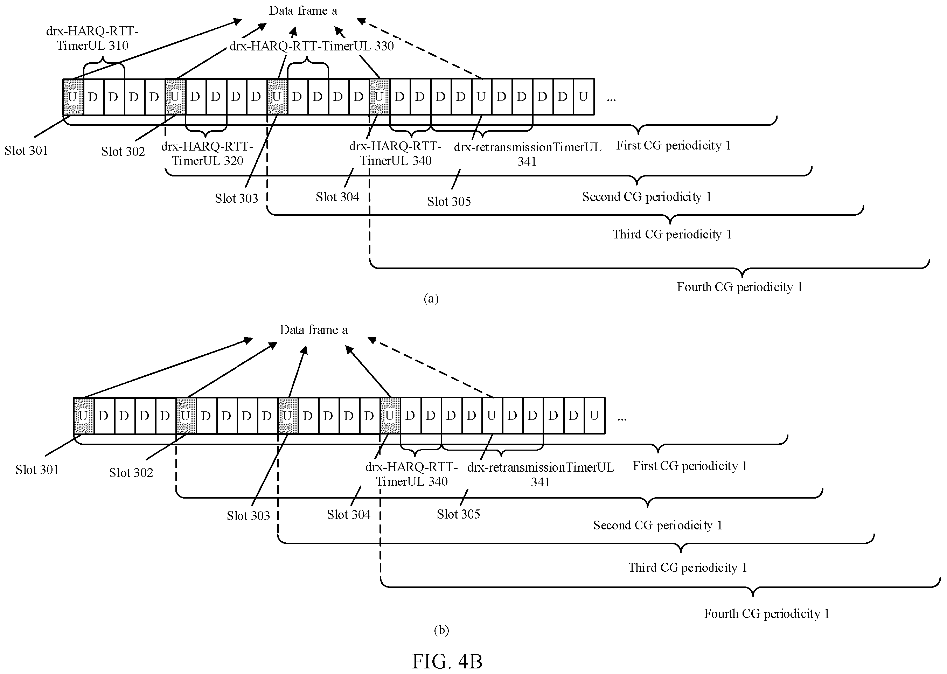

Embodiment 2 relates to FIG. 4B. FIG. 4B is a diagram of Embodiment 2 of an uplink transmission method according to an embodiment of this application. Embodiment 2 includes Implementation 1 and Implementation 2. Implementation 1 relates to (a) in FIG. 4B, and Implementation 2 relates to (b) in FIG. 4B.

In Embodiment 2, a terminal device supports simultaneous running of d CG configurations, where d is a positive integer. A network device configures n CG configurations for the terminal device n times based on first configuration information, where n is a positive integer less than or equal to d. One CG configuration is configured each time, and each CG configuration includes at least one CG periodicity. Any number of uplink slots may be used for uplink transmission in any CG periodicity. Preferably, only one uplink slot is used for uplink transmission in any CG periodicity.

For example, the CG configuration is configured based on the first configuration information sent by the network device to the terminal device. The first configuration information may be sent via RRC signaling sent by the network device to the terminal device. An i^{th} CG configuration includes an i^{th} CG periodicity, and the i^{th} CG periodicity includes an i^{th} CG periodicity 1, an i^{th} CG periodicity 2, ..., and the like. The i^{th} CG configuration indicates any one of the n CG configurations, where i is a positive integer less than or equal to n. For example, when i=1, the i^{th} CG periodicity is a first CG periodicity, and the first CG periodicity includes a first CG periodicity 1, a first CG periodicity 2, ..., and the like. A periodicity combination including a first CG periodicity j, a second CG periodicity j, ..., an i^{th} CG periodicity j, ..., and an n^{th} CG periodicity j is denoted as a j^{th} periodicity group. In this case, the i^{th} CG periodicity j may also be referred to as an i^{th} CG periodicity in the j^{th} group. An uplink slot used for uplink transmission in the i^{th} CG periodicity j (for example, the first CG periodicity 1) is denoted as an uplink slot i j1 (for example, i 11), where j is a positive integer. Periods of different CG periodicities included in a same periodicity group may be the same or may be different. For example, periods of the first CG periodicity 1 and the second CG periodicity 1 may be the same or may be different. Periods of same CG periodicities are the same. For example, periods of the first CG periodicity 1, the first CG periodicity 2, and a first CG periodicity 3 are the same.

### Implementation 1

In Implementation 1, in the j^{th} periodicity group, after timers drx-HARQ-RTT-TimerUL respectively corresponding to uplink data transmitted in one or more of an uplink slot (n-m) j1 in an (n-m)^{th} CG periodicity to an uplink slot n j1 in an n^{th} CG periodicity expire, timers drx-RetransmissionTimerUL respectively corresponding to the one or more uplink slots are started. In the j^{th} periodicity group, after timers drx-HARQ-RTT-TimerUL corresponding to any one or more of an uplink slot 1 j1 used for uplink transmission in the 1^{st} CG periodicity to an uplink slot (n-m-1) j 1 in an (n-m-1)^{th} CG periodicity expire, timers drx-RetransmissionTimerUL respectively corresponding to the any one or more uplink slots are not started, where m is a non-negative integer less than m-1.

Preferably, m=0. When m=0, in the j^{th} periodicity group, after a drx-HARQ-RTT-TimerUL corresponding to the uplink slot n j1 in the n^{th} CG periodicity expires, a drx-RetransmissionTimerUL corresponding to the uplink slot n j1 in the n^{th} CG periodicity is started. In the j^{th} periodicity group, after timers drx-HARQ-RTT-TimerUL corresponding to any one or more of the uplink slot 1 j1 in the 1^{st} CG periodicity to an uplink slot (n-1) j1 in an (n-1)^{th} CG periodicity expire, timers drx-RetransmissionTimerUL respectively corresponding to the any one or more uplink slots are not started.

In other words, in a same periodicity group, after timers drx-HARQ-RTT-TimerUL respectively corresponding to one or more uplink slots used for uplink transmission in the (n-m)^{th} CG periodicity to the n^{th} CG periodicity expire, timers drx-RetransmissionTimerUL respectively corresponding to the one or more uplink slots used for uplink transmission are started. After timers drx-HARQ-RTT-TimerUL respectively corresponding to any one or more uplink slots used for uplink transmission in the 1^{st} CG periodicity to the (n-m-1)^{th} CG periodicity expire, timers drx-RetransmissionTimerUL respectively corresponding to the any one or more uplink slots used for uplink transmission in the 1^{st} CG periodicity to the (n-m-1)^{th} CG periodicity are not started. It should be noted that this is applicable regardless of whether retransmission occurs.

When m=0, in a same periodicity group, after a drx-HARQ-RTT-TimerUL corresponding to an uplink slot used for uplink transmission in the n^{th} CG periodicity expires, a drx-RetransmissionTimerUL corresponding to the uplink slot used for uplink transmission in the n^{th} CG periodicity is started. After a drx-HARQ-RTT-TimerUL corresponding to an uplink slot used for uplink transmission in a non-n^{th} CG periodicity expires, a drx-RetransmissionTimerUL corresponding to the uplink slot used for uplink transmission in the non-n^{th} CG periodicity is not started. It should be noted that this is applicable regardless of whether retransmission occurs.

For example, as shown in (a) in FIG. 4B, the network device configures four CG configurations (namely, n=4) for the terminal device four times. One CG configuration is configured each time, and each CG configuration includes at least one CG periodicity. For example, only one uplink slot is used for uplink transmission in each CG periodicity. It is assumed that j=1, and a first periodicity group includes a first CG periodicity 1, a second CG periodicity 1, a third CG periodicity 1, and a fourth CG periodicity 1. In the first periodicity group, an uplink slot used for uplink transmission in an i^{th} CG periodicity (namely, an i^{th} CG periodicity 1) is denoted as an uplink slot i 11, where i is a positive integer less than or equal to 4. After a drx-HARQ-RTT-TimerUL 340 corresponding to an uplink slot 304 in a 4^{th} CG periodicity (namely, the fourth CG periodicity 1) in the periodicity group expires, a drx-RetransmissionTimerUL 341 corresponding to the uplink slot 304 is started (that is, m=0). After a drx-HARQ-RTT-TimerUL 310, a drx-HARQ-RTT-TimerUL 320, or a drx-HARQ-RTT-TimerUL 330 respectively corresponding to an uplink slot (namely, an uplink slot 301, an uplink slot 302, or an uplink slot 303) used for uplink transmission in a non-4^{th} CG periodicity (namely, the first CG periodicity 1, the second CG periodicity 1, or the third CG periodicity 1) in the periodicity group expires, a drx-RetransmissionTimerUL respectively corresponding to the uplink slot 301, the uplink slot 302, or the uplink slot 303 is not started.

Optionally, a second field (which may also be referred to as a second switch) may be added to the first configuration information sent by the network device to the terminal device. For example, the first configuration information includes ConfiguredGrantConfig, and the second field drx-retransmissionULenabler may be added to ConfiguredGrantConfig. Further, the first configuration information may be ConfiguredGrantConfig. The second field may be the same as or different from the first field.

Optionally, the first configuration information may be sent via RRC signaling.

For example, the network device configures four CG configurations for the terminal device four times based on ConfiguredGrantConfig in the first configuration information, where each ConfiguredGrantConfig includes one second field (which may also be referred to as a second switch), for example, drx-retransmissionULenabler.

If drx-retransmissionULenabler of a CG configuration is a first value (for example, 1 or true), after a drx-HARQ-RTT-TimerUL corresponding to a transmitted PUSCH expires, a corresponding drx-RetransmissionTimerUL is started. If drx-retransmissionULenabler of a CG configuration is a second value (for example, 0 or false), after a drx-HARQ-RTT-TimerUL corresponding to a transmitted PUSCH expires, a corresponding drx-RetransmissionTimerUL is not started.

For example, m=0. The network device sends n pieces of first configuration information to the terminal device, to configure the n CG configurations, where drx-retransmissionULenabler in a 1^{st} piece of first configuration information to an (n-1)^{th} piece of first configuration information is the second value, and drx-retransmissionULenabler in an n^{th} piece of first configuration information is the first value.

For example, m=0. A specific procedure may be as follows:
(1) If a MAC PDU is sent via a configured uplink grant,
   (2) start a drx-HARQ-RTT-TimerUL of a corresponding HARQ process in a next adjacent symbol after a corresponding physical uplink shared channel (physical uplink shared channel) ends;
      (3) if the drx-HARQ-RTT-TimerUL expires,
         (4) if drx-retransmissionULenabler is configured for the configured uplink grant,
            (5) if drx-retransmissionULenabler indicates to start a drx-RetransmissionTimerUL for the configured uplink grant,
               (6) start the drx-RetransmissionTimerUL of the corresponding HARQ process in a next adjacent symbol after the drx-HARQ-RTT-TimerUL expires,
         (4) otherwise,
            (5) start the drx-RetransmissionTimerUL of the corresponding HARQ process in a next adjacent symbol after the drx-HARQ-RTT-TimerUL expires.

The MAC PDU in step 1 is carried in the PUSCH in the foregoing procedure. It should be understood that a value of the second field may alternatively be determined based on whether the second field is configured. For example, when the second field (for example, drx-retransmissionULenabler) is not configured in ConfiguredGrantConfig in the first configuration information, that is, the first configuration information received by the terminal device does not include the second field, it may be considered that the second field is of the first value. When the first configuration information received by the terminal device includes the second field, it may be considered that the second field indicates the second value, that is, drx-retransmissionULenabler indicates to start the drx-RetransmissionTimerUL for the configured uplink grant. In this case, step 5 may be directly deleted, and step 6 is changed to step 5. For example, a specific procedure may be as follows:
(1) If a MAC PDU is sent via a configured uplink grant,
   (2) start a drx-HARQ-RTT-TimerUL of a corresponding HARQ process in a next adjacent symbol after a corresponding physical uplink shared channel (physical uplink shared channel) ends;
      (3) if the drx-HARQ-RTT-TimerUL expires,
         (4) if drx-retransmissionULenabler is not configured for the configured uplink grant,
            (5) start the drx-RetransmissionTimerUL of the corresponding HARQ process in a next adjacent symbol after the drx-HARQ-RTT-TimerUL expires.

### Implementation 2

In Implementation 2, in the j^{th} periodicity group, after PUSCHs are transmitted in the uplink manner in the one or more of the uplink slot (n-m) j1 in the (n-m)^{th} CG periodicity to the uplink slot n j1 in the n^{th} CG periodicity, the timers drx-HARQ-RTT-TimerUL respectively corresponding to the one or more uplink slots are started. After PUSCHs are transmitted in the uplink manner in the any one or more of the uplink slot 1 j1 used for uplink transmission in the 1^{st} CG periodicity to the uplink slot (n-m-1) j1 in the (n-m-1)^{th} CG periodicity, the timers drx-HARQ-RTT-TimerUL respectively corresponding to the any one or more uplink slots are not started, where m is a non-negative integer less than n-1.

Preferably, m=0. When m=0, in the j^{th} periodicity group, after the PUSCH is transmitted in the uplink manner in the uplink slot n j1 in the n^{th} CG periodicity, the drx-RetransmissionTimerUL corresponding to the uplink slot n j1 is started. In the j^{th} periodicity group, after the PUSCHs are transmitted in the uplink manner in any one or more of the uplink slot 1 j1 in the 1^{st} CG periodicity to the uplink slot (n-1) j1 in the (n-1)^{th} CG periodicity, the timers drx-RetransmissionTimerUL respectively corresponding to the any one or more uplink slots are not started.

In other words, in a same periodicity group, after the PUSCHs are transmitted in the uplink manner in one or more uplink slots used for uplink transmission in the (n-m)^{th} CG periodicity to the n^{th} CG periodicity, the timers drx-HARQ-RTT-TimerUL corresponding to the one or more uplink slots used for uplink transmission are started. After the PUSCHs are transmitted in the uplink manner in any one or more uplink slots used for uplink transmission in the 1^{st} CG periodicity to the (n-m-1)^{th} CG periodicity, the timers drx-HARQ-RTT-TimerUL corresponding to the any one or more uplink slots used for uplink transmission are not started. It should be noted that this is applicable regardless of whether retransmission occurs.

Correspondingly, after the timers drx-HARQ-RTT-TimerUL respectively corresponding to the one or more uplink slots used for uplink transmission in the (n-m)^{th} CG periodicity to the n^{th} CG periodicity in the periodicity group expire, the timers drx-RetransmissionTimerUL corresponding to the one or more uplink slots used for uplink transmission in the (n-m)^{th} CG periodicity to the n^{th} CG periodicity are started.

Preferably, when m=0, in a same periodicity group, after the PUSCH is transmitted in the uplink manner in an uplink slot used for uplink transmission in the n^{th} CG periodicity, a drx-HARQ-RTT-TimerUL corresponding to the uplink slot used for uplink transmission in the n^{th} CG periodicity is started. After the PUSCH is transmitted in the uplink manner in an uplink slot used for uplink transmission in a non-n^{th} CG periodicity, a drx-HARQ-RTT-TimerUL corresponding to the uplink slot used for uplink transmission in the non-n^{th} CG periodicity is not started.

Correspondingly, after the drx-HARQ-RTT-TimerUL corresponding to the uplink slot used for uplink transmission in the n^{th} CG periodicity in the periodicity group expires, a drx-RetransmissionTimerUL corresponding to the uplink slot used for uplink transmission in the n^{th} CG periodicity is started. After the drx-HARQ-RTT-TimerUL corresponding to the uplink slot used for uplink transmission in the non-nth CG periodicity expires, a drx-RetransmissionTimerUL corresponding to the uplink slot used for uplink transmission in the non-n^{th} CG periodicity in the periodicity group is not started.

For example, as shown in (b) in FIG. 4B, the terminal device supports simultaneous running of four CG configurations. The network device configures four CG configurations for the terminal device four times. One CG configuration is configured each time, and each CG configuration includes at least one CG periodicity. Only one uplink slot is used for uplink transmission in each CG periodicity. It is assumed that j=1, and a first periodicity group includes a first CG periodicity 1, a second CG periodicity 1, a third CG periodicity 1, and a fourth CG periodicity 1. In the first periodicity group, an uplink slot used for uplink transmission in an i^{th} CG periodicity in the periodicity group is denoted as an uplink slot i 11, where i is a positive integer less than or equal to 4. After a PUSCH is transmitted in the uplink manner in the uplink slot 304 in the 4^{th} CG periodicity (namely, the fourth CG periodicity 1) in the periodicity group, the drx-HARQ-RTT-TimerUL 340 corresponding to the PUSCH transmitted in the uplink slot 304 is started. After a PUSCH is transmitted in the uplink manner in the uplink slot (namely, the uplink slot 301, the uplink slot 302, or the uplink slot 303) used for uplink transmission in the non-4^{th} CG periodicity (namely, the first CG periodicity 1, the second CG periodicity 1, or the third CG periodicity 1) in the periodicity group, a drx-HARQ-RTT-TimerUL respectively corresponding to the PUSCH transmitted in the uplink slot 301, the uplink slot 302, or the uplink slot 303 is not started.

Optionally, a second field (which may also be referred to as a second switch) may be added to the first configuration information sent by the network device to the terminal device. For example, the first configuration information includes ConfiguredGrantConfig, and the second field drx-retransmissionULenabler may be added to ConfiguredGrantConfig. Further, the first configuration information may be ConfiguredGrantConfig.

Optionally, the first configuration information may be sent via RRC signaling.

For example, the network device configures four CG configurations for the terminal device four times based on ConfiguredGrantConfig in the first configuration information, where each ConfiguredGrantConfig includes one second field (which may also be referred to as a second switch), for example, drx-retransmissionULenabler.

If drx-retransmissionULenabler included in a CG configuration is a first value (for example, 1 or true), after a PUSCH is transmitted in an uplink slot corresponding to the CG configuration, the terminal device starts a drx-HARQ-RTT-TimerUL of a HARQ process corresponding to the PUSCH, and after the drx-HARQ-RTT-TimerUL expires, starts a corresponding drx-RetransmissionTimerUL. If drx-retransmissionULenabler of a CG configuration is a second value (for example, 0 or false), after a PUSCH is transmitted in an uplink slot corresponding to the CG configuration, the terminal device does not start a drx-HARQ-RTT-TimerUL of a HARQ process corresponding to the PUSCH, and does not start a corresponding drx-RetransmissionTimerUL.

For example, m=0. The network device sends n pieces of first configuration information to the terminal device, to configure the n CG configurations, where drx-retransmissionULenabler in a 1^{st} piece of first configuration information to an (n-1)^{th} piece of first configuration information is the second value, and drx-retransmissionULenabler in an n^{th} piece of first configuration information is the first value.

For example, m=0. A specific procedure of starting a drx-HARQ-RTT-TimerUL may be as follows:
(1) If a MAC PDU is sent via a configured uplink grant,
   (2) if drx-retransmissionULenabler is configured for the configured uplink grant,
      (3) if drx-retransmissionULenabler indicates to start a drx-HARQ-RTT-TimerUL for the configured uplink grant,
         (4) start a drx-HARQ-RTT-TimerUL of a corresponding HARQ process in a next adjacent symbol after a corresponding physical uplink shared channel PUSCH ends;
   (2) otherwise,
      (3) start a drx-HARQ-RTT-TimerUL of a corresponding HARQ process in a next adjacent symbol after a corresponding physical uplink shared channel PUSCH ends.

The MAC PDU in step 1 is carried in the PUSCH in the foregoing procedure. It should be understood that a value of the second field may alternatively be determined based on whether the second field is configured. For example, when the second field (for example, drx-retransmissionULenabler) is not configured in ConfiguredGrantConfig in the first configuration information, that is, the first configuration information received by the terminal device does not include the second field, it may be considered that the second field is of the first value. When the first configuration information received by the terminal device includes the second field, it may be considered that the second field indicates the second value, that is, drx-retransmissionULenabler indicates to start the drx-RetransmissionTimerUL for the configured uplink grant. In this case, step 5 may be directly deleted, and step 6 is changed to step 5. For example, a specific procedure may be as follows:
(1) If a MAC PDU is sent via a configured uplink grant,
   (2) if drx-retransmissionULenabler is not configured for the configured uplink grant,
      (3) start a drx-HARQ-RTT-TimerUL of a corresponding HARQ process in a next adjacent symbol after a corresponding physical uplink shared channel PUSCH ends.

It should be noted that, in either Implementation 1 or Implementation 2 in this embodiment, drx-retransmissionULenabler may indicate to start a drx-HARQ-RTT-TimerUL or a drx-RetransmissionTimerUL corresponding to a PUSCH transmitted in any CG periodicity, or indicate not to start (for example, disable) a drx-HARQ-RTT-TimerUL or a drx-RetransmissionTimerUL corresponding to a PUSCH transmitted in any CG periodicity.

Optionally, a variation may be further made based on Implementation 1 or Implementation 2 in this embodiment.

For example, after S101 and before S102 shown in FIG. 1A, the network device 200 further sends second configuration information to the terminal device 100. For example, the second configuration information is carried in RRC signaling. The second configuration information includes a BWP-uplinkDedicated information element, and the BWP-uplinkDedicated information element includes association information (for example, cg-drxList). cg-drxList is used to associate different CG configurations. The CG configuration includes a CG periodicity. Different CG configurations include different CG periodicities. Different CG periodicities may be located in a same periodicity group, or may be located in different periodicity groups. When a start sequential number is 1, cg-drxList={CG 1, CG 2, ..., CG i, ..., CG n-m, ..., CG n}, where the CG i indicates an i^{th} CG periodicity. When a start sequential number is 0, cg-drxList={CG 0, CG 1, ..., CG i-1, ..., CG n-m-1, ..., CG n-1}, where the CG i-1 indicates an i^{th} CG periodicity, and m is a non-negative integer less than n-1. For ease of description, the following uses an example in which a start sequential number is 1 for description.

Optionally, for example, m=0. After cg-drxList is configured, a last element (namely, the CG n) in cg-drxList may be obtained. Therefore, after the PUSCH is transmitted in the uplink manner in the uplink slot used for uplink transmission in the n^{th} CG periodicity, the drx-HARQ-RTT-TimerUL corresponding to the uplink slot used for uplink transmission in the n^{th} CG periodicity is started. After the PUSCH is transmitted in the uplink manner in the uplink slot used for uplink transmission in the non-n^{th} CG periodicity, the drx-HARQ-RTT-TimerUL corresponding to the uplink slot used for uplink transmission in the non-n^{th} CG periodicity is not started.

Optionally, for example, m=1. After cg-drxList is configured, last two elements (namely, the CG n-1 and the CG n) in cg-drxList may be obtained. Therefore, after PUSCHs are transmitted in the uplink manner in uplink slots used for uplink transmission in the (n-1)^{th} CG periodicity and the n^{th} CG periodicity, timers drx-HARQ-RTT-TimerUL corresponding to the uplink slots used for uplink transmission in the (n-1)^{th} CG periodicity and the n^{th} CG periodicity are started. After PUSCHs are transmitted in the uplink manner in uplink slots used for uplink transmission in the 1^{st} CG periodicity to the (n-m-1)^{th} CG periodicity, timers drx-HARQ-RTT-TimerUL corresponding to the uplink slots used for uplink transmission in the 1^{st} CG periodicity to the (n-m-1)^{th} CG periodicity are not started.

Optionally, for example, m=0. After cg-drxList is configured, a last element (namely, the CG n) in cg-drxList may be obtained. Therefore, after the drx-HARQ-RTT-TimerUL corresponding to the uplink slot used for uplink transmission in the n^{th} CG periodicity expires, the drx-RetransmissionTimerUL corresponding to the uplink slot used for uplink transmission in the n^{th} CG periodicity is started. After the drx-HARQ-RTT-TimerUL corresponding to the uplink slot used for uplink transmission in the non-n^{th} CG periodicity expires, the drx-RetransmissionTimerUL corresponding to the uplink slot used for uplink transmission in the non-n^{th} CG periodicity is not started.

Optionally, for example, m=1. After cg-drxList is configured, last two elements (namely, the CG n-1 and the CG n) in cg-drxList may be obtained. Therefore, after the timers drx-HARQ-RTT-TimerUL corresponding to the uplink slots used for uplink transmission in the (n-1)^{th} CG periodicity and the n^{th} CG periodicity expire, timers drx-RetransmissionTimerUL corresponding to the uplink slots used for uplink transmission in the (n-1)^{th} CG periodicity and the n^{th} CG periodicity are started. After the timers drx-HARQ-RTT-TimerUL corresponding to the uplink slots used for uplink transmission in the 1^{st} CG periodicity to the (n-m-1)^{th} CG periodicity expire, the timers drx-RetransmissionTimerUL corresponding to the uplink slots used for uplink transmission in the 1^{st} CG periodicity to the (n-m-1)^{th} CG periodicity are not started.

Optionally, for example, m=0. After cg-drxList is configured, it may be queried whether a current CG periodicity corresponds to the last element (namely, the CG n) in cg-drxList. If the current CG periodicity corresponds to the last element in cg-drxList, a drx-HARQ-RTT-TimerUL or a drx-RetransmissionTimerUL corresponding to the n^{th} CG periodicity in cg-drxList is started. If the current CG periodicity does not correspond to the last element in cg-drxList, a drx-HARQ-RTT-TimerUL or a drx-RetransmissionTimerUL corresponding to a non-n^{th} CG periodicity in cg-drxList is not started. For example, m=0. After cg-drxList is configured, a specific procedure of starting only the drx-HARQ-RTT-TimerUL corresponding to the n^{th} CG periodicity in cg-drxList may be as follows:
(1) If a MAC PDU is sent via a configured uplink grant,
   (2) if cg-drxList is configured,
      (3) if the configured uplink grant is a last configured uplink grant in cg-drxList
         (4) start a drx-HARQ-RTT-TimerUL of a corresponding HARQ process in a next adjacent symbol after a corresponding physical uplink shared channel (physical uplink shared channel) ends;
   (2) otherwise,
      (3) start a drx-HARQ-RTT-TimerUL of a corresponding HARQ process in a next adjacent symbol after a corresponding physical uplink shared channel (physical uplink shared channel) ends.

For example, m=0. After cg-drxList is configured, a specific procedure of starting only the drx-HARQ-RTT-TimerUL corresponding to the n^{th} CG periodicity in cg-drxList may be as follows:
(1) If a MAC PDU is sent via a configured uplink grant,
   (2) start a drx-HARQ-RTT-TimerUL of a corresponding HARQ process in a next adjacent symbol after a corresponding physical uplink shared channel (physical uplink shared channel) ends;
      (3) if the drx-HARQ-RTT-TimerUL expires,
         (4) if cg-drxList is configured,
            (5) if the configured uplink grant is a last configured uplink grant in cg-drxList
               (6) start the drx-RetransmissionTimerUL of the corresponding HARQ process in a next adjacent symbol after the drx-HARQ-RTT-TimerUL expires,
         (4) otherwise,
            (5) start the drx-RetransmissionTimerUL of the corresponding HARQ process in a next adjacent symbol after the drx-HARQ-RTT-TimerUL expires.

For example, after S101 and before S102 shown in FIG. 1A, the network device 200 further sends second configuration information to the terminal device 100. For example, the second configuration information is carried in RRC signaling. The second configuration information includes a BWP-uplinkDedicated information element, and the BWP-uplinkDedicated information element includes ConfiguredGrantConfigToAddModList. ConfiguredGrantConfigToAddModList is used to associate different CG configurations. The CG configuration includes a CG periodicity. Different CG configurations may include different CG periodicities. Different CG periodicities may be located in a same periodicity group, or may be located in different periodicity groups. When a start sequential number is 1, ConfiguredGrantConfigToAddModList={CG 1, CG 2, ..., CG i, ..., CG n-m, ..., CG n}, where the CG i indicates an i^{th} CG periodicity. When a start sequential number is 0, ConfiguredGrantConfigToAddModList={CG 0, CG 1, ..., CG i-1, ..., CG n-m-1, ..., CG n-1}, where the CG i-1 indicates an i^{th} CG periodicity, and m is a non-negative integer less than n-1. For ease of description, the following uses an example in which a start sequential number is 1 for description.

Optionally, for example, m=0. After ConfiguredGrantConfigToAddModList is configured, a last element (namely, the CG n) in ConfiguredGrantConfigToAddModList may be obtained. Therefore, after the PUSCH is transmitted in the uplink manner in the uplink slot used for uplink transmission in the n^{th} CG periodicity, the drx-HARQ-RTT-TimerUL corresponding to the uplink slot used for uplink transmission in the n^{th} CG periodicity is started. After the PUSCH is transmitted in the uplink manner in the uplink slot used for uplink transmission in the non-n^{th} CG periodicity, the drx-HARQ-RTT-TimerUL corresponding to the uplink slot used for uplink transmission in the non-n^{th} CG periodicity is not started.

Optionally, for example, m=0. After ConfiguredGrantConfigToAddModList is configured, a last element (namely, the CG n) in ConfiguredGrantConfigToAddModList may be obtained. Therefore, after the drx-HARQ-RTT-TimerUL corresponding to the uplink slot used for uplink transmission in the n^{th} CG periodicity expires, the drx-RetransmissionTimerUL corresponding to the uplink slot used for uplink transmission in the n^{th} CG periodicity is started. After the drx-HARQ-RTT-TimerUL corresponding to the uplink slot used for uplink transmission in the non-n^{th} CG periodicity expires, the drx-RetransmissionTimerUL corresponding to the uplink slot used for uplink transmission in the non-n^{th} CG periodicity is not started.

Optionally, for example, m=0. After configuring ConfiguredGrantConfigToAddModList, the terminal device may be query whether a current CG periodicity corresponds to the last element (namely, the CG n) in ConfiguredGrantConfigToAddModList. If the current CG periodicity corresponds to the last element in ConfiguredGrantConfigToAddModList, a drx-HARQ-RTT-TimerUL or a drx-RetransmissionTimerUL corresponding to the n^{th} CG periodicity in ConfiguredGrantConfigToAddModList is started. If the current CG periodicity does not correspond to the last element in ConfiguredGrantConfigToAddModList, a drx-HARQ-RTT-TimerUL or a drx-RetransmissionTimerUL corresponding to a non-n^{th} CG periodicity in ConfiguredGrantConfigToAddModList is not started.

Specifically, drx-RetransmissionTimerULforLastCG-r18 may be added to the BWP-uplinkDedicated information element for indication.

For example, m=0. When drx-RetransmissionTimerULforLastCG-r18 is a first value (for example, 1 or true), it indicates that:
only after the drx-HARQ-RTT-TimerUL corresponding to the uplink slot used for uplink transmission in the last element in ConfiguredGrantConfigToAddModList expires, a drx-RetransmissionTimerUL corresponding to the uplink slot used for uplink transmission in the last element is started; or
only after a PUSCH is transmitted in the uplink manner in the uplink slot used for uplink transmission in the last element in ConfiguredGrantConfigToAddModList, a drx-HARQ-RTT-TimerUL corresponding to the uplink slot used for uplink transmission in the last element is started.

For example, m=0. When drx-RetransmissionTimerULforLastCG-r18 is a second value (for example, 0), it indicates that:
after a drx-HARQ-RTT-TimerUL corresponding to an uplink slot used for uplink transmission in a non-last element in ConfiguredGrantConfigToAddModList expires, a drx-RetransmissionTimerUL corresponding to the uplink slot used for uplink transmission in the non-last element is not started; or
after a PUSCH is transmitted in the uplink manner in an uplink slot used for uplink transmission in a non-last element in ConfiguredGrantConfigToAddModList, a drx-HARQ-RTT-TimerUL corresponding to the uplink slot used for uplink transmission in the non-last element is not started.

In conclusion, in a same periodicity group, after the timers drx-HARQ-RTT-TimerUL respectively corresponding to one or more uplink slots used for uplink transmission in the (n-m)^{th} CG periodicity to the n^{th} CG periodicity expire, the timers drx-RetransmissionTimerUL respectively corresponding to the one or more uplink slots used for uplink transmission are started. After the timers drx-HARQ-RTT-TimerUL respectively corresponding to any one or more uplink slots used for uplink transmission in the 1^{st} CG periodicity to the (n-m-1)^{th} CG periodicity expire, the timers drx-RetransmissionTimerUL respectively corresponding to the any one or more uplink slots used for uplink transmission are not started.

Alternatively, in a same periodicity group, after the PUSCHs are transmitted in the uplink manner in one or more uplink slots used for uplink transmission in the (n-m)^{th} CG periodicity to the n^{th} CG periodicity, the timers drx-HARQ-RTT-TimerUL corresponding to the one or more uplink slots used for uplink transmission are started. After the PUSCHs are transmitted in the uplink manner in any one or more uplink slots used for uplink transmission in the 1^{st} CG periodicity to the (n-m-1)^{th} CG periodicity, the timers drx-HARQ-RTT-TimerUL corresponding to the any one or more uplink slots used for uplink transmission are not started.

It should be noted that this is applicable regardless of whether retransmission occurs.

In addition, the foregoing conclusion is also applicable to a case of different periodicity groups. Details are not described herein.

### Embodiment 3

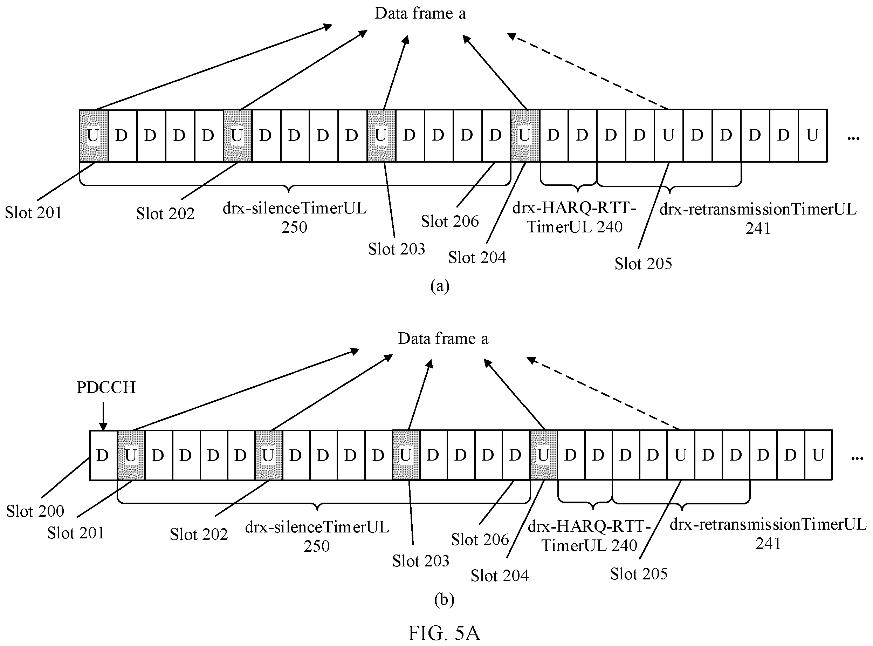

Embodiment 3 relates to FIG. 5A. FIG. 5A is a diagram of Embodiment 3 of an uplink transmission method according to an embodiment of this application. Embodiment 3 includes Implementation 1 and Implementation 2. Implementation 1 relates to (a) in FIG. 5A, and Implementation 2 relates to (b) in FIG. 5A. In Embodiment 3, a drx-silenceTimerUL (which may be referred to as a silence timer) is introduced.

### Implementation 1

In Implementation 1, for example, a start moment and duration of a drx-silenceTimerUL may be configured based on first configuration information. Optionally, the first configuration information is carried in RRC signaling. The first configuration information may further include other configuration information of the drx-silenceTimerUL. A network device may configure n continuous uplink slots in each CG periodicity for a terminal device based on cg-nrofSlots in ConfiguredGrantConfig in first configuration information. The first configuration information may further be used to configure a parameter of the drx-silenceTimerUL (for example, a start moment and duration of the timer, a start moment and an end moment of the timer, or duration and an end moment of the timer). For example, the start moment of the drx-silenceTimerUL may be, by default, a start moment (for example, a moment at which a 1^{st} slot or a 1^{st} symbol in a 1^{st} slot in n slots in one CG periodicity configured based on the first configuration information is located, or a next adjacent slot or a next adjacent symbol in which the terminal device receives the first configuration information) of each periodicity corresponding to the first configuration information. For example, the duration and/or the end moment of the timer may be configured based on the first configuration information. The duration of the timer may be referred to as first duration. A relationship between the end moment, the start moment, and the first duration of the timer is as follows: The end moment is a slot or a symbol corresponding to the start moment after an offset of the first duration.

For example, after the timer is started, the drx-silenceTimerUL covers, in time, slots in a 1^{st} uplink slot to an (n-m)^{th} uplink slot (excluding the (n-m)^{th} uplink slot) in the n continuous uplink slots in each CG periodicity, where m is a non-negative integer less than n-1, and n is a positive integer greater than 1.

Preferably, m=0. The configured drx-silenceTimerUL covers slots in the 1^{st} uplink slot to an n^{th} uplink slot (excluding the n^{th} uplink slot) in the n continuous uplink slots in each CG periodicity.

For example, after the timer is started, the drx-silenceTimerUL covers, in time, the 1^{st} uplink slot to the (n-m-1)^{th} uplink slot (including the (n-m-1)^{th} uplink slot) in the n continuous uplink slots in each CG periodicity, where m is a non-negative integer less than n-1, and n is a positive integer greater than 1.

Preferably, m=0. The configured drx-silenceTimerUL covers the 1^{st} uplink slot to an (n-1)^{th} uplink slot in the n continuous uplink slots in each CG periodicity of the CG configuration.

For example, with reference to (a) in FIG. 5A, a drx-silenceTimerUL 250 may cover a slot 201 to a slot 206. Alternatively, a drx-silenceTimerUL 250 may cover only a slot 201 to a slot 203 (not shown in the figure).

In a time range covered by the drx-silenceTimerUL, after transmitting the PUSCH in the uplink slot covered by the drx-silenceTimerUL, the terminal device does not start a drx-HARQ-RTT-TimerUL corresponding to the PUSCH, and therefore does not start a drx-RetransmissionTimerUL corresponding to the PUSCH. Alternatively, when a time unit (for example, a slot or a symbol) corresponding to expiration of any drx-HARQ-RTT-TimerUL of the terminal device is within a time range covered by the drx-silenceTimerUL, the terminal device does not start a drx-RetransmissionTimerUL of a HARQ process corresponding to the drx-HARQ-RTT-TimerUL. Beyond the time range covered by the drx-silenceTimerUL, a drx-HARQ-RTT-TimerUL or a drx-RetransmissionTimerUL corresponding to a PUSCH transmitted in an uplink slot that is not covered by the drx-silenceTimerUL is not affected by the drx-silenceTimerUL.

For example, m=0. As shown in (a) in FIG. 5A, the time range covered by the drx-silenceTimerUL 250 is from the slot 201 to the slot 206, that is, the slot 201 is a start moment, the slot 206 is an end moment, and the first duration is 15 slots. Timers drx-HARQ-RTT-TimerUL or timers drx-RetransmissionTimerUL corresponding to any one or more uplink slots in the slot 201 to the slot 206 are not started. For example, after the terminal device transmits the PUSCH in the slot 203, because the slot 203 is within the time range covered by the drx-silenceTimerUL, a corresponding drx-HARQ-RTT-TimerUL is not started for the PUSCH. Alternatively, after transmitting the PUSCH in the slot 203, the terminal device starts a corresponding drx-HARQ-RTT-TimerUL for the PUSCH. However, if a moment at which the drx-HARQ-RTT-TimerUL expires is within the time range covered by the drx-silenceTimerUL 250, for example, in a slot between the slot 203 and the slot 206, a corresponding drx-RetransmissionTimerUL of a HARQ process corresponding to the drx-HARQ-RTT-TimerUL is not started. Beyond the slot 201 to the slot 206, for example, in a slot 204 that is not covered by the drx-silenceTimerUL 250, a drx-HARQ-RTT-TimerUL 240 or a drx-RetransmissionTimerUL 241 corresponding to the slot 204 is not affected by the drx-silenceTimerUL 250.

Optionally, the first duration of the drx-silenceTimerUL may be configured based on drx-silenceTimer in the first configuration information.

For example, pseudocode for configuring the first duration of the drx-silenceTimerUL is as follows:

```
drx-silenceTimerUL CHOICE {
           subMilliSeconds INTEGER (1..31),
           milliSeconds ENUMERATED {
   ms1, ms2, ms3, ms4, ms5, ms6, ms8, ms10, ms20,
ms30, ms40, ms50, ms60, ms80, ms100, ms200, ms300,
   ms400, ms500, ms600, ms800, ms1000, ms1200, ms1600,
spare8, spare7, spare6, spare5, spare4, spare3, spare2,
   spare1}
    }
   
```

ms1 indicates that the duration of the drx-silenceTimerUL is 1 millisecond (ms), ms2 indicates that the duration of the drx-silenceTimerUL is 2 ms, and the rest can be educed by analogy.

In conclusion, Implementation 1 in Embodiment 3 provides two solutions:
(1) After the terminal device transmits the PUSCH in a slot, if the slot is within the time range covered by the drx-silenceTimerUL, the drx-HARQ-RTT-TimerUL corresponding to the PUSCH is not started. If the slot is located outside the time range covered by the drx-silenceTimerUL, the drx-HARQ-RTT-TimerUL corresponding to the PUSCH is started.
(2) If the terminal device starts the corresponding drx-HARQ-RTT-TimerUL for the PUSCH after transmitting the PUSCH in a slot, and a moment at which the drx-HARQ-RTT-TimerUL expires is within the time range covered by the drx-silenceTimerUL, the drx-RetransmissionTimerUL corresponding to the drx-HARQ-RTT-TimerUL is not started. If the terminal device starts the corresponding drx-HARQ-RTT-TimerUL for the PUSCH after transmitting the PUSCH in a slot, and a moment at which the drx-HARQ-RTT-TimerUL expires is located outside the time range covered by the drx-silenceTimerUL, the drx-RetransmissionTimerUL corresponding to the drx-HARQ-RTT-TimerUL is started.

During specific implementation, one of the solutions may be selected.

For example, in (a) in FIG. 5A, the drx-silenceTimerUL 250 covers the slot 201 to the slot 206. The network device configures one CG configuration based on the first configuration information, and the CG configuration includes two uplink slots (for example, the slot 201 and the slot 202). In this case, after transmitting PUSCHs in the slot 201 and the slot 202, the terminal device does not start timers drx-HARQ-RTT-TimerUL corresponding to the PUSCHs. Alternatively, after the drx-HARQ-RTT-TimerUL corresponding to the PUSCH transmitted in the slot 201 or the slot 202 expires, if moments corresponding to expiration of the two timers drx-HARQ-RTT-TimerUL are within the time range covered by the drx-silenceTimerUL 250, timers drx-RetransmissionTimerUL corresponding to HARQ processes corresponding to the two timers drx-HARQ-RTT-TimerUL are started. If the terminal device transmits the PUSCH in the slot 203 in another manner, for example, by using a dynamic grant or another CG periodicity (a drx-silenceTimerUL is not configured for a CG configuration corresponding to the CG periodicity), the drx-HARQ-RTT-TimerUL and the drx-RetransmissionTimerUL that correspond to the slot 203 are not affected by the drx-silenceTimerUL.

For example, the start moment of the drx-silenceTimerUL is the 1^{st} uplink slot in the n continuous uplink slots in each CG periodicity, that is, the start moment of the drx-silenceTimerUL is the same as a start moment of each CG periodicity or is located at a start moment of each CG periodicity. Optionally, the end moment of the drx-silenceTimerUL is an adjacent downlink slot before the (n-m)^{th} uplink slot in the n continuous uplink slots in each CG periodicity, where m is a non-negative integer less than n-1, and n is a positive integer greater than 1. Preferably, m=0. Optionally, the end moment of the drx-silenceTimerUL is the (n-m-1)^{th} uplink slot in the n continuous uplink slots in each CG periodicity, where m is a non-negative integer less than n-1, and n is a positive integer greater than 1. Preferably, m=0.

### Implementation 2

In Implementation 2, the terminal device may start the drx-silenceTimerUL according to a first rule or a second rule and received control information. The first rule may be indicated by the first configuration information. The second rule may be indicated by second configuration information or third configuration information.

The first rule is that when the control information is received and the control information indicates to start the drx-silenceTimerUL, a 1^{st} slot in the n continuous uplink slots is the start moment of the drx-silenceTimerUL.

The second rule is that when the control information is received and the control information indicates to start the drx-silenceTimerUL, a slot in which the control information is received, a next slot adjacent to a slot in which the control information is received, or several next slots that are not adjacent to the slot in which the control information is received is the start moment of the drx-silenceTimerUL.

The control information includes a physical downlink control channel (Physical Downlink Control Channel, PDCCH) or a media access control control element MAC CE. The PDCCH includes downlink control information DCI. The following uses the DCI as an example for description.

For example, when the terminal device starts the drx-silenceTimerUL according to the second rule and the control information, a step in which the network device sends the third configuration information to the terminal device is performed after S101 in FIG. 1A and before S101' in FIG. 1A, or performed before S101 in FIG. 1A. The third configuration information may be carried in RRC signaling. A step in which the network device sends the control information to the terminal device may be performed after S101 in FIG. 1A and before S102 in FIG. 1A.

For example, when the terminal device starts the drx-silenceTimerUL according to the first rule and the control information, the control information is the first control information in S101' after S101 in FIG. 1A, and the first control information may be DCI. A third field (for example, a 1-bit field) may be added to the DCI. For example, when the third field is of a first value (for example, 1), the DCI indicates to start the drx-silenceTimerUL. The terminal device starts the drx-silenceTimerUL in the 1^{st} slot in the n continuous uplink slots according to the first rule. When the third field is of a second value (for example, 0), the DCI indicates not to start the drx-silenceTimerUL, and the terminal device does not start the drx-silenceTimerUL.

The first configuration information, the second configuration information, and the third configuration information may further indicate the duration (namely, the first duration) of the drx-silenceTimerUL.

For example, ConfiguredGrantConfig in the first configuration information indicates the duration of the drx-silenceTimerUL. For example, ConfiguredGrantConfig includes signaling indicating the drx-silenceTimerUL.

For example, a BWP-uplinkDedicated information element in the second configuration information indicates the duration of the drx-silenceTimerUL. For example, the BWP-uplinkDedicated information element includes signaling indicating the drx-silenceTimerUL.

For example, DRX-config in the third configuration information indicates the duration of the drx-silenceTimerUL. For example, DRX-config includes signaling indicating the drx-silenceTimerUL.

For example, the network device may further configure a group of values for the drx-silenceTimerUL based on the first configuration information, the second configuration information, or the third configuration information. The group of values may include t values, for example, t=3. In this case, a fourth field (for example, a field greater than or equal to at least 2 bits) may be added to the DCI. For example, the fourth field added to the DCI depends on t, for example, ceil(log₂(t)) or ceil(log₂(t+1)), where ceil() is a round-up operation, and t+1 indicates that the fourth field further indicates not to start the drx-silenceTimerUL. For example, t=3. Three values include V0, V1, and V2 that respectively indicate not to start the drx-silenceTimerUL, duration 1, and duration 2. When the fourth field in the DCI indicates that V0 is selected (for example, the fourth field is 00), the drx-silenceTimerUL is not started. When the fourth field in the DCI indicates that V1 is selected (for example, the fourth field is 01), the drx-silenceTimerUL is started, and the duration of the drx-silenceTimerUL is the duration 1. When the fourth field in the DCI indicates that V2 is selected (for example, the fourth field is 10), the drx-silenceTimerUL is started, and the duration of the drx-silenceTimerUL is the duration 2.

Alternatively, the drx-silenceTimerUL may be started once or periodically. (b) in FIG. 5A shows starting the drx-silenceTimerUL once. As shown in (b) in FIG. 5A, the start moment of the drx-silenceTimerUL 250 is a next slot, namely, a slot 201, adjacent to a slot in which the PDCCH is received. In other words, when the terminal device receives a PDCCH, and the PDCCH is a predetermined value, drx-silenceTimerUL is started in a next slot. Periodically starting the drx-silenceTimerUL is not shown in the figure. In other words, when the terminal device receives a PDCCH, and the PDCCH is a predetermined value, the drx-silenceTimerUL is started in a corresponding slot in each CG periodicity (for example, in a 1^{st} slot in each CG periodicity).

For example, all uplink slots within a time range covered by the started drx-silenceTimerUL are affected. For example, in (b) in FIG. 5A, the terminal device receives one piece of first control information DCI in a slot 200, a start moment of the drx-silenceTimerUL is a next slot, namely, a slot 201, adjacent to the slot in which the DCI is received, and an end moment of the drx-silenceTimerUL is determined as a slot 206 based on the first duration. After a PUSCH is transmitted in an uplink slot (the slot 202 and the slot 203) within the time range covered by the drx-silenceTimerUL, a drx-HARQ-RTT-TimerUL or a drx-RetransmissionTimerUL corresponding to the PUSCH is not started. For example, after transmitting the PUSCH in the slot 202, the terminal device does not start the drx-HARQ-RTT-TimerUL corresponding to the PUSCH. Alternatively, after the drx-HARQ-RTT-TimerUL corresponding to the PUSCH transmitted in the slot 201 expires, and a moment at which the drx-HARQ-RTT-TimerUL expires is within the time range covered by the drx-silenceTimerUL 250, the terminal device does not start the drx-RetransmissionTimerUL corresponding to the PUSCH. One or more of the slot 201, the slot 202, the slot 203, and the slot 204 may be scheduled based on the DCI.

For example, the drx-silenceTimerUL is periodically started each time the terminal device receives one piece of first control information that conforms to the first rule or the second rule. For example, each time the terminal device receives one piece of first control information that conforms to the first rule, the terminal device starts in a 1^{st} uplink slot in each CG periodicity configured based on the first configuration information. The started drx-silenceTimerUL covers the 1^{st} uplink slot to a downlink slot before and adjacent to the (n-m)^{th} uplink slot in the n continuous uplink slots in each CG periodicity of the CG configuration, where m is a non-negative integer less than n-1, and n is a positive integer greater than 1.

Preferably, m=0. The configured drx-silenceTimerUL covers the 1^{st} uplink slot to a downlink slot before and adjacent to the n^{th} uplink slot in the n continuous uplink slots in each CG periodicity.

For example, the drx-silenceTimerUL is periodically started each time the terminal device receives one piece of first control information that conforms to the first rule or the second rule. For example, each time the terminal device receives one piece of first control information that conforms to the first rule, the terminal device starts in a 1^{st} uplink slot in each CG periodicity configured based on the first configuration information. The started drx-silenceTimerUL covers the 1^{st} uplink slot to the (n-m-1)^{th} uplink slot (including the (n-m-1)^{th} uplink slot) in the n continuous uplink slots in each CG periodicity of the CG configuration, where m is a non-negative integer less than n-1, and n is a positive integer greater than 1.

Preferably, m=0. The configured drx-silenceTimerUL covers the 1^{st} uplink slot to the (n-1)^{th} uplink slot (including the (n-1)^{th} uplink slot) in the n continuous uplink slots in each CG periodicity.

A method to implement that the drx-silenceTimerUL covers the 1^{st} slot to the (n-m-1)^{th} slot may be as follows:
The drx-silenceTimerUL covers the 1^{st} slot to the (n-m-1)^{th} slot; or
the drx-silenceTimerUL covers the 1^{st} slot to a slot before and adjacent to the (n-m)^{th} slot; or
the drx-silenceTimerUL covers the 1^{st} slot to a last but one slot in n-m slots; or the like.

Within the time range covered by the drx-silenceTimerUL, timers drx-HARQ-RTT-TimerUL or timers drx-RetransmissionTimerUL corresponding to uplink slots covered by the drx-silenceTimerUL are not started. Beyond the range covered by the drx-silenceTimerUL, a drx-HARQ-RTT-TimerUL or a drx-RetransmissionTimerUL corresponding to an uplink slot that is not covered by the drx-silenceTimerUL is not affected by the drx-silenceTimerUL.

For example, m=0. In (b) in FIG. 5A, the drx-silenceTimerUL 250 covers the slot 201 to the slot 206. Timers drx-HARQ-RTT-TimerUL or timers drx-RetransmissionTimerUL corresponding to any one or more uplink slots in the slot 201 to the slot 206 are not started. Beyond the slot 201 to the slot 206, for example, in the slot 204 that is not covered by the drx-silenceTimerUL 250, the drx-HARQ-RTT-TimerUL 240 or the drx-RetransmissionTimerUL 241 corresponding to the slot 204 is not affected by the drx-silenceTimerUL 250.

For example, m=0. The PDCCH shown in (b) in FIG. 5A may be or may not be associated with one or more of the slot 201, the slot 202, the slot 203, and the slot 204. Alternatively, the PDCCH shown in (b) in FIG. 5A may be a PDCCH used to activate uplink transmission in the slot 201, the slot 202, the slot 203, and the slot 204. Alternatively, the PDCCH shown in (b) in FIG. 5A may indicate uplink transmission in the slot 201, the slot 202, the slot 203, and the slot 204.

### Embodiment 4

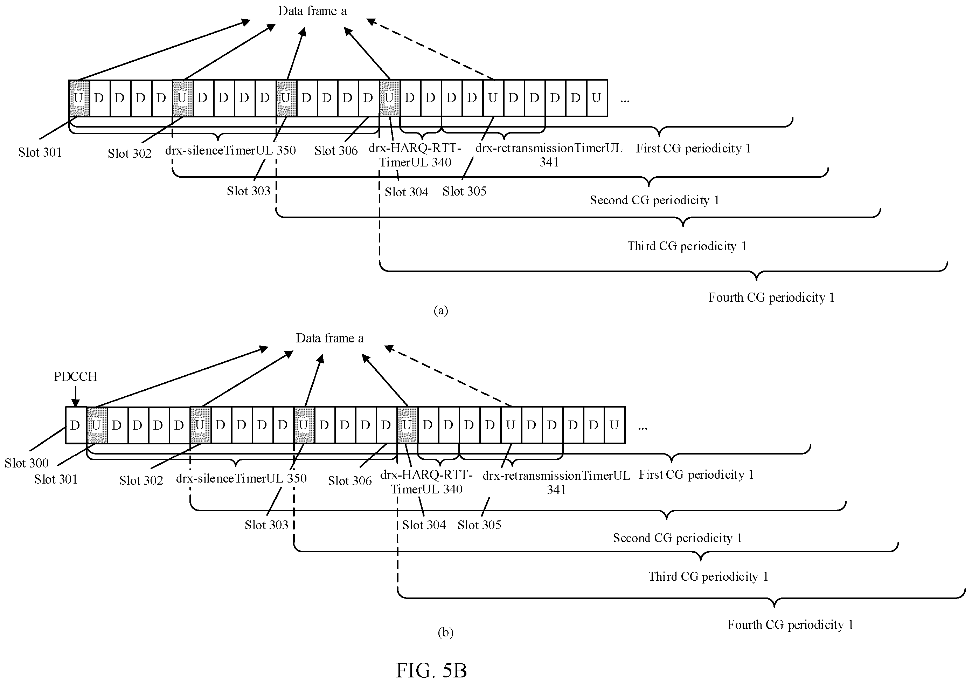

Embodiment 4 relates to FIG. 5B. FIG. 5B is a diagram of Embodiment 4 of an uplink transmission method according to an embodiment of this application. Embodiment 4 includes Implementation 1 and Implementation 2. Implementation 1 relates to (a) in FIG. 5B, and Implementation 2 relates to (b) in FIG. 5B.

In Embodiment 4, a terminal device supports simultaneous running of d CG configurations, where d is a positive integer. A network device configures n CG configurations for the terminal device n times based on first configuration information, where n is a positive integer less than or equal to d. One CG configuration is configured each time, and each CG configuration includes at least one CG periodicity. Any number of uplink slots may be used for uplink transmission in any CG periodicity. Preferably, only one uplink slot is used for uplink transmission in any CG periodicity.

For example, the CG configuration is configured based on the first configuration information sent by the network device to the terminal device. The first configuration information may be sent via RRC signaling sent by the network device to the terminal device. An i^{th} CG configuration includes an i^{th} CG periodicity, and the i^{th} CG periodicity includes an i^{th} CG periodicity 1, an i^{th} CG periodicity 2, ..., and the like. The i^{th} CG configuration indicates any one of the n CG configurations, where i is a positive integer less than or equal to n. For example, when i=1, the i^{th} CG periodicity is a first CG periodicity, and the first CG periodicity includes a first CG periodicity 1, a first CG periodicity 2, ..., and the like. A periodicity combination including a first CG periodicity j, a second CG periodicity j, ..., an i^{th} CG periodicity j, ..., and an n^{th} CG periodicity j is denoted as a j^{th} periodicity group. In this case, the i^{th} CG periodicity j may also be referred to as an i^{th} CG periodicity in the j^{th} group. An uplink slot used for uplink transmission in the i^{th} CG periodicity j (for example, the first CG periodicity 1) is denoted as an uplink slot i j1 (for example, i 11), where j is a positive integer. Periods of different CG periodicities included in a same periodicity group may be the same or may be different. For example, periods of the first CG periodicity 1 and the second CG periodicity 1 may be the same or may be different. Periods of same CG periodicities are the same. For example, periods of the first CG periodicity 1, the first CG periodicity 2, and a first CG periodicity 3 are the same.

### Implementation 1

In Implementation 1, for example, after S101 and before S102 shown in FIG. 1A, the network device 200 further sends second configuration information to the terminal device 100. For example, the second configuration information is carried in RRC signaling. The second configuration information includes a BWP-uplinkDedicated information element, and the BWP-uplinkDedicated information element includes cg-drxList. cg-drxList indicates to associate different CG configurations. The CG configuration includes a CG periodicity. Different CG configurations include different CG periodicities. Different CG periodicities may be located in a same periodicity group, or may be located in different periodicity groups. When a start sequential number is 1, cg-drxList={CG 1, CG 2, ..., CG i, ..., CG n-m, ..., CG n}, where the CG i indicates an i^{th} CG configuration. When a start sequential number is 0, cg-drxList={CG 0, CG 1, ..., CG i-1, ..., CG n-m-1, ..., CG n-1}, where the CG i-1 indicates an i^{th} CG configuration, and m is a non-negative integer less than n-1. For ease of description, the following uses an example in which a start sequential number is 1 for description.

Any element in cg-drxList is associated with another element. cg-drxList includes an i^{th} CG configuration and an a^{th} CG configuration, the i^{th} CG configuration includes an i^{th} CG periodicity, and the i^{th} CG periodicity includes an i^{th} CG periodicity j. The a^{th} CG configuration includes an a^{th} CG periodicity, and the a^{th} CG periodicity includes an a^{th} CG periodicity b, where i, j, a, and b are any positive integers. This association is reflected in that an uplink slot used for uplink transmission in the i^{th} CG periodicity j is within a time range covered by a drx-silenceTimerUL. In this case, in principle, timers drx-HARQ-RTT-TimerUL or timers drx-RetransmissionTimerUL corresponding to uplink slots used for uplink transmission in all CG periodicities included in all CG configurations in cg-drxList are not started. However, if an uplink slot used for uplink transmission in the a^{th} CG periodicity b is located outside the time range covered by the drx-silenceTimerUL, a drx-HARQ-RTT-TimerUL or a drx-RetransmissionTimerUL corresponding to the uplink slot used for uplink transmission in the a^{th} CG periodicity b is started.

For example, m=0 and n=4. In this case, cg-drxList={CG 1, CG 2, CG 3, CG 4}. cg-drxList includes a 1^{st} CG configuration, a 2^{nd} CG configuration, a 3^{rd} CG configuration, and a 4^{th} CG configuration. The 1^{st} CG configuration includes a first CG periodicity, the 2^{nd} CG configuration includes a second CG periodicity, the 3^{rd} CG configuration includes a third CG periodicity, and the 4^{th} CG configuration includes a fourth CG periodicity. In the same periodicity group shown in (a) in FIG. 5B, the first CG periodicity includes a first CG periodicity 1, the second CG periodicity includes a second CG periodicity 1, the third CG periodicity includes a third CG periodicity 1, and the fourth CG periodicity includes a fourth CG periodicity 1. A slot used to transmit a PUSCH in the first CG periodicity 1 is a slot 301, a slot used to transmit a PUSCH in the second CG periodicity 1 is a slot 302, a slot used to transmit a PUSCH in the third CG periodicity 1 is a slot 303, and a slot used to transmit a PUSCH in the fourth CG periodicity 1 is a slot 304.

In (a) in FIG. 5B, in the same periodicity group, after a drx-silenceTimerUL 350 corresponding to the slot 301 used for uplink transmission in the 1^{st} CG periodicity is started, the drx-silenceTimerUL 350 covers the slot 301 to a slot 306. Because the slot 301, the slot 302, and the slot 303 are all within a time range covered by the drx-silenceTimerUL 350, and the slot 304 is not located in the time range covered by the drx-silenceTimerUL 350, timers drx-HARQ-RTT-TimerUL or timers drx-RetransmissionTimerUL respectively corresponding to the slot 301, the slot 302, and the slot 303 are not started, and a drx-HARQ-RTT-TimerUL or a drx-RetransmissionTimerUL corresponding to the slot 304 is started.

Specifically, because the slot 301 is within the time range covered by the drx-silenceTimerUL 350, after transmitting the PUSCH in the slot 301, the terminal device does not start the drx-HARQ-RTT-TimerUL corresponding to the PUSCH. Alternatively, after the terminal device transmits the PUSCH in the slot 301, and a moment at which the drx-HARQ-RTT-TimerUL corresponding to the PUSCH expires is within the time range covered by the drx-silenceTimerUL, the drx-RetransmissionTimerUL corresponding to the drx-HARQ-RTT-TimerUL is not started. Because the slot 304 is located outside the time range covered by the drx-silenceTimerUL 350, after transmitting the PUSCH in the slot 304, the terminal device starts the drx-HARQ-RTT-TimerUL corresponding to the PUSCH. Alternatively, after the terminal device transmits the PUSCH in the slot 304, and a moment at which the drx-HARQ-RTT-TimerUL corresponding to the PUSCH expires is located outside the time range covered by the drx-silenceTimerUL, the drx-RetransmissionTimerUL corresponding to the drx-HARQ-RTT-TimerUL is started.

Optionally, the start moment of the drx-silenceTimerUL may be associated with an element in cg-drxList. For example, the start moment of the drx-silenceTimerUL is associated with an i^{th} element CG i in cg-drxList. The CG i is the i^{th} CG configuration. The i^{th} CG configuration includes an i^{th} CG periodicity. The i^{th} CG periodicity includes an i^{th} CG periodicity 1, an i^{th} CG periodicity 2, ..., an i^{th} CG periodicity j, ..., and the like. A 1^{st} uplink slot used for transmission in the i^{th} CG periodicity j may be the start moment of the drx-silenceTimerUL. Therefore, the drx-silenceTimerUL is periodically started, where j is any positive integer.

Further, a fifth field (for example, a drx-silenceTimerEnabler field) may be set in the first configuration information or the second configuration information. When the fifth field is of a first value (for example, 1 or true), the terminal device performs an operation based on cg-drxList and association between elements in cg-drxList. When the fifth field is of a second value (for example, 0 or false), the terminal device performs an operation according to a previous rule. In other words, there is no association between elements in cg-drxList, or regardless of any CG configuration in cg-drxList, the drx-silenceTimerUL is not started.

The fifth field may be the same as or different from the first field.

### Implementation 2

In Implementation 2, the drx-silenceTimerUL is started through a PDCCH based on Implementation 1. In other words, manners of starting the drx-silenceTimerUL in Implementation 2 and Implementation 1 are different, and remaining parts are the same. In Implementation 2, starting of the drx-silenceTimerUL may be configured through a physical downlink control channel PDCCH. Optionally, the PDCCH includes downlink control information DCI or a media access control (Media Access Control, MAC) control element (Control Element, CE). The following uses the DCI as an example for description.

Optionally, the duration (namely, the first duration) of the drx-silenceTimerUL may be indicated by a drx-silenceTimerUL in the second configuration information. For example, after S101 in FIG. 1A and before S102 in FIG. 1A, the network device sends the second configuration information to the terminal device. The second configuration information is carried in RRC signaling.

For example, in S101' after S101 in FIG. 1A, the first control information is DCI, and the DCI may indicate whether to start the drx-silenceTimerUL. In this case, a sixth field (for example, a 1-bit field) may be added to the DCI. For example, when the sixth field is of a first value (for example, 1), it indicates to start the drx-silenceTimerUL. When the sixth field is of a second value (for example, 0), it indicates not to start the drx-silenceTimerUL. In this case, the duration of the drx-silenceTimerUL is configured based on the second configuration information.

Alternatively, the second configuration information may be further used to configure a group of values for the drx-silenceTimerUL, and the group of values may include t values. For example, t=3. In this case, a seventh field (for example, a field greater than or equal to at least 2 bits) may be added to the DCI. For example, t=3. Three values include V0, V1, and V2 that respectively indicate not to start the drx-silenceTimerUL, duration 1, and duration 2. When the seventh field in the DCI indicates that V0 is selected (for example, the seventh field is 00), the drx-silenceTimerUL is not started. When the seventh field in the DCI indicates that V1 is selected (for example, the seventh field is 01), the drx-silenceTimerUL is started, and the duration of the drx-silenceTimerUL is the duration 1. When the seventh field in the DCI indicates that V2 is selected (for example, the seventh field is 10), the drx-silenceTimerUL is started, and the duration of the drx-silenceTimerUL is the duration 2.

For example, the start moment of the drx-silenceTimerUL may be a time unit in which the terminal device receives the PDCCH, or may be a next time unit or several next time units after the terminal device receives the PDCCH. The time unit may be a slot, or may be a symbol.

For example, the drx-silenceTimerUL indicated by the DCI may take effect on all uplink slots that are of the terminal device that receives the DCI and that are within the time range covered by the drx-silenceTimerUL. For example, (b) in FIG. 5B is used as an example. If DCI or a PDCCH in a slot 300 indicates that a drx-silenceTimerUL is started, a start moment of the drx-silenceTimerUL is the slot 301, and an end moment of the drx-silenceTimerUL is a next downlink slot (not shown in the figure) adjacent to a slot 305. In other words, a time range covered by the drx-silenceTimerUL includes the slot 301, the slot 302, the slot 303, the slot 304, and the slot 305. After transmitting a PUSCH in these slots, the terminal device does not start a drx-HARQ-RTT-TimerUL or a drx-RetransmissionTimerUL corresponding to the PUSCH. For example, after the terminal device transmits the PUSCH in the slot 304, and the slot 304 is within the time range covered by the drx-silenceTimerUL, the terminal device does not trigger a drx-HARQ-RTT-TimerUL of a HARQ process corresponding to the PUSCH. Alternatively, after transmitting the PUSCH in the slot 304, the terminal device starts the drx-HARQ-RTT-TimerUL corresponding to the PUSCH. If a moment at which the drx-HARQ-RTT-TimerUL expires is within the time range covered by the drx-silenceTimerUL, the drx-RetransmissionTimerUL corresponding to the timer is not started.

In an embodiment, the drx-silenceTimerUL that is indicated by the DCI to start takes effect only on a CG configuration activated by the DCI and a CG configuration associated with the DCI. For example, the second configuration information includes a BWP-uplinkDedicated information element, and the BWP-uplinkDedicated information element includes cg-drxList. cg-drxList indicates different CG configurations that are affected by the drx-silenceTimerUL. When a start sequential number is 1, cg-drxList={CG 1, CG 2, ..., CG i, ..., CG n-m}, where the CG i indicates an i^{th} CG periodicity in the CG periodicity group. When a start sequential number is 0, cg-drxList={CG 0, CG 1, ..., CG i-1, ..., CG n-m-1}, where the CG i-1 indicates an i^{th} CG configuration in the CG periodicity group, and m is a non-negative integer less than n-1. For ease of description, the following uses an example in which a start sequential number is 1 for description.

Any element in cg-drxList is associated with another element. This association is reflected in that if any CG configuration activated by the DCI is located in cg-drxList, and the DCI indicates to start or not start the drx-silenceTimerUL, provided that the CG configuration is located in cg-drxList, and an uplink slot used for uplink transmission in the CG configuration in cg-drxList is within the time range covered by the drx-silenceTimerUL, a drx-HARQ-RTT-TimerUL or a drx-RetransmissionTimerUL corresponding to the uplink slot used for uplink transmission in the CG configuration in cg-drxList is started or not started. Otherwise, a drx-HARQ-RTT-TimerUL or a drx-RetransmissionTimerUL corresponding to an uplink slot used for uplink transmission in another CG configuration is started or not started. The start moment of the drx-silenceTimerUL is related to the CG configuration activated by the DCI, that is, the drx-silenceTimerUL is started in the uplink slot corresponding to each periodicity in the CG configuration activated by the DCI. In other words, the drx-silenceTimerUL is periodically started, and a periodicity of the drx-silenceTimerUL is the same as a periodicity of the CG configuration activated by the DCI.

For example, m=0 and n=4. In this case, cg-drxList={CG 1, CG 2, CG 3, CG 4}. In (b) in FIG. 5B, in the same periodicity group, after the drx-silenceTimerUL 350 corresponding to the slot 301 used for uplink transmission in the 1^{st} CG periodicity is started, the 1^{st} CG periodicity, the 2^{nd} CG periodicity, the 3^{rd} CG periodicity, and the 4^{th} CG periodicity are all located in cg-drxList, and the drx-silenceTimerUL 350 covers the slot 301 to the slot 306. Because uplink slots used for uplink transmission in the 2^{nd} CG periodicity and the 3^{rd} CG periodicity are within the time range covered by the drx-silenceTimerUL 350, and an uplink slot used for uplink transmission in the 4^{th} CG periodicity is not within the time range covered by the drx-silenceTimerUL 350, timers drx-HARQ-RTT-TimerUL or timers drx-RetransmissionTimerUL corresponding to the uplink slots used for uplink transmission in the 2^{nd} CG periodicity and the 3^{rd} CG periodicity in cg-drxList are not started, and a drx-HARQ-RTT-TimerUL or a drx-RetransmissionTimerUL corresponding to the uplink slot used for uplink transmission in the 4^{th} CG periodicity in cg-drxList is started.

For example, m=0 and n=4. The PDCCH shown in (b) in FIG. 5B may be or may not be associated with one or more of the slot 301, the slot 302, the slot 303, and the slot 304. Alternatively, the PDCCH shown in (b) in FIG. 5B may be a PDCCH used to activate uplink transmission in the slot 301, the slot 302, the slot 303, and the slot 304.

### Embodiment 5

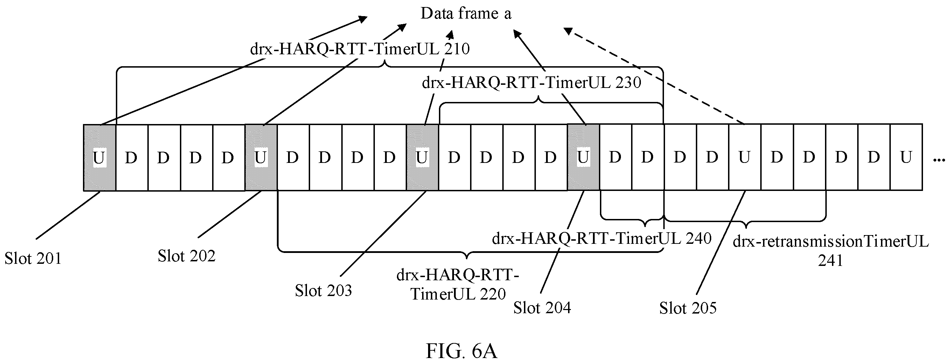

Embodiment 5 relates to FIG. 6A. FIG. 6A is a diagram of Embodiment 5 of an uplink transmission method according to an embodiment of this application.

In Embodiment 5, a network device configures n continuous uplink slots in each CG periodicity for a terminal device (for example, based on first configuration information), where n is a positive integer greater than 1. For example, n may be obtained based on cg-nrofSlots in ConfiguredGrantConfig in the first configuration information. The first configuration information may be carried in RRC signaling.

In a same CG periodicity, the n continuous uplink slots include a 1^{st} uplink slot, a 2^{nd} uplink slot, ..., an i^{th} uplink slot, ..., and an n^{th} uplink slot, where i is a positive integer less than or equal to n. A start moment of a drx-HARQ-RTT-TimerUL corresponding to the i^{th} uplink slot is a next time unit (for example, a slot or a symbol) adjacent to the i^{th} uplink slot in the same CG periodicity. Different timers drx-HARQ-RTT-TimerUL may be respectively configured for the n uplink slots in one CG periodicity, and values of the timers drx-HARQ-RTT-TimerUL may be different. After each drx-HARQ-RTT-TimerUL expires, a corresponding drx-RetransmissionTimerUL is started. FIG. 6A is used as an example. One CG periodicity includes four transmission slots, and transmission may be performed in a slot 201, a slot 202, a slot 203, and a slot 204 respectively. After transmitting a PUSCH in the slot 201, the terminal device starts a drx-HARQ-RTT-TimerUL 210 for the PUSCH, and after the drx-HARQ-RTT-TimerUL 210 expires, starts a corresponding drx-RetransmissionTimerUL in a next adjacent symbol (for example, a 1^{st} symbol in a 3^{rd} downlink slot after the slot 204). Similarly, after transmitting a PUSCH in the slot 202, the terminal device starts a drx-RetransmissionTimerUL 221 for the PUSCH, and after the drx-HARQ-RTT-TimerUL 220 expires, starts a corresponding drx-RetransmissionTimerUL in a next adjacent symbol (for example, the 1^{st} symbol in the 3^{rd} downlink slot after the slot 204). Different timers drx-HARQ-RTT-TimerUL are respectively configured for the n transmission slots in one CG periodicity, so that start moments of the timers drx-RetransmissionTimerUL corresponding to the CG transmission slots in one CG periodicity may be located at a same location or similar locations. This reduces wake-up time of the terminal device.

For example, the drx-HARQ-RTT-TimerUL of each of the n continuous uplink slots in one CG periodicity is properly configured, so that the start moments of the timers drx-RetransmissionTimerUL corresponding to the n slots are located in a same time unit or similar time units. This reduces wake-up time of the terminal device.

Preferably, a start time unit of a drx-HARQ-RTT-TimerUL corresponding to the i^{th} uplink slot in the n continuous uplink slots is a next symbol adjacent to the i^{th} uplink slot in which the PUSCH is transmitted. The time unit includes a slot or a symbol.

Optionally, the content may alternatively be configured by the network device based on the first configuration information or second configuration information. For example, the network device may perform configuration for the terminal device based on first indication information (for example, drx-HarqRttList) in the first configuration information. drx-HarqRttList includes duration T1 of a drx-HARQ-RTT-TimerUL corresponding to the 1^{st} uplink slot, ..., duration Ti of a drx-HARQ-RTT-TimerUL corresponding to the i^{th} uplink slot, ..., and duration Tn of a drx-HARQ-RTT-TimerUL corresponding to the n^{th} uplink slot.

For example, n timers drx-HARQ-RTT-TimerUL are configured based on the first configuration information. When configuring a number of slots in one CG periodicity for the terminal device based on ConfiguredGrantConfig in the first configuration information (specifically, based on a parameter cg-nrofSlots in ConfiguredGrantConfig), the network device may further indicate, based on the first indication information (for example, drx-HarqRttList) in the first configuration information, timers drx-HARQ-RTT-TimerUL corresponding to the n slots, that is, drx-HarqRttList includes n timers drx-HARQ-RTT-TimerUL. In other words, the parameter cg-nrofSlots not only indicates the number of uplink slots in one CG periodicity, but also indicates a number of elements in drx-HarqRttList. A 1^{st} element (namely, a 1^{st} drx-HARQ-RTT-TimerUL) corresponds to a drx-HARQ-RTT-TimerUL corresponding to a 1^{st} slot in the n slots in the CG configuration, a 2^{nd} element (namely, a 2^{nd} drx-HARQ-RTT-TimerUL) corresponds to a drx-HARQ-RTT-TimerUL corresponding to a 2^{nd} slot in the n slots in the CG configuration, and the rest can be deduced by analogy. For example, one CG periodicity includes four slots. When drx-HarqRttList={238, 168, 98, 28}, it indicates that after the terminal device sends the PUSCH in the 1^{st} slot in the CG periodicity, duration of the drx-HARQ-RTT-TimerUL started for a HARQ process corresponding to the PUSCH is 238 symbols. After the drx-HARQ-RTT-TimerUL expires, the terminal device starts a drx-RetransmissionTimerUL in a next adjacent symbol after the drx-HARQ-RTT-TimerUL expires. Similarly, when the terminal device sends the PUSCH in the 2^{nd} slot in the CG periodicity, duration of the corresponding drx-HARQ-RTT-TimerUL started for a HARQ process corresponding to the PUSCH is 168 symbols. After the drx-HARQ-RTT-TimerUL expires, the terminal device starts a drx-RetransmissionTimerUL in a next adjacent symbol after the drx-HARQ-RTT-TimerUL expires. It should be understood that drx-HarqRttList affects only duration of timers drx-HARQ-RTT-TimerUL of different slots in the CG periodicity, and does not affect duration of timers drx-RetransmissionTimerUL corresponding to the timers drx-HARQ-RTT-TimerUL. In this case, the duration of the timers drx-RetransmissionTimerUL may be obtained based on DRX-Config in third configuration information. Alternatively, a number of elements in drx-HarqRttList is n-1, that is, the number of elements in drx-HarqRttList is still determined based on cg-nrofSlots in the first configuration information. A difference between this implementation and the foregoing implementations lies in that n-1 timers drx-HARQ-RTT-TimerUL included in drx-HarqRttList respectively correspond to duration of timers drx-HARQ-RTT-TimerUL respectively corresponding to the 1^{st} slot to an (n-1)^{th} slot in the n slots in one CG periodicity, and duration of the drx-HARQ-RTT-TimerUL corresponding to the n^{th} slot may be determined based on DRX-Config in the third configuration information.

### Implementation 2

In another implementation, DCI does not explicitly indicate a drx-HARQ-RTT-TimerUL corresponding to each slot in one CG periodicity, but carries an eighth field (which may also be referred to as an eighth switch, for example, drx-retransmissionULenabler). When the eighth field is of a first value (for example, 1 or true), it indicates that duration of timers drx-HARQ-RTT-TimerUL corresponding to the 1^{st} slot to the (n-1)^{th} slot in the n slots in each CG periodicity is different. Alternatively, when the eighth field is of a second value, it indicates that timers drx-HARQ-RTT-TimerUL corresponding to the n slots in each CG periodicity are the same. In this case, duration of the timers drx-HARQ-RTT-TimerUL may be obtained based on DRX-Config in the third configuration information. For example, when the eighth field is of a second value (for example, 0 or false), the timers drx-HARQ-RTT-TimerUL corresponding to the 1^{st} slot to the (n-1)^{th} slot in the n slots in one CG periodicity are determined based on a slot location of the slot in the CG periodicity, the number n of slots in the CG periodicity, a number of downlink slots in two adjacent uplink slots (or an uplink/downlink time domain configuration), and the duration of the drx-HARQ-RTT-TimerUL corresponding to the n^{th} slot. For example, the duration of the drx-HARQ-RTT-TimerUL corresponding to the i^{th} uplink slot is Ti = (n - i) * u * s + (n - i - 1) * s + Tn, where n is the number of continuous uplink slots in each CG periodicity configured by the network device, i is a serial number of an uplink slot in the n continuous uplink slots, u is the number of downlink slots in two adjacent uplink slots, s is a number of symbols in each slot, Tn is the duration of the drx-HARQ-RTT-TimerUL corresponding to the n^{th} uplink slot, and Tn may be obtained based on the third configuration information, for example, DRX-Config.

With reference to FIG. 6A, for example, n=4, u=4, s=14, and T4=28. Through calculation, duration of the drx-HARQ-RTT-TimerUL 210 corresponding to the 1^{st} uplink slot 201 is T1 = 17 * 14 = 238 symbols, duration of the drx-HARQ-RTT-TimerUL 220 corresponding to the 2^{nd} uplink slot 202 is T2 = 12 * 14 = 168 symbols, and duration of a drx-HARQ-RTT-TimerUL 230 corresponding to the 3^{rd} uplink slot 203 is T3 = 7 * 14 = 98 symbols, where each slot includes 14 symbols. Duration of a drx-HARQ-RTT-TimerUL 240 corresponding to the 4^{th} uplink slot 204 is T4 = 2 * 14 = 28 symbols.

### Embodiment 6

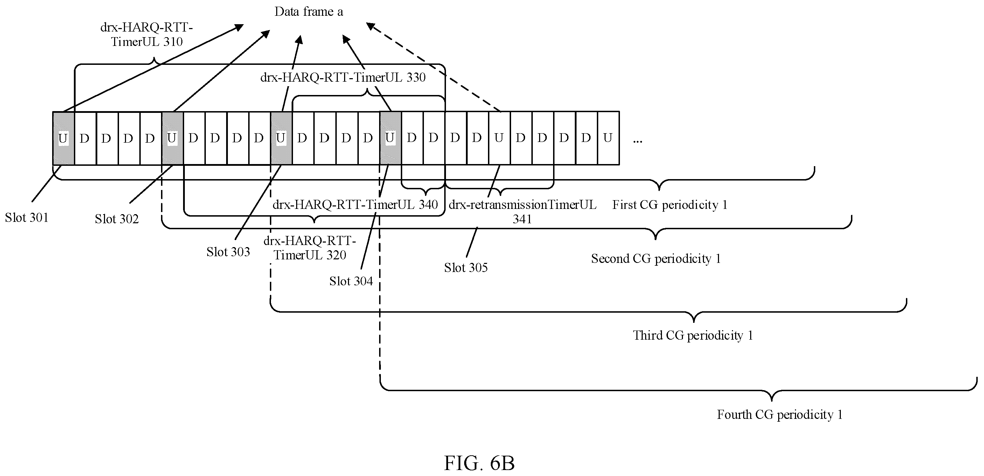

Embodiment 6 relates to FIG. 6B. FIG. 6B is a diagram of Embodiment 6 of an uplink transmission method according to an embodiment of this application.

In Embodiment 6, a terminal device supports simultaneous running of d CG configurations, where d is a positive integer. A network device configures n CG configurations for the terminal device n times based on first configuration information, where n is a positive integer less than or equal to d. One CG configuration is configured each time, and each CG configuration includes at least one CG periodicity. Any number of uplink slots may be used for uplink transmission in any CG periodicity. Preferably, only one uplink slot is used for uplink transmission in any CG periodicity.

For example, the CG configuration is configured based on the first configuration information sent by the network device to the terminal device. The first configuration information may be sent via RRC signaling sent by the network device to the terminal device. An i^{th} CG configuration includes an i^{th} CG periodicity, and the i^{th} CG periodicity includes an i^{th} CG periodicity 1, an i^{th} CG periodicity 2, ..., and the like. The i^{th} CG configuration indicates any one of the n CG configurations, where i is a positive integer less than or equal to n. For example, when i=1, the i^{th} CG periodicity is a first CG periodicity, and the first CG periodicity includes a first CG periodicity 1, a first CG periodicity 2, ..., and the like. A periodicity combination including a first CG periodicity j, a second CG periodicity j, ..., an i^{th} CG periodicity j, ..., and an n^{th} CG periodicity j is denoted as a j^{th} periodicity group. In this case, the i^{th} CG periodicity j may also be referred to as an i^{th} CG periodicity in the j^{th} group. An uplink slot used for uplink transmission in the i^{th} CG periodicity j (for example, the first CG periodicity 1) is denoted as an uplink slot i j 1 (for example, i 11), where j is a positive integer. Periods of different CG periodicities included in a same periodicity group may be the same or may be different. For example, periods of the first CG periodicity 1 and the second CG periodicity 1 may be the same or may be different. Periods of same CG periodicities are the same. For example, periods of the first CG periodicity 1, the first CG periodicity 2, and a first CG periodicity 3 are the same.

In a same periodicity group, for example, in the j^{th} periodicity group, the periodicity group includes the first CG periodicity j, the second CG periodicity j, ..., the i^{th} CG periodicity j, ..., and the n^{th} CG periodicity j. An uplink slot used for uplink transmission in the first CG periodicity j is denoted as a slot 1, ..., an uplink slot used for uplink transmission in the i^{th} CG periodicity j is denoted as a slot i, ..., and an uplink slot used for uplink transmission in the n^{th} CG periodicity j is denoted as a slot n. A drx-HARQ-RTT-TimerUL corresponding to the slot 1 is denoted as a drx-HARQ-RTT-TimerUL 1, ..., a drx-HARQ-RTT-TimerUL corresponding to the slot i is denoted as a drx-HARQ-RTT-TimerUL i, ..., and a drx-HARQ-RTT-TimerUL corresponding to the slot n is denoted as a drx-HARQ-RTT-TimerUL n. A start moment of the drx-HARQ-RTT-TimerUL 1 is a next symbol adjacent to the slot 1 in which the PUSCH transmits, and an end moment of the drx-HARQ-RTT-TimerUL 1 is an end moment of the drx-HARQ-RTT-TimerUL n.

n timers drx-HARQ-RTT-TimerUL are respectively configured for the n CG configurations, so that an end moment of a drx-HARQ-RTT-TimerUL corresponding to an uplink slot used for uplink transmission in the i^{th} CG periodicity may be close to an end moment of a drx-HARQ-RTT-TimerUL corresponding to an uplink slot used for uplink transmission in the n^{th} CG periodicity.

Preferably, the n timers drx-HARQ-RTT-TimerUL are respectively configured for the n CG configurations, so that an end time unit of the drx-HARQ-RTT-TimerUL corresponding to the uplink slot used for uplink transmission in the i^{th} CG periodicity may be an end time unit of the drx-HARQ-RTT-TimerUL corresponding to the uplink slot used for uplink transmission in the n^{th} CG periodicity. The time unit includes a slot or a symbol.

Further, ConfiguredGrantConfig in the first configuration information may be used to configure a ninth field (for example, drx-HARQ-RTT-TimerUL-r18) for each CG configuration in a same periodicity group, to indicate duration of a drx-HARQ-RTT-TimerUL in the CG configuration.

For example, when a ninth field drx-HARQ-RTT-TimerUL-r18 corresponding to the i^{th} CG configuration is a value (for example, 100), after transmitting a PUSCH in the uplink slot in the i^{th} CG periodicity, the terminal device starts a drx-HARQ-RTT-TimerUL of a HARQ process corresponding to the PUSCH in a next adjacent symbol, where duration of the drx-HARQ-RTT-TimerUL is 100 symbols. FIG. 6B is used as an example. Information about a 1^{st} CG configuration may include a ninth field (for example, one piece of drx-HARQ-RTT-TimerUL-r18), and a value of the ninth field is 238, to indicate that after transmitting a PUSCH in an uplink slot in the 1^{st} CG configuration, the terminal device starts a drx-HARQ-RTT-TimerUL whose duration is 238 symbols. Information about a 2^{nd} CG configuration may include a ninth field (for example, one piece of drx-HARQ-RTT-TimerUL-r18), and a value of the ninth field is 168, to indicate that after transmitting a PUSCH in an uplink slot in the 2^{nd} CG configuration, the terminal device starts a drx-HARQ-RTT-TimerUL whose duration is 168 symbols. The rest can be deduced by analogy. In this manner, in the n CG configurations, the end time unit of the drx-HARQ-RTT-TimerUL corresponding to the uplink slot used for uplink transmission in the i^{th} CG periodicity is the end time unit of the drx-HARQ-RTT-TimerUL corresponding to the uplink slot used for uplink transmission in the n^{th} CG periodicity. The time unit includes a slot or a symbol.

During specific configuration, an end moment may not be configured, and only a start moment and duration need to be configured.

Alternatively, the network device may configure at least one piece of drx-HARQ-RTT-TimerULlist and configure an index of each element in drx-HARQ-RTT-TimerULlist in DRX-Config in the third configuration information, where each element in drx-HARQ-RTT-TimerULlist points to duration of a drx-HARQ-RTT-TimerUL corresponding to any one of the n continuous uplink slots or any one of n CG periodicities in a same periodicity group. Correspondingly, the network device configures a specific index in the first configuration information. In this way, duration of a corresponding drx-HARQ-RTT-TimerUL may be provided for any one of the n continuous uplink slots or any one of the n CG periodicities in a same periodicity group based on the specific index, drx-HARQ-RTT-TimerULlist, and the index of each element in drx-HARQ-RTT-TimerULlist.

For example, before S101 in FIG. 1A, the network device sends the third configuration information to the terminal device. The third configuration information is carried in RRC signaling. For example, drx-HARQ-RTT-TimerULlist may be included in DRX-config in RRC signaling.

For example, n=4. drx-HARQ-RTT-TimerULlist={28, 98, 168, 238}, an index 0 of drx-HARQ-RTT-TimerULlist indicates that a 1^{st} element in drx-HARQ-RTT-TimerULlist is 28, an index 1 of drx-HARQ-RTT-TimerULlist indicates that a 2^{nd} element in drx-HARQ-RTT-TimerULlist is 98, an index 2 of drx-HARQ-RTT-TimerULlist indicates that a 3^{rd} element in drx-HARQ-RTT-TimerULlist is 168, and an index 3 of drx-HARQ-RTT-TimerULlist indicates that a 4^{th} element in drx-HARQ-RTT-TimerULlist is 238.

Further, drx-HarqRttList may be further associated with drx-HARQ-RTT-TimerULlist. drx-HarqRttList may be included in the first configuration information. The first configuration information is carried in RRC signaling. For example, n=4. drx-HarqRttList={3, 2, 1, 0}, an element 0 in drx-HarqRttList indicates that the 1^{st} element in drx-HARQ-RTT-TimerULlist is 28, an element 1 in drx-HarqRttList indicates that the 2^{nd} element in drx-HARQ-RTT-TimerULlist is 98, an element 2 in drx-HarqRttList indicates that the 3^{rd} element in drx-HARQ-RTT-TimerULlist is 168, and an element 3 in drx-HarqRttList indicates that the 4^{th} element in drx-HARQ-RTT-TimerULlist is 238.

### Embodiment 7

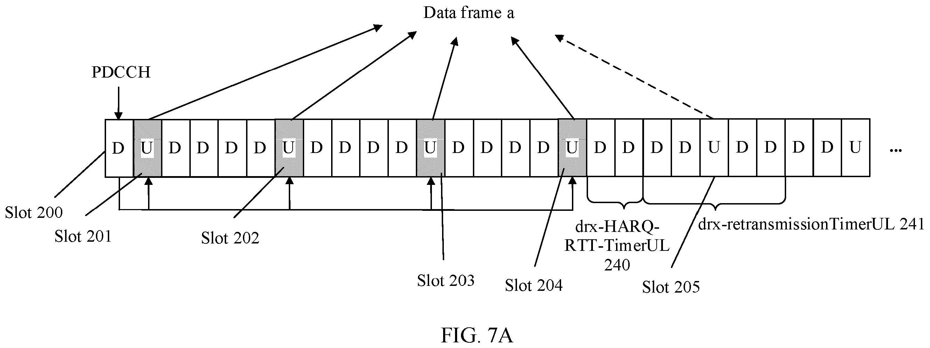

Embodiment 7 relates to FIG. 7A. FIG. 7A is a diagram of Embodiment 7 of an uplink transmission method according to an embodiment of this application. In Embodiment 7, a terminal device receives a PDCCH, where the PDCCH includes DCI. The PDCCH received by the terminal device may indicate to transmit one or more PUSCHs in subsequent uplink slots (transmission of a plurality of PUSCHs may also be referred to as a multi-PUSCH).

The PDCCH includes the downlink control information DCI, and the DCI indicates transmission of n PUSCHs, where n is a positive integer greater than 1, and the n PUSCHs may be n continuous PUSCHs, or may be n discontinuous PUSCHs. An example in which the n PUSCHs are n continuous PUSCHs is used for description.

Specifically, a value of n may be obtained based on fourth configuration information. The terminal device receives the fourth configuration information, for example, a PUSCH-Config information element, sent by the network device, where the fourth configuration information includes an uplink time domain allocation list (pusch-TimeDomainAllocationList). The uplink time domain allocation list includes at least one row index, and each row index indicates a time domain resource of at least one PUSCH, for example, a time domain offset of a PUSCH slot relative to DCI for scheduling the slot. When scheduling the PUSCH based on the DCI, the network device indicates a row index via a time domain resource assignment (Time domain resource assignment, TDRA) field of the DCI, where a value of the row index in the DCI is a row index in the uplink time domain allocation list. In this manner, the DCI may indicate transmission of the at least one PUSCH via the TDRA field. For example, the uplink time domain allocation list of the PUSCH-Config information element in the fourth configuration information includes three rows corresponding to a row index 1 (for example, 1), a row index 2 (for example, 2), and a row index 3 (for example, 3). The row index 1 corresponds to three PUSCHs, the row index 2 corresponds to one PUSCH, and the row index 3 corresponds to four PUSCHs. In this case, when a value of the TDRA field of the DCI corresponds to the row index 1 (for example, the value indicated by the TDRA field plus 1 is equal to the row index 1, for example, the TDRA field indicates "0" that corresponds to the row index "1"), it indicates that the DCI schedules three PUSCHs, and locations of the three PUSCHs relative to the DCI may also be obtained based on the row index 1.

The DCI includes time domain resource configurations of the n continuous PUSCHs, for example, n continuous uplink slot positions corresponding to the n continuous PUSCHs. An uplink slot corresponding to a 1^{st} PUSCH in the n continuous PUSCHs is located after a slot in which the PDCCH is received, may be adjacent to a slot in which the PDCCH is received, or may not be adjacent to a slot in which the PDCCH is received.

In this embodiment, the DCI further indicates the following:
In the n continuous PUSCHs, only after transmission of any one or more of an (n-m)^{th} PUSCH to a last PUSCH (namely, an n^{th} PUSCH) is completed, timers drx-HARQ-RTT-TimerUL corresponding to the any one or more of the (n-m)^{th} PUSCH to the last PUSCH (namely, the n^{th} PUSCH) are started; and after uplink transmission of any one or more of the 1^{st} PUSCH to an (n-m-1)^{th} PUSCH is completed, timers drx-HARQ-RTT-TimerUL corresponding to the any one or more of the 1^{st} PUSCH to the (n-m-1)^{th} PUSCH are not started;
in the n continuous uplink slots, only after PUSCHs are transmitted in an uplink manner in any one or more of an (n-m)^{th} uplink slot to a last uplink slot (namely, an n^{th} uplink slot), timers drx-HARQ-RTT-TimerUL corresponding to the any one or more of the (n-m)^{th} uplink slot to the last uplink slot (namely, the n^{th} uplink slot) are started; and after PUSCHs are transmitted in the uplink manner in any one or more of a 1^{st} uplink slot to an (n-m-1)^{th} uplink slot, timers drx-HARQ-RTT-TimerUL corresponding to the any one or more of the 1^{st} uplink slot to the (n-m-1)^{th} uplink slot are not started; or
in the n continuous uplink slots, only after timers drx-HARQ-RTT-TimerUL corresponding to any one or more of an (n-m)^{th} uplink slot to a last uplink slot (namely, an n^{th} uplink slot) expire, timers drx-RetransmissionTimerUL corresponding to the any one or more of the (n-m)^{th} uplink slot to the last uplink slot (namely, the n^{th} uplink slot) are started; and after timers drx-HARQ-RTT-TimerUL corresponding to any one or more of a 1^{st} uplink slot to an (n-m-1)^{th} uplink slot expire, timers drx-RetransmissionTimerUL corresponding to the any one or more of the 1^{st} uplink slot to the (n-m-1)^{th} uplink slot are not started, where m is a non-negative integer less than n-1.

For example, n=4 and m=0. As shown in FIG. 7A, the terminal device receives a PDCCH in a slot 200, where the PDCCH includes DCI. The DCI indicates the terminal device to transmit four continuous PUSCHs after the slot 200. The four continuous PUSCHs respectively carry a PUSCH 1, a PUSCH 2, a PUSCH 3, and a PUSCH 4, and the PUSCH 1, the PUSCH 2, the PUSCH 3, and the PUSCH 4 form a PUSCH frame a.

The DCI further indicates the following:
In the four continuous uplink slots, only after the PUSCH is transmitted in the uplink manner in a last uplink slot (namely, a 4^{th} uplink slot 204), a drx-HARQ-RTT-TimerUL 240 corresponding to the last uplink slot (namely, the 4^{th} uplink slot 204) is started; and after PUSCHs are transmitted in the uplink manner in a 1^{st} uplink slot 201 to a 3^{rd} uplink slot 203, timers drx-HARQ-RTT-TimerUL corresponding to any one or more of the 1^{st} uplink slot to the 3^{rd} uplink slot are not started; or
in the 4 continuous uplink slots, only after a drx-HARQ-RTT-TimerUL 240 corresponding to a last uplink slot (namely, a 4^{th} uplink slot 204) expires, a drx-RetransmissionTimerUL 241 corresponding to the last uplink slot (namely, the 4^{th} uplink slot 204) is started; and after timers drx-HARQ-RTT-TimerUL corresponding to any one or more of a 1^{st} uplink slot 201 to a 3^{rd} uplink slot 203 expire, timers drx-RetransmissionTimerUL corresponding to the any one or more of the 1^{st} uplink slot 201 to the 3^{rd} uplink slot 203 are not started.

In this way, the terminal device correspondingly performs an operation based on the indication of the DCI. The network device also performs an operation correspondingly.

Further, a tenth field (which may also be referred to as a tenth switch, for example, 1 bit), for example, drx-retransmissionULenabler, is added to the DCI.

When the tenth field is of a first value (for example, 1), the DCI indicates the following:
In the n continuous uplink slots, only after PUSCHs are transmitted in the uplink manner in any one or more of the (n-m)^{th} uplink slot to the last uplink slot (namely, the n^{th} uplink slot), timers drx-HARQ-RTT-TimerUL corresponding to the any one or more of the (n-m)^{th} uplink slot to the last uplink slot (namely, the n^{th} uplink slot) are started; and after PUSCHs are transmitted in the uplink manner in any one or more of the 1^{st} uplink slot to the (n-m-1)^{th} uplink slot, timers drx-HARQ-RTT-TimerUL corresponding to the any one or more of the 1^{st} uplink slot to the (n-m-1)^{th} uplink slot are not started, where for example, when m=0, in n=4 continuous uplink slots, only after the PUSCH is transmitted in the 4^{th} uplink slot, the drx-HARQ-RTT-TimerUL corresponding to the 4^{th} uplink slot is started in a next adjacent symbol; and timers drx-HARQ-RTT-TimerUL corresponding to any one or more of the 1^{st} uplink slot to the 3^{rd} uplink slot in the four continuous uplink slots are not started; or
in the n continuous uplink slots, only after timers drx-HARQ-RTT-TimerUL corresponding to any one or more of the (n-m)^{th} uplink slot to the last uplink slot (namely, the n^{th} uplink slot) expire, timers drx-RetransmissionTimerUL corresponding to the any one or more of the (n-m)^{th} uplink slot to the last uplink slot (namely, the n^{th} uplink slot) are started; and after timers drx-HARQ-RTT-TimerUL corresponding to any one or more of the 1^{st} uplink slot to the (n-m-1)^{th} uplink slot expire, timers drx-RetransmissionTimerUL corresponding to the any one or more of the 1^{st} uplink slot to the (n-m-1)^{th} uplink slot are not started, where for example, when m=0, in n=4 continuous uplink slots, only after the drx-HARQ-RTT-TimerUL corresponding to the 4^{th} uplink slot in which the PUSCH is transmitted expires, a drx-RetransmissionTimerUL corresponding to the PUSCH is started; and after timers drx-HARQ-RTT-TimerUL corresponding to any one or more of the 1^{st} uplink slot to the 3^{rd} uplink slot in the four continuous uplink slots expire, timers drx-RetransmissionTimerUL are not started, where m is a non-negative integer less than n-1.

When the tenth field is of a second value (for example, 0 or false), the DCI indicates the following:
After the PUSCHs are transmitted in the uplink manner in any one or more of the n continuous uplink slots, a drx-HARQ-RTT-TimerUL corresponding to each of the n continuous uplink slots is started; or
after a drx-HARQ-RTT-TimerUL corresponding to any one of the n continuous uplink slots expires, a drx-RetransmissionTimerUL corresponding to the uplink slot is started.

Alternatively, when the tenth field is of a second value (for example, 0 or false), the DCI indicates the following:
After the PUSCH is transmitted in the uplink manner in any one of the n continuous uplink slots, a drx-HARQ-RTT-TimerUL corresponding to the uplink slot is started; or
after a drx-HARQ-RTT-TimerUL corresponding to any one of the n continuous uplink slots expires, a drx-RetransmissionTimerUL corresponding to the uplink slot is started.

In this way, the terminal device correspondingly performs an operation based on the indication of the DCI. The network device also performs an operation correspondingly.

For example, when the tenth field is '1', the DCI indicates that a drx-HARQ-RTT-TimerUL is started only for the last PUSCH (or MAC PDU). A specific procedure may be as follows:
(1) Within active time (active time),
   (2) if a PDCCH indicates uplink transmission,
      (3) if drx-retransmissionULenabler of the PDCCH indicates to start a drx-HARQ-RTT-TimerUL for a last PUSCH of the PDCCH,
         (4) if the PUSCH is the last PUSCH indicated by the PDCCH,
            (5) start the drx-HARQ-RTT-TimerUL of a corresponding HARQ process in a next adjacent symbol after transmission of the PUSCH ends;
      (3) otherwise,
         (4) start the drx-HARQ-RTT-TimerUL of a corresponding HARQ process in a next adjacent symbol after transmission of the PUSCH ends.

Alternatively, for example, when the tenth field is '1', the DCI indicates that a drx-RetransmissionTimerUL is started only for the last PUSCH (or MAC PDU). A specific procedure may be as follows:
(1) Within active time (active time),
   (2) if a PDCCH indicates uplink transmission,
      (3) start the drx-HARQ-RTT-TimerUL of a corresponding HARQ process in a next adjacent symbol after transmission of the PUSCH ends;
         (4) if the drx-HARQ-RTT-TimerUL expires,
            (5) if drx-retransmissionULenabler of the PDCCH indicates to start a drx-RetransmissionTimerUL for a last PUSCH of the PDCCH,
               (6) if the HARQ process corresponding to the drx-HARQ-RTT-TimerUL corresponds to the last PUSCH indicated by the PDCCH,
                  (7) start the drx-RetransmissionTimerUL of the HARQ process in a next adjacent symbol after the drx-HARQ-RTT-TimerUL expires;
            (5) otherwise,
               (6) start the drx-RetransmissionTimerUL of the HARQ process in a next adjacent symbol after the drx-HARQ-RTT-TimerUL expires.

The active time (active time) may be understood as time in which the terminal wakes up to monitor a control channel when configuring DRX. Uplink transmission indicated by the PDCCH may be understood as that the PDCCH indicates at least one PUSCH.

Alternatively, the starting a drx-RetransmissionTimerUL for a last PUSCH may be understood as that after transmitting the PUSCH in the last slot indicated by the DCI, the terminal device starts the drx-HARQ-RTT-TimerUL of the HARQ process corresponding to the PUSCH, and after the drx-HARQ-RTT-TimerUL expires, starts the drx-RetransmissionTimerUL of the HARQ process corresponding to the PUSCH in a next adjacent symbol; or may be understood as that after transmitting the PUSCH in the last slot indicated by the DCI, the terminal device starts timers drx-HARQ-RTT-TimerUL of HARQ processes corresponding to all PUSCHs indicated by the DCI, and after each of the timers drx-HARQ-RTT-TimerUL expires, respectively starts timers drx-RetransmissionTimerUL corresponding to all the PUSCHs in a next adjacent symbol.

It should be noted that, in Embodiment 7, because the PDCCH includes the DCI, "the DCI indicates" may be understood as "the PDCCH indicates", and "the DCI further indicates" may be understood as "the PDCCH further indicates".

Optionally, the network device sends the fourth configuration information to the terminal device. The network device may send the fourth configuration information to the terminal device via RRC signaling. The fourth configuration information may be PUSCH-Config information in the RRC signaling, and the information is used to configure an uplink transmission parameter of the terminal device. drx-retransmissionULenabler may also be configured in the fourth configuration information, and does not need to be configured in the DCI, that is, does not need to be configured in the PDCCH.

For example, when the tenth field is '1', the DCI indicates that a drx-RetransmissionTimerUL is started only for the last PUSCH (or MAC PDU). A specific procedure may be as follows:
(1) Within active time (active time),
   (2) if a PDCCH indicates uplink transmission,
      (3) start the drx-HARQ-RTT-TimerUL of a corresponding HARQ process in a next adjacent symbol after transmission of the PUSCH ends;
         (4) if the drx-HARQ-RTT-TimerUL expires,
            (5) if drx-retransmissionULenabler is configured,
               (6) if drx-retransmissionULenabler indicates to start a drx-RetransmissionTimerUL for a last PUSCH of the PDCCH,
                  (7) if the HARQ process corresponding to the drx-HARQ-RTT-TimerUL corresponds to the last PUSCH indicated by the PDCCH,
                     (8) start the drx-RetransmissionTimerUL of the HARQ process in a next adjacent symbol after the drx-HARQ-RTT-TimerUL expires;
            (5) otherwise,
               (6) start the drx-RetransmissionTimerUL of the HARQ process in a next adjacent symbol after the drx-HARQ-RTT-TimerUL expires.

Alternatively, before S201 in FIG. 1B, the network device may further send the fourth configuration information to the terminal device. The network device may send the fourth configuration information to the terminal device via RRC signaling. The fourth configuration information includes an eleventh field (which may also be referred to as an eleventh switch), for example, drx-retransmissionULenabler, located in PUSCH-config.

When the eleventh field is of a first value (for example, 1), the fourth configuration information indicates the following:
In the n continuous uplink slots, only after PUSCHs are transmitted in the uplink manner in any one or more of the (n-m)^{th} uplink slot to the last uplink slot (namely, the n^{th} uplink slot), timers drx-HARQ-RTT-TimerUL corresponding to the any one or more of the (n-m)^{th} uplink slot to the last uplink slot (namely, the n^{th} uplink slot) are started; and after PUSCHs are transmitted in the uplink manner in any one or more of the 1^{st} uplink slot to the (n-m-1)^{th} uplink slot, timers drx-HARQ-RTT-TimerUL corresponding to the any one or more of the 1^{st} uplink slot to the (n-m-1)^{th} uplink slot are not started, where for example, when m=0, in n=4 continuous uplink slots, only after the PUSCH is transmitted in the 4^{th} uplink slot, the drx-HARQ-RTT-TimerUL corresponding to the 4^{th} uplink slot is started in a next adjacent symbol; and timers drx-HARQ-RTT-TimerUL corresponding to any one or more of the 1^{st} uplink slot to the 3^{rd} uplink slot in the four continuous uplink slots are not started; or
in the n continuous uplink slots, only after timers drx-HARQ-RTT-TimerUL corresponding to any one or more of the (n-m)^{th} uplink slot to the last uplink slot (namely, the n^{th} uplink slot) expire, timers drx-RetransmissionTimerUL corresponding to the any one or more of the (n-m)^{th} uplink slot to the last uplink slot (namely, the n^{th} uplink slot) are started; and after timers drx-HARQ-RTT-TimerUL corresponding to any one or more of the 1^{st} uplink slot to the (n-m-1)^{th} uplink slot expire, timers drx-RetransmissionTimerUL corresponding to the any one or more of the 1^{st} uplink slot to the (n-m-1)^{th} uplink slot are not started, where for example, when m=0, in n=4 continuous uplink slots, only after the drx-HARQ-RTT-TimerUL corresponding to the 4^{th} uplink slot in which the PUSCH is transmitted expires, a drx-RetransmissionTimerUL corresponding to the PUSCH is started; and after timers drx-HARQ-RTT-TimerUL corresponding to any one or more of the 1^{st} uplink slot to the 3^{rd} uplink slot in the four continuous uplink slots expire, timers drx-RetransmissionTimerUL are not started, where m is a non-negative integer less than n.

When the eleventh field is of a second value (for example, 0), the fourth configuration information indicates the following:
After the PUSCH is transmitted in the uplink manner in any one of the n continuous uplink slots, a drx-HARQ-RTT-TimerUL of a HARQ process corresponding to the PUSCH is started; and
after a drx-HARQ-RTT-TimerUL corresponding to any one of the n continuous uplink slots expires, a drx-RetransmissionTimerUL of a HARQ process corresponding to the PUSCH is started.

In this way, the terminal device correspondingly performs an operation based on the indication of the DCI. The network device also performs an operation correspondingly.

For example, when the eleventh field is '1', a specific procedure of starting a drx-HARQ-RTT-TimerUL in a next adjacent slot only after transmission of the last PUSCH (or MAC PDU) ends may be as follows:
(1) Within active time (active time),
   (2) if a PDCCH indicates uplink transmission,
      (3) if drx-retransmissionULenabler is configured,
         (4) if drx-retransmissionULenabler indicates to start a drx-HARQ-RTT-TimerUL for a last PUSCH of the PDCCH,
            (5) if a PUSCH is the last PUSCH indicated by the PDCCH,
               (6) start the drx-HARQ-RTT-TimerUL of a corresponding HARQ process in a next adjacent symbol after transmission of the PUSCH ends;
      (3) otherwise,
         (4) start the drx-HARQ-RTT-TimerUL of a corresponding HARQ process in a next adjacent symbol after transmission of the PUSCH ends.

Optionally, the n continuous uplink slots may be configured based on the fourth configuration information.

In another possible manner, when an indication field in the DCI or the fourth configuration information is a first value (for example, 1 or true), only after PUSCHs are transmitted in any one or more of the (n-m)^{th} uplink slot to the last uplink slot (namely, the n^{th} uplink slot) in the n continuous uplink slots, timers drx-HARQ-RTT-TimerUL corresponding to the any one or more uplink slots are started. After PUSCHs are transmitted in any one or more of the 1^{st} uplink slot to the (n-m-1)^{th} uplink slot, timers drx-HARQ-RTT-TimerUL corresponding to the any one or more uplink slots are not started. For example, when m=0, in n=4 continuous uplink slots, only after the PUSCH is transmitted in the 4^{th} uplink slot, timers drx-HARQ-RTT-TimerUL corresponding to the 1^{st} uplink slot to the 4^{th} uplink slot are started in a next adjacent symbol; and after a PUSCH is transmitted in any one of the 1^{st} uplink slot to the 3^{rd} uplink slot, a drx-HARQ-RTT-TimerUL corresponding to the any slot is not started.

Alternatively, in the n continuous uplink slots, only after timers drx-HARQ-RTT-TimerUL corresponding to one or more of the (n-m)^{th} uplink slot to the last uplink slot (namely, the n^{th} uplink slot) expire, timers drx-RetransmissionTimerUL corresponding to the one or more uplink slots are started. After timers drx-HARQ-RTT-TimerUL corresponding to any one or more of the 1^{st} uplink slot to the (n-m-1)^{th} uplink slot expire, timers drx-RetransmissionTimerUL corresponding to the any one or more uplink slots are not started. For example, when m=0, in n=4 continuous uplink slots, after the PUSCH is transmitted in the 4^{th} uplink slot, and after the drx-HARQ-RTT-TimerUL corresponding to the PUSCH expires, timers drx-RetransmissionTimerUL corresponding to the 1^{st} uplink slot to the 4^{th} uplink slot are started in a next adjacent symbol; and after PUSCHs are transmitted in any one or more of the 1^{st} uplink slot to the 3^{rd} uplink slot, and after timers drx-HARQ-RTT-TimerUL corresponding to the any one or more uplink slots expire, a drx-RetransmissionTimerUL is not started.

### Embodiment 8

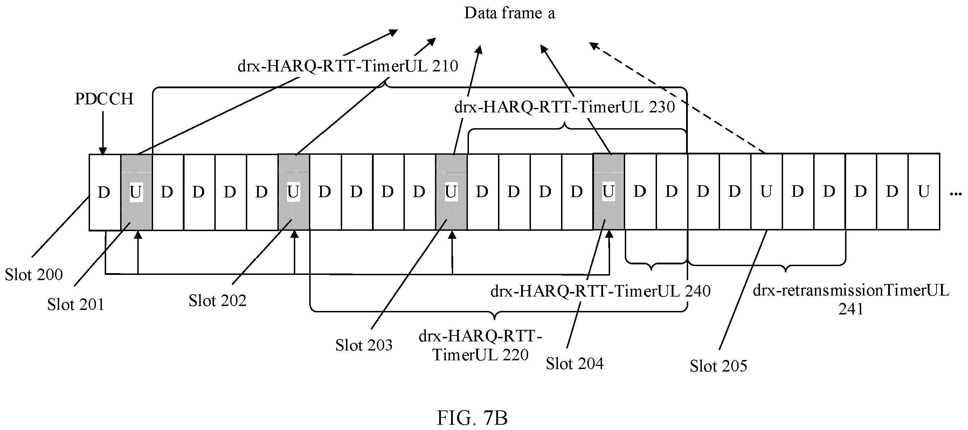

Embodiment 8 relates to FIG. 7B. FIG. 7B is a diagram of Embodiment 8 of an uplink transmission method according to an embodiment of this application.

In Embodiment 8, a terminal device receives a PDCCH, where the PDCCH includes DCI. The PDCCH received by the terminal device may indicate to transmit one or more PUSCHs in subsequent uplink slots (transmission of a plurality of PUSCHs may also be referred to as a multi-PUSCH).

The PDCCH includes the downlink control information DCI, and the DCI indicates transmission of n PUSCHs, where n is a positive integer greater than 1, and the n PUSCHs may be n continuous PUSCHs, or may be n discontinuous PUSCHs. An example in which the n PUSCHs are n continuous PUSCHs is used for description.

The DCI includes time domain resource configurations of the n continuous PUSCHs, for example, n continuous uplink slot positions corresponding to the n continuous PUSCHs. An uplink slot corresponding to a 1^{st} PUSCH in the n continuous PUSCHs is located after a slot in which the PDCCH is received, may be adjacent to a slot in which the PDCCH is received, or may not be adjacent to a slot in which the PDCCH is received.

Specifically, a value of n may be obtained based on fourth configuration information. The terminal device receives the fourth configuration information, for example, a PUSCH-Config information element, sent by the network device, where the fourth configuration information includes an uplink time domain allocation list (pusch-TimeDomainAllocationList). The uplink time domain allocation list includes at least one row index, and each row index indicates a time domain resource of at least one PUSCH, for example, a time domain offset of a PUSCH slot relative to DCI for scheduling the slot. When scheduling the PUSCH based on the DCI, the network device indicates a row index via a time domain resource assignment (Time domain resource assignment, TDRA) field of the DCI, where a value of the row index in the DCI is a row index in the uplink time domain allocation list. In this manner, the DCI may indicate transmission of the at least one PUSCH via the TDRA field. For example, the uplink time domain allocation list of the PUSCH-Config information element in the fourth configuration information includes three rows corresponding to a row index 1 (for example, 1), a row index 2 (for example, 2), and a row index 3 (for example, 3). The row index 1 corresponds to three PUSCHs, the row index 2 corresponds to one PUSCH, and the row index 3 corresponds to four PUSCHs. In this case, when a value of the TDRA field of the DCI corresponds to the row index 1 (for example, the value indicated by the TDRA field plus 1 is equal to the row index 1, for example, the TDRA field indicates "0" that corresponds to the row index "1"), it indicates that the DCI schedules three PUSCHs, and locations of the three PUSCHs relative to the DCI may also be obtained based on the row index 1.

A start moment of a drx-HARQ-RTT-TimerUL corresponding to an i^{th} PUSCH in the n continuous uplink slots is a next adjacent symbol after transmission of the i^{th} PUSCH ends, and an end moment of the drx-HARQ-RTT-TimerUL corresponding to the i^{th} uplink slot is close to an end moment of a drx-HARQ-RTT-TimerUL corresponding to an n^{th} uplink slot, so that start time of a drx-RetransmissionTimerUL corresponding to the i^{th} PUSCH is close to start time of a drx-RetransmissionTimerUL corresponding to the n^{th} PUSCH. This reduces wake-up time of the terminal device. i is a positive integer less than or equal to n. Alternatively, in the n continuous uplink slots, a start time unit of the drx-HARQ-RTT-TimerUL corresponding to the i^{th} PUSCH is a next adjacent time unit of the i^{th} PUSCH, and an end time unit of the drx-HARQ-RTT-TimerUL corresponding to the i^{th} PUSCH is an end time unit of the drx-HARQ-RTT-TimerUL corresponding to the n^{th} PUSCH. The time unit includes a slot or a symbol.

In this embodiment, n timers drx-RetransmissionTimerUL are respectively configured for the n PUSCHs scheduled via the DCI, so that end time of the drx-HARQ-RTT-TimerUL corresponding to the i^{th} PUSCH in the n PUSCHs is close to or the same as end time of a drx-HARQ-RTT-TimerUL corresponding to a j^{th} PUSCH in the n PUSCHs. As shown in FIG. 7B, a PDCCH in a slot 200 is used to schedule n=4 PUSCHs in a slot 201, a slot 202, a slot 203, and a slot 204 respectively. After transmitting the PUSCHs in the slot 201, the slot 202, the slot 203, and the slot 204, the terminal device respectively starts a drx-HARQ-RTT-TimerUL 210, a drx-HARQ-RTT-TimerUL 220, a drx-HARQ-RTT-TimerUL 230, and a drx-HARQ-RTT-TimerUL 240. When duration of the timers drx-HARQ-RTT-TimerUL is properly configured, the timers are finally stopped in a same slot or near a same slot. The timers drx-HARQ-RTT-TimerUL corresponding to the n PUSCHs may be configured based on a twelfth field in fifth configuration information. Optionally, before S201 in FIG. 1B, the network device may further send the fifth configuration information to the terminal device. The network device may send the fifth configuration information to the terminal device via RRC signaling. The fifth configuration information includes PUSCH-TimeDomainResourceAllocationList, and the twelfth field may be drx-HARQ-RTT-TimerUL-r18 in PUSCH-TimeDomainResourceAllocationList.

An example of PUSCH-TimeDomainResourceAllocationList may be as follows:

### PUSCH-TimeDomainResourceAllocation information element

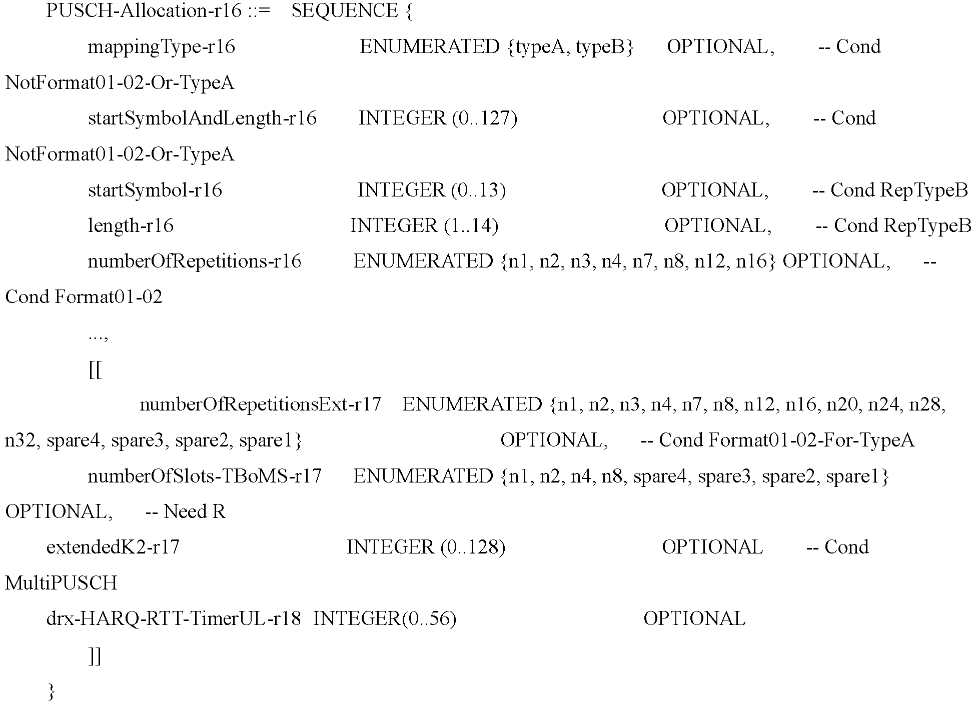

The network device may configure, based on drx-HARQ-RTT-TimerUL-r18 in PUSCH-TimeDomainResourceAllocationList, a drx-HARQ-RTT-TimerUL for each PUSCH scheduled via one piece of DCI (or scheduled via a PDCCH). It should be understood that when DRX is not configured for the terminal device (when third configuration information is not received), the network device does not configure drx-HARQ-RTT-TimerUL-r18 in the fifth configuration information. Alternatively, when DRX is not configured for the terminal device, drx-HARQ-RTT-TimerUL-r18 configured based on the fifth configuration information may be ignored.

In this way, the terminal device learns of duration of the drx-HARQ-RTT-TimerUL corresponding to each PUSCH.

Further, before S201 in FIG. 1B, the network device sends the third configuration information to the terminal device. The network device may send the third configuration information to the terminal device via RRC signaling. The third configuration information includes DRX-config, and DRX-config includes drx-HARQ-RTT-TimerULlist. A plurality of values may be configured for drx-HARQ-RTT-TimerULlist, and each value is in a unit of symbol. For example, drx-HARQ-RTT-TimerULlist={28, 98, 168, 238}.

For example, one piece of DCI is used to schedule four PUSCHs. The DCI respectively indicates duration of corresponding timers drx-HARQ-RTT-TimerUL for the four PUSCHs via drx-HARQ-RTT-TimerULlist. For example, drx-HARQ-RTT-TimerULlist has a total of four values, indicating that a number of bits of each PUSCH is log₂4=2. In other words, one piece of DCI indicates that four PUSCHs need 2 * 4 = 8 bits. PUSCHs indicated by a most significant bit (most significant bit, MSB) to a least significant bit (least significant bit, LSB) in indication bits in the DCI are in ascending order of distance from the DCI. For example, when the DCI indicates that a value of the twelfth field of the drx-HARQ-RTT-TimerUL is '11100100', first 2 bits "11" are 3, indicating a 4^{th} value 238 from left to right in drx-HARQ-RTT-TimerULlist (in drx-HARQ-RTT-TimerULlist, a start sequential number is 0, and therefore the sequential number 3 corresponds to the 4^{th} value from left to right), that is, duration of the drx-HARQ-RTT-TimerUL 210 in FIG. 7B is 238 symbols. The next 2 bits '10' are 2, indicating a 3^{rd} value 168 from left to right in drx-HARQ-RTT-TimerULlist, that is, duration of the drx-HARQ-RTT-TimerUL 220 in FIG. 7B is 168 symbols. Then, the next 2 bits "01" are 1, indicating a 2^{nd} value 98 from left to right in drx-HARQ-RTT-TimerULlist, that is, duration of the drx-HARQ-RTT-TimerUL 230 in FIG. 7B is 98 symbols. Last two bits "00" are 0, indicating a 1^{st} value 28 from left to right in drx-HARQ-RTT-TimerULlist, that is, duration of the drx-HARQ-RTT-TimerUL 240 in FIG. 7B is 28 symbols.

In this way, the terminal device learns of duration of the drx-HARQ-RTT-TimerUL corresponding to each PUSCH.

When the terminal device learns of two of the duration, the start time unit, and the end time unit, the terminal device may learn of the remaining one. Therefore, there may be a plurality of combination manners.

For example, in this embodiment, the DCI further indicates that a start moment of a drx-HARQ-RTT-TimerUL corresponding to the i^{th} uplink slot in the n continuous uplink slots is a next symbol adjacent to the i^{th} uplink slot in which the PUSCH is transmitted, where i is a positive integer less than or equal to n. With reference to that the DCI respectively indicates duration of corresponding timers drx-HARQ-RTT-TimerUL for the four PUSCHs via drx-HARQ-RTT-TimerULlist, the terminal device learns of the start time unit and the duration of the drx-HARQ-RTT-TimerUL corresponding to each PUSCH, so that the terminal device learns of the start time unit, the duration, and the end time unit of the drx-HARQ-RTT-TimerUL corresponding to each PUSCH. The network device also learns of the foregoing content.

For another example, in this embodiment, the DCI further indicates that an end moment of the drx-HARQ-RTT-TimerUL corresponding to the i^{th} uplink slot in the n continuous uplink slots is an end moment of the drx-HARQ-RTT-TimerUL corresponding to the n^{th} uplink slot, where i is a positive integer less than or equal to n. With reference to that the DCI respectively indicates duration of corresponding timers drx-HARQ-RTT-TimerUL for the four PUSCHs via drx-HARQ-RTT-TimerULlist, the terminal device learns of the end time unit and the duration of the drx-HARQ-RTT-TimerUL corresponding to each PUSCH, so that the terminal device learns of the start time unit, the duration, and the end time unit of the drx-HARQ-RTT-TimerUL corresponding to each PUSCH. The network device also learns of the foregoing content.

It should be noted that, in embodiments of this application, the n continuous uplink slots are merely an example, and n discontinuous uplink slots are also applicable to embodiments. For the n discontinuous uplink slots, "n continuous uplink slots" are replaced with "n discontinuous uplink slots" only in the foregoing implementations of the n continuous uplink slots.

According to the technical solutions provided in this application, when the terminal device runs a service such as an XR service or a cloud game service to perform uplink transmission, power consumption of the terminal device is reduced. Further, when running another service, the terminal device may still be compatible with a previous control mechanism.

Unless otherwise specified, all or any part of the foregoing embodiments provided in this application may be freely combined, and a combined technical solution also falls within the scope of this application.

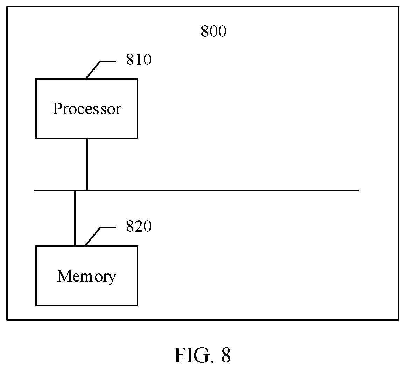

The method provided in embodiments of this application is applicable to the following electronic device. For example, FIG. 8 shows an electronic device 800 according to this application. For example, the electronic device 800 includes at least one processor 810 and a memory 820. The processor 810 is coupled to the memory 820. The coupling in this embodiment of this application may be a communication connection, an electrical connection, or another form. Specifically, the memory 820 is configured to store program instructions. The processor 810 is configured to invoke the program instructions stored in the memory 820, so that the electronic device 800 performs steps performed by the electronic device in the method provided in embodiments of this application. It should be understood that the electronic device 800 may be configured to implement the method provided in embodiments of this application. For related features, refer to the foregoing descriptions. Details are not described herein again. The electronic device 800 may be at least one of the foregoing network device and terminal device.

An embodiment of this application further provides a chip. The chip may include an input interface, an output interface, and a processing circuit. In embodiments of this application, the input interface and the output interface may complete signaling or data interaction, and the processing circuit may complete generation and processing of the signaling or data information.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete component.

An embodiment of this application further provides a processor, configured to be coupled to a memory. The memory stores instructions. When the processor runs the instructions, the processor is enabled to perform the method and function in any one of the foregoing embodiments.

An embodiment of this application further provides a computer program product including instructions. When the computer program product runs on a computer, the computer is enabled to perform the method and function in any one of the foregoing embodiments.

An embodiment of this application further provides a computer-readable storage medium. The computer-readable storage medium stores computer instructions. When a processor runs the instructions, the processor is enabled to perform the method and function in any one of the foregoing embodiments.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects in embodiments of this application are shown and described as block diagrams or flowcharts, or represented by some other illustrations, it should be understood that the blocks, apparatuses, systems, technologies, or methods described in this specification may be implemented as, for example, non-limiting examples: hardware, software, firmware, dedicated circuits or logic, general-purpose hardware, controllers, other computing devices, or a combination thereof.

This application further provides at least one computer program product tangibly stored on a non-transitory computer-readable storage medium. The computer program product includes computer-executable instructions, for example instructions included in a program module, executed in a device on a real or virtual target processor to perform the process/method with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions used for the program module may be executed locally or in a distributed device. In the distributed device, the program module may be locally located and located in a remote storage medium.

Computer program code for implementing the method in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of this application, the computer program code or related data may be included in any proper carrier, so that the device, the apparatus, or the processor can perform various processing and operations described above. For example, the carrier includes a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the method in this application are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that features and functions of two or more apparatuses according to this application may be specific in one apparatus. Instead, features and functions of one apparatus described above may be further specific in a plurality of apparatuses.

In embodiments of this application, as used in the specification and the appended claims of this application, singular expressions "a", "the", "the above", and "this" are also intended to include expressions such as "one or more", unless the context explicitly indicates the opposite. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "have", and their variants all mean "include but are not limited to", unless otherwise specifically emphasized in another manner. The term "connection" includes a direct connection and an indirect connection, unless otherwise specified. "First" and "second" are merely intended for a purpose of description, and shall not be understood as an indication or implication of relative importance or implicit indication of a number of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

The foregoing has described the implementations of this application. The foregoing descriptions are examples, are not exhaustive, and are not limited to the disclosed implementations. A plurality of modifications and variations are apparent to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. An uplink transmission method, applied to a terminal device, wherein connected mode discontinuous reception C-DRX is configured for the terminal device, and the method comprises:
obtaining a grant from a network device, wherein the grant indicates the terminal device to respectively transmit n physical uplink shared channels PUSCHs in n uplink time units; and
after transmitting a first PUSCH in any one or more of a 1^{st} uplink time unit to an (n-m-1)^{th} uplink time unit, skipping starting, by the terminal device, a first hybrid automatic repeat request round trip time uplink timer drx-HARQ-RTT-TimerUL, wherein
the n uplink time units comprise the 1^{st} uplink time unit and the (n-m-1)^{th} uplink time unit, m is a non-negative integer less than n-1, the first drx-HARQ-RTT-TimerUL corresponds to the first PUSCH, an uplink time unit with a higher serial number in the n uplink time units is later, and the n PUSCHs comprise the first PUSCH.

2. The method according to claim 1, wherein
the first drx-HARQ-RTT-TimerUL is a drx-HARQ-RTT-TimerUL of a hybrid automatic repeat request HARQ process corresponding to the first PUSCH.

3. The method according to claim 1 or 2, wherein the method comprises:
transmitting, by the terminal device, a second PUSCH in an i^{th} uplink time unit in an (n-m)^{th} uplink time unit to an n^{th} uplink time unit, and starting a second drx-HARQ-RTT-TimerUL in a next adjacent symbol of the second PUSCH, wherein
the n uplink time units comprise the (n-m)^{th} uplink time unit and the n^{th} uplink time unit, the second PUSCH corresponds to the second drx-HARQ-RTT-TimerUL, i is any positive integer greater than or equal to n-m and less than or equal to n, and the n PUSCHs comprise the second PUSCH.

4. The method according to claim 3, wherein the method comprises:
transmitting, by the terminal device, a third PUSCH in a j^{th} uplink time unit in the (n-m)^{th} uplink time unit to the n^{th} uplink time unit, and starting a third drx-HARQ-RTT-TimerUL in a next adjacent symbol of the third PUSCH, wherein
the third PUSCH corresponds to the third drx-HARQ-RTT-TimerUL, j is any positive integer greater than or equal to n-m, less than or equal to n, and not equal to i, and the n PUSCHs comprise the third PUSCH.

5. The method according to claim 3 or 4, wherein the method comprises:
after transmitting the second PUSCH in the i^{th} uplink time unit and after the second drx-HARQ-RTT-TimerUL expires, starting, by the terminal device, a second uplink retransmission timer drx-RetransmissionTimerUL corresponding to the second PUSCH.

6. The method according to any one of claims 1 to 5, wherein the n uplink time units are n continuous uplink time units in a same configured uplink grant CG periodicity, and the uplink time unit comprises an uplink slot or an uplink symbol; and
the obtaining a grant from a network device comprises:
receiving first configuration information from the network device, wherein the first configuration information is used to configure a configured grant, the configured grant indicates a CG periodicity, the CG periodicity is a time interval between 1^{st} PUSCHs in two adjacent groups of PUSCHs granted by the network device to the terminal device, and
the configured grant further indicates a number n of continuous uplink time units comprised in the CG periodicity, and n is a number of uplink time units in each group; and
obtaining the grant from the network device based on the first configuration information.

7. The method according to claim 6, wherein the first configuration information further comprises a first field; and the method comprises:
when the first field is of a first value, after transmitting the first PUSCH in any one or more of the 1^{st} uplink time unit to the (n-m-1)^{th} uplink time unit, skipping starting, by the terminal device, the first drx-HARQ-RTT-TimerUL; or
when the first field is of a second value, after transmitting the first PUSCH in any one or more of the 1^{st} uplink time unit to the n^{th} uplink time unit, starting, by the terminal device, the first drx-HARQ-RTT-TimerUL in the next adjacent symbol of the first PUSCH.

8. The method according to claim 7, wherein the method comprises:
when the first field is of the first value, transmitting, by the terminal device, the second PUSCH in the i^{th} uplink time unit in the (n-m)^{th} uplink time unit to the n^{th} uplink time unit, and starting the second drx-HARQ-RTT-TimerUL in the next adjacent symbol of the second PUSCH.

9. The method according to any one of claims 6 to 8, wherein the first configuration information further indicates first duration and a first start moment, the first duration is duration of a silence timer drx-silenceTimerUL, the first start moment indicates a start moment of the drx-silenceTimerUL, the first start moment is a start moment at which a PUSCH is transmitted in the 1^{st} uplink time unit in the n uplink time units in each CG periodicity, and an end moment of the drx-silenceTimerUL is earlier than a start moment at which a PUSCH is transmitted in the (n-m-1)^{th} uplink time unit.

10. The method according to any one of claims 6 to 9, wherein
the obtaining a grant from a network device comprises:
obtaining the n uplink time units from the first configuration information;
sending third control information to the network device in any one of first k uplink time units in the n uplink time units, wherein the third control information indicates to update a value of n to k, and k is a positive integer less than n;
obtaining k uplink time units; and
obtaining the grant from the network device based on the first configuration information.

11. The method according to any one of claims 1 to 5, wherein
the obtaining a grant from a network device comprises:
receiving second control information from the network device, wherein the second control information indicates that the n PUSCHs are respectively transmitted in the n uplink time units; and
obtaining the grant from the network device based on the second control information; and
the method comprises:
before receiving the second control information from the network device, receiving, by the terminal device, fourth configuration information from the network device, wherein the fourth configuration information comprises an uplink time domain resource allocation table, the uplink time domain resource allocation table comprises at least one row index, and each of the at least one row index corresponds to at least one uplink time unit; and
the second control information comprises a first row index, the first row index corresponds to a second row index, the second row index is at least one row index in the uplink time domain resource allocation table, n is a number of uplink time units corresponding to the second row index, and a value of the second row index is a value of the first row index plus 1.

12. The method according to claim 11, wherein the second control information comprises a tenth field; and the method comprises:
when the tenth field is of a first value, after transmitting the first PUSCH in any one or more of the 1^{st} uplink time unit to the (n-m-1)^{th} uplink time unit, skipping starting, by the terminal device, the first drx-HARQ-RTT-TimerUL; or
when the tenth field is of a second value, after transmitting the first PUSCH in any one or more of the 1^{st} uplink time unit to the n^{th} uplink time unit, starting, by the terminal device, the first drx-HARQ-RTT-TimerUL in the next adjacent symbol of the first PUSCH.

13. The method according to claim 12, wherein the method comprises:
when the tenth field is of the first value, after transmitting the second PUSCH in the i^{th} uplink time unit in the (n-m)^{th} uplink time unit to the n^{th} uplink time unit, starting, by the terminal device, the second drx-HARQ-RTT-TimerUL in the next adjacent symbol of the second PUSCH, wherein i is any positive integer greater than or equal to n-m and less than or equal to n.

14. The method according to claim 11, wherein the fourth configuration information comprises an eleventh field; and the method comprises:
when the eleventh field is of a first value, after transmitting the first PUSCH in any one or more of the 1^{st} uplink time unit to the (n-m-1)^{th} uplink time unit, skipping starting, by the terminal device, the first drx-HARQ-RTT-TimerUL; or
when the eleventh field is of a second value, after transmitting the first PUSCH in any one or more of the 1^{st} uplink time unit to the n^{th} uplink time unit, starting, by the terminal device, the first drx-HARQ-RTT-TimerUL in the next adjacent symbol of the first PUSCH.

15. The method according to claim 14, wherein the method comprises:
when the eleventh field is of the first value, transmitting the second PUSCH in the i^{th} uplink time unit in the (n-m)^{th} uplink time unit to the n^{th} uplink time unit, and starting the second drx-HARQ-RTT-TimerUL in the next adjacent symbol of the second PUSCH, wherein i is any positive integer greater than or equal to n-m and less than or equal to n.

16. The method according to any one of claims 1 to 13, wherein m=0.

17. An uplink transmission method, applied to a terminal device, wherein connected mode discontinuous reception C-DRX is configured for the terminal device, and the method comprises:
obtaining a grant from a network device, wherein the grant indicates the terminal device to respectively transmit n physical uplink shared channels PUSCHs in n uplink time units; and
after transmitting a first PUSCH in any one or more of a 1^{st} uplink time unit to an (n-m-1)^{th} uplink time unit and after a first hybrid automatic repeat request round trip time uplink timer drx-HARQ-RTT-TimerUL corresponding to the first PUSCH expires, skipping starting, by the terminal device, a first uplink retransmission timer drx-RetransmissionTimerUL corresponding to the first PUSCH, wherein
the n uplink time units comprise the 1^{st} uplink time unit and the (n-m-1)^{th} uplink time unit, m is a non-negative integer less than n-1, an uplink time unit with a higher serial number in the n uplink time units is later, and the n PUSCHs comprise the first PUSCH.

18. The method according to claim 17, wherein after the transmitting a first PUSCH in any one or more of a 1^{st} uplink time unit to an (n-m-1)^{th} uplink time unit and after a first hybrid automatic repeat request round trip time uplink timer drx-HARQ-RTT-TimerUL corresponding to the first PUSCH expires, the method comprises:
after transmitting the first PUSCH in any one or more of the 1^{st} uplink time unit to the (n-m-1)^{th} uplink time unit and after the first drx-HARQ-RTT-TimerUL corresponding to the first PUSCH expires, starting the first drx-HARQ-RTT-TimerUL corresponding to the first PUSCH in a next adjacent symbol.

19. The method according to claim 17 or 18, wherein
the first drx-HARQ-RTT-TimerUL is a drx-HARQ-RTT-TimerUL of a hybrid automatic repeat request HARQ process corresponding to the first PUSCH; and
the first drx-RetransmissionTimerUL is a drx-RetransmissionTimerUL of the HARQ process corresponding to the first PUSCH.

20. The method according to any one of claims 17 to 19, wherein the method comprises:
after transmitting a second PUSCH in an i^{th} uplink time unit in an (n-m)^{th} uplink time unit to an n^{th} uplink time unit and after a second drx-HARQ-RTT-TimerUL corresponding to the second PUSCH expires, starting, by the terminal device, a second drx-RetransmissionTimerUL corresponding to the second PUSCH in a next adjacent symbol, wherein
the n uplink time units comprise the (n-m)^{th} uplink time unit and the n^{th} uplink time unit, i is any positive integer greater than or equal to n-m and less than or equal to n, and the n PUSCHs comprise the second PUSCH.

21. The method according to claim 20, wherein the method comprises:
after transmitting a third PUSCH in a j^{th} uplink time unit in the (n-m)^{th} uplink time unit to the n^{th} uplink time unit and after a third drx-HARQ-RTT-TimerUL corresponding to the third PUSCH expires, starting, by the terminal device, a third drx-RetransmissionTimerUL corresponding to the third PUSCH in a next adjacent symbol, wherein
j is any positive integer greater than or equal to n-m, less than or equal to n, and not equal to i, and the n PUSCHs comprise the third PUSCH.

22. The method according to any one of claims 17 to 21, wherein the n uplink time units are n continuous uplink time units, and the uplink time unit comprises an uplink slot or an uplink symbol; and
the obtaining a grant from a network device comprises:
receiving first configuration information from the network device, wherein the first configuration information is used to configure a configured grant, the configured grant indicates a CG periodicity, the CG periodicity is a time interval between 1^{st} PUSCHs in two adjacent groups of PUSCHs granted by the network device to the terminal device, and
the configured grant further indicates a number n of continuous uplink time units comprised in the CG periodicity, and n is a number of uplink time units in each group; and
obtaining the grant from the network device based on the first configuration information.

23. The method according to claim 22, wherein the first configuration information further comprises a first field; and the method comprises:
when the first field is of a first value, after transmitting the first PUSCH in any one or more of the 1^{st} uplink time unit to the (n-m-1)^{th} uplink time unit and after the first drx-HARQ-RTT-TimerUL corresponding to the first PUSCH expires, skipping starting, by the terminal device, the first uplink retransmission timer drx-RetransmissionTimerUL corresponding to the first PUSCH; or
when the first field is of a second value, after transmitting the first PUSCH in any one or more of the 1^{st} uplink time unit to the n^{th} uplink time unit and after the first drx-HARQ-RTT-TimerUL corresponding to the first PUSCH expires, starting, by the terminal device, the first uplink retransmission timer drx-RetransmissionTimerUL corresponding to the first PUSCH in the next adjacent symbol.

24. The method according to claim 22 or 23, wherein the first configuration information further indicates first duration and a first start moment, the first duration is duration of a silence timer drx-silenceTimerUL, the first start moment indicates a start moment of the drx-silenceTimerUL, the first start moment is a start moment at which a PUSCH is transmitted in the 1^{st} uplink time unit in the n uplink time units in each CG periodicity, and an end moment of the drx-silenceTimerUL is earlier than a start moment at which a PUSCH is transmitted in the (n-m-1)^{th} uplink time unit.

25. The method according to any one of claims 22 to 24, wherein
the obtaining a grant from a network device comprises:
obtaining the n uplink time units from the first configuration information;
sending third control information to the network device in any one of first k uplink time units in the n uplink time units, wherein the third control information indicates to update a value of n to k, and k is a positive integer less than n;
obtaining k uplink time units; and
obtaining the grant from the network device based on the first configuration information.

26. The method according to any one of claims 17 to 21, wherein
the obtaining a grant from a network device comprises:
receiving second control information from the network device, wherein the second control information indicates that the n PUSCHs are respectively transmitted in the n uplink time units; and
obtaining the grant from the network device based on the second control information; and
the method comprises:
before receiving the second control information from the network device, receiving, by the terminal device, fourth configuration information from the network device, wherein the fourth configuration information comprises an uplink time domain resource allocation table, the uplink time domain resource allocation table comprises at least one row index, and each of the at least one row index corresponds to at least one uplink time unit; and
the second control information comprises a first row index, the first row index corresponds to a second row index, the second row index is at least one row index in the uplink time domain resource allocation table, n is a number of uplink time units corresponding to the second row index, and a value of the second row index is a value of the first row index plus 1.

27. The method according to claim 26, wherein the second control information comprises a tenth field; and the method comprises:
when the tenth field is of a first value, after transmitting the first PUSCH in any one or more of the 1^{st} uplink time unit to the (n-m-1)^{th} uplink time unit and after the first drx-HARQ-RTT-TimerUL corresponding to the first PUSCH expires, skipping starting, by the terminal device, the first uplink retransmission timer drx-RetransmissionTimerUL corresponding to the first PUSCH; or
when the tenth field is of a second value, after transmitting the first PUSCH in any one or more of the 1^{st} uplink time unit to the n^{th} uplink time unit and after the first drx-HARQ-RTT-TimerUL corresponding to the first PUSCH expires, starting, by the terminal device, the first uplink retransmission timer drx-RetransmissionTimerUL corresponding to the first PUSCH in the next adjacent symbol.

28. The method according to claim 26, wherein the fourth configuration information comprises an eleventh field; and the method comprises:
when the eleventh field is of a first value, after transmitting the first PUSCH in any one or more of the 1^{st} uplink time unit to the (n-m-1)^{th} uplink time unit and after the first drx-HARQ-RTT-TimerUL corresponding to the first PUSCH expires, skipping starting, by the terminal device, the first uplink retransmission timer drx-RetransmissionTimerUL corresponding to the first PUSCH; or
when the eleventh field is of a second value, after transmitting the first PUSCH in any one or more of the 1^{st} uplink time unit to the n^{th} uplink time unit and after the first drx-HARQ-RTT-TimerUL corresponding to the first PUSCH expires, starting, by the terminal device, the first uplink retransmission timer drx-RetransmissionTimerUL corresponding to the first PUSCH in the next adjacent symbol.

29. The method according to any one of claims 17 to 28, wherein m=0.

30. An uplink transmission method, applied to a network device, wherein connected mode discontinuous reception C-DRX is configured for the network device, and the method comprises:
granting a terminal device to respectively transmit n physical uplink shared channels PUSCHs in n uplink time units; and
after receiving a first PUSCH in any one or more of a 1^{st} uplink time unit to an (n-m-1)^{th} uplink time unit, skipping starting, by the network device, a first hybrid automatic repeat request round trip time uplink timer drx-HARQ-RTT-TimerUL, wherein
the n uplink time units comprise the 1^{st} uplink time unit and the (n-m-1)^{th} uplink time unit, m is a non-negative integer less than n-1, the first drx-HARQ-RTT-TimerUL corresponds to the first PUSCH, an uplink time unit with a higher serial number in the n uplink time units is later, and the n PUSCHs comprise the first PUSCH.

31. The method according to claim 30, wherein the method comprises
receiving a second PUSCH in an i^{th} uplink time unit in an (n-m)^{th} uplink time unit to an n^{th} uplink time unit, and starting a second drx-HARQ-RTT-TimerUL in a next adjacent symbol of the second PUSCH, wherein
the n uplink time units comprise the (n-m)^{th} uplink time unit and the n^{th} uplink time unit, the second PUSCH corresponds to the second drx-HARQ-RTT-TimerUL, i is any positive integer greater than or equal to n-m and less than or equal to n, and the n PUSCHs comprise the second PUSCH.

32. The method according to claim 31, wherein the method comprises:
receiving a third PUSCH in a j^{th} uplink time unit in the (n-m)^{th} uplink time unit to the n^{th} uplink time unit, and starting a third drx-HARQ-RTT-TimerUL in a next adjacent symbol of the third PUSCH, wherein
the third PUSCH corresponds to the third drx-HARQ-RTT-TimerUL, j is any positive integer greater than or equal to n-m, less than or equal to n, and not equal to i, and the n PUSCHs comprise the third PUSCH.

33. The method according to any one of claims 30 to 32, wherein the n uplink time units are n continuous uplink time units, and the uplink time unit comprises an uplink slot or an uplink symbol; and
the granting a terminal device to respectively transmit n PUSCHs in n uplink time units comprises:
sending first configuration information to the terminal device, wherein the first configuration information is used to configure a configured grant, the configured grant indicates a CG periodicity, the CG periodicity is a time interval between 1^{st} PUSCHs in two adjacent groups of PUSCHs granted by the network device to the terminal device;
the configured grant further indicates a number n of continuous uplink time units comprised in the CG periodicity, and n is a number of uplink time units in each group; and
the first configuration information is further used to grant the terminal device to respectively transmit the n PUSCHs in the n uplink time units.

34. The method according to claim 33, wherein the first configuration information further comprises a first field; and the method comprises:
when the first field is of a first value, after receiving the first PUSCH in any one or more of the 1^{st} uplink time unit to the (n-m-1)^{th} uplink time unit, skipping starting, by the network device, the first drx-HARQ-RTT-TimerUL; or
when the first field is of a second value, after receiving the first PUSCH in any one or more of the 1^{st} uplink time unit to the n^{th} uplink time unit, starting, by the network device, the first drx-HARQ-RTT-TimerUL in the next adjacent symbol of the first PUSCH.

35. The method according to claim 34, wherein the method comprises:
when the first field is of the first value, receiving, by the network device, the second PUSCH in the i^{th} uplink time unit in the (n-m)^{th} uplink time unit to the n^{th} uplink time unit, and starting the second drx-HARQ-RTT-TimerUL in the next adjacent symbol of the second PUSCH.

36. The method according to any one of claims 33 to 35, wherein the first configuration information further indicates first duration and a first start moment, the first duration is duration of a silence timer drx-silenceTimerUL, the first start moment indicates a start moment of the drx-silenceTimerUL, the first start moment is a start moment at which a PUSCH is transmitted in the 1^{st} uplink time unit in the n uplink time units in each CG periodicity, and an end moment of the drx-silenceTimerUL is earlier than a start moment at which a PUSCH is transmitted in the (n-m-1)^{th} uplink time unit.

37. The method according to any one of claims 30 to 32, wherein
the granting a terminal device to respectively transmit n physical uplink shared channels PUSCHs in n uplink time units comprises:
sending first configuration information to the terminal device, wherein the first configuration information comprises the n uplink time units;
receiving third control information from the terminal device, wherein the third control information indicates to update a value of n to k, and k is a positive integer less than n; and
updating the value of n to k.

38. The method according to any one of claims 30 to 32, wherein
the granting a terminal device to respectively transmit n PUSCHs in n uplink time units comprises:
sending second control information to the terminal device, wherein the second control information indicates the terminal device to respectively transmit the n PUSCHs in the n uplink time units, and
the second control information is further used to grant the terminal device to respectively transmit the n PUSCHs in the n uplink time units; and
the method comprises:
before sending the second control information to the terminal device, sending, by the network device, fourth configuration information to the terminal device, wherein the fourth configuration information comprises an uplink time domain resource allocation table, the uplink time domain resource allocation table comprises at least one row index, and each of the at least one row index corresponds to at least one uplink time unit; and
the second control information comprises a first row index, the first row index corresponds to a second row index, the second row index is at least one row index in the uplink time domain resource allocation table, n is a number of uplink time units corresponding to the second row index, and a value of the second row index is a value of the first row index plus 1.

39. The method according to claim 38, wherein the second control information comprises a tenth field; and the method comprises:
when the tenth field is of a first value, after receiving the first PUSCH in any one or more of the 1^{st} uplink time unit to the (n-m-1)^{th} uplink time unit, skipping starting, by the network device, the first drx-HARQ-RTT-TimerUL; or
when the tenth field is of a second value, after receiving the first PUSCH in any one or more of the 1^{st} uplink time unit to the n^{th} uplink time unit, starting, by the network device, the first drx-HARQ-RTT-TimerUL in the next adjacent symbol of the first PUSCH.

40. The method according to claim 32, wherein the fourth configuration information comprises an eleventh field; and the method comprises:
when the eleventh field is of a first value, after receiving the first PUSCH in any one or more of the 1^{st} uplink time unit to the (n-m-1)^{th} uplink time unit, skipping starting, by the network device, the first drx-HARQ-RTT-TimerUL; or
when the eleventh field is of a second value, after receiving the first PUSCH in any one or more of the 1^{st} uplink time unit to the n^{th} uplink time unit, starting, by the network device, the first drx-HARQ-RTT-TimerUL in the next adjacent symbol of the first PUSCH.

41. An uplink transmission method, applied to a network device, wherein connected mode discontinuous reception C-DRX is configured for the network device, and the method comprises:
granting a terminal device to respectively transmit n physical uplink shared channels PUSCHs in n uplink time units; and
after receiving a first PUSCH in any one or more of a 1^{st} uplink time unit to an (n-m-1)^{th} uplink time unit and after a first hybrid automatic repeat request round trip time uplink timer drx-HARQ-RTT-TimerUL corresponding to the first PUSCH expires, skipping starting, by the network device, a first uplink retransmission timer drx-RetransmissionTimerUL corresponding to the first PUSCH, wherein
the n uplink time units comprise the 1^{st} uplink time unit and the (n-m-1)^{th} uplink time unit, m is a non-negative integer less than n-1, an uplink time unit with a higher serial number in the n uplink time units is later, and the n PUSCHs comprise the first PUSCH.

42. The method according to claim 41, wherein the method comprises:
the first drx-HARQ-RTT-TimerUL is a drx-HARQ-RTT-TimerUL of a hybrid automatic repeat request HARQ process corresponding to the first PUSCH; and
the first drx-RetransmissionTimerUL is a drx-RetransmissionTimerUL of the HARQ process corresponding to the first PUSCH.

43. The method according to claim 41 or 42, wherein the method comprises:
after receiving a second PUSCH in an i^{th} uplink time unit in an (n-m)^{th} uplink time unit to an n^{th} uplink time unit and after a second drx-HARQ-RTT-TimerUL corresponding to the second PUSCH expires, starting, by the network device, a second drx-RetransmissionTimerUL corresponding to the second PUSCH in a next adjacent symbol, wherein
the n uplink time units comprise the (n-m)^{th} uplink time unit and the n^{th} uplink time unit, i is any positive integer greater than or equal to n-m and less than or equal to n, and the n PUSCHs comprise the second PUSCH.

44. The method according to claim 43, wherein the method comprises:
after receiving a third PUSCH in a j^{th} uplink time unit in the (n-m)^{th} uplink time unit to the n^{th} uplink time unit and after a third drx-HARQ-RTT-TimerUL corresponding to the third PUSCH expires, starting, by the network device, a third drx-RetransmissionTimerUL corresponding to the third PUSCH in a next adjacent symbol, wherein
j is any positive integer greater than or equal to n-m, less than or equal to n, and not equal to i, and the n PUSCHs comprise the third PUSCH.

45. The method according to any one of claims 41 to 44, wherein the n uplink time units are n continuous uplink time units, and the uplink time unit comprises an uplink slot or an uplink symbol; and
the granting a terminal device to respectively transmit n PUSCHs in n uplink time units comprises:
sending first configuration information to the terminal device, wherein the first configuration information is used to configure a configured grant, the configured grant indicates a CG periodicity, the CG periodicity is a time interval between 1^{st} PUSCHs in two adjacent groups of PUSCHs granted by the network device to the terminal device;
the configured grant further indicates a number n of continuous uplink time units comprised in the CG periodicity, and n is a number of uplink time units in each group; and
the first configuration information is further used to grant the terminal device to respectively transmit the n PUSCHs in the n uplink time units.

46. The method according to claim 45, wherein the first configuration information further comprises a first field; and the method comprises:
when the first field is of a first value, after receiving the first PUSCH in any one or more of the 1^{st} uplink time unit to the (n-m-1)^{th} uplink time unit and after the first drx-HARQ-RTT-TimerUL corresponding to the first PUSCH expires, skipping starting, by the network device, the first uplink retransmission timer drx-RetransmissionTimerUL corresponding to the first PUSCH; or
when the first field is of a second value, after receiving the first PUSCH in any one or more of the 1^{st} uplink time unit to the n^{th} uplink time unit and after the first drx-HARQ-RTT-TimerUL corresponding to the first PUSCH expires, starting, by the network device, the first uplink retransmission timer drx-RetransmissionTimerUL corresponding to the first PUSCH in the next adjacent symbol.

47. The method according to claim 45 or 46, wherein the first configuration information further indicates first duration and a first start moment, the first duration is duration of a silence timer drx-silenceTimerUL, the first start moment indicates a start moment of the drx-silenceTimerUL, the first start moment is a start moment at which a PUSCH is transmitted in the 1^{st} uplink time unit in the n uplink time units in each CG periodicity, and an end moment of the drx-silenceTimerUL is earlier than a start moment at which a PUSCH is transmitted in the (n-m-1)^{th} uplink time unit.

48. The method according to any one of claims 41 to 47, wherein
the granting a terminal device to respectively transmit n physical uplink shared channels PUSCHs in n uplink time units comprises:
sending first configuration information to the terminal device, wherein the first configuration information comprises the n uplink time units;
receiving third control information from the terminal device, wherein the third control information indicates to update a value of n to k, and k is a positive integer less than n; and
updating the value of n to k.

49. The method according to any one of claims 41 to 47, wherein
the granting a terminal device to respectively transmit n PUSCHs in n uplink time units comprises:
sending second control information to the terminal device, wherein the second control information indicates the terminal device to respectively transmit the n PUSCHs in the n uplink time units, and
the second control information is further used to grant the terminal device to respectively transmit the n PUSCHs in the n uplink time units; and
the method comprises:
before sending the second control information to the terminal device, sending, by the network device, fourth configuration information to the terminal device, wherein the fourth configuration information comprises an uplink time domain resource allocation table, the uplink time domain resource allocation table comprises at least one row index, and each of the at least one row index corresponds to at least one uplink time unit; and
the second control information comprises a first row index, the first row index corresponds to a second row index, the second row index is at least one row index in the uplink time domain resource allocation table, n is a number of uplink time units corresponding to the second row index, and a value of the second row index is a value of the first row index plus 1.

50. The method according to claim 49, wherein the second control information comprises a tenth field; and the method comprises:
when the tenth field is of a first value, after receiving the first PUSCH in any one or more of the 1^{st} uplink time unit to the (n-m-1)^{th} uplink time unit and after the first drx-HARQ-RTT-TimerUL corresponding to the first PUSCH expires, skipping starting, by the network device, the first uplink retransmission timer drx-RetransmissionTimerUL corresponding to the first PUSCH; or
when the tenth field is of a second value, after receiving the first PUSCH in any one or more of the 1^{st} uplink time unit to the n^{th} uplink time unit and after the first drx-HARQ-RTT-TimerUL corresponding to the first PUSCH expires, starting, by the network device, the first uplink retransmission timer drx-RetransmissionTimerUL corresponding to the first PUSCH in the next adjacent symbol.

51. The method according to claim 49, wherein the method comprises:
the fourth configuration information comprises an eleventh field; and
when the eleventh field is of a first value, after receiving the first PUSCH in any one or more of the 1^{st} uplink time unit to the (n-m-1)^{th} uplink time unit and after the first drx-HARQ-RTT-TimerUL corresponding to the first PUSCH expires, skipping starting, by the network device, the first uplink retransmission timer drx-RetransmissionTimerUL corresponding to the first PUSCH; or
when the eleventh field is of a second value, after receiving the first PUSCH in any one or more of the 1^{st} uplink time unit to the n^{th} uplink time unit and after the first drx-HARQ-RTT-TimerUL corresponding to the first PUSCH expires, starting, by the network device, the first uplink retransmission timer drx-RetransmissionTimerUL corresponding to the first PUSCH in the next adjacent symbol.

52. A terminal device, wherein the terminal device comprises a processor and a memory, the memory stores a computer program, and when the computer program is run by the processor, the terminal device is enabled to perform the method according to any one of claims 1 to 29.

53. A network device, wherein the network device comprises a processor and a memory, the memory stores a computer program, and when the computer program is run by the processor, the network device is enabled to perform the method according to any one of claims 30 to 51.

54. A computer-readable storage medium, storing a computer program, wherein when the computer program runs on a terminal device, the terminal device is enabled to perform the method according to any one of claims 1 to 29.

55. A computer-readable storage medium, storing a computer program, wherein when the computer program runs on a network device, the network device is enabled to perform the method according to any one of claims 30 to 51.

56. A computer program product, stored in a computer-readable storage medium, wherein when the computer program product runs on a terminal device, the terminal device is enabled to perform the method according to any one of claims 1 to 29.

57. A computer program product, stored in a computer-readable storage medium, wherein when the computer program product runs on a network device, the network device is enabled to perform the method according to any one of claims 30 to 51.

58. A chip, comprising a processor and a memory coupled to the processor, wherein the memory stores a computer program, the chip is located in a terminal device, and when the processor executes the computer program, the terminal device is enabled to perform the method according to any one of claims 1 to 29.

59. A chip, comprising a processor and a memory coupled to the processor, wherein the memory stores a computer program, the chip is located in a network device, and when the processor executes the computer program, the network device is enabled to perform the method according to any one of claims 30 to 51.

60. A communication system, wherein the communication system comprises a terminal device and a network device, the terminal device is configured to perform the method according to any one of claims 1 to 29, and the network device is configured to perform the method according to any one of claims 30 to 51.
